Europäisches Patentamt

European Patent Office

Office européen des brevets

(11) Veröffentlichungsnummer: **0 091 972**
**A1**

## (12) EUROPÄISCHE PATENTANMELDUNG

(21) Anmeldenummer: **82103185.3**

(22) Anmeldetag: **15.04.82**

(51) Int. Cl.³: **A 01 K 1/06,** A 01 K 1/12,
A 01 K 1/10

(43) Veröffentlichungstag der Anmeldung: **26.10.83**
**Patentblatt 83/43**

(84) Benannte Vertragsstaaten: **AT BE CH DE FR GB IT LI NL
SE**

(71) Anmelder: **Hacker, Josef, Schulstrasse 7,
D-8254 Mittbach (DE)**

(72) Erfinder: **Hacker, Josef, Schulstrasse 7, D-8254 Mittbach
(DE)**

(74) Vertreter: **Wächtershäuser, Günter, Dr., Tal 29,
D-8000 München 2 (DE)**

(54) **Einsperrgitter für Rinder.**

(57) Einsperrgitter für einen Fischgrätenmelk- und -fütterungsstand für Kühe mit mehreren schräg zur Richtung der Aufeinanderfolge der Standplätze angeordneten Einsperröffnungen, welche selektiv in
(A) einen verriegelten Sperrzustand bringbar sind, in dem sie den Zugang zu einem zugeordneten Futtertrog versperren oder
(B) einen Öffnungszustand, in dem der zugeordnete Futtertrog zugänglich ist oder
(C) einen verriegelten Fangzustand, in dem die seitlichen Begrenzungen den Kopf des eingesperrten Tieres hintergreifen
und mit einer Steuereinrichtung, welche auf mindestens einem Teil der Einsperröffnungen zugeordnete tierbetätigbare Sensoren anspricht und auf die Einsperröffnungen einwirkt, gekennzeichnet durch eine elektrische Steuereinrichtung (200), welche on den Sensoren elektrische Signale empfängt und Betätigungsorganen und/oder Verriegelungsorganen der Einsperröffnungen in einer voreinstellbaren zeitlichen Reihenfolge Steuersignale zuweist für die Umschaltung vom verriegelten Sperrzustand (A) in den Öffnungszustand (B), vom Öffnungszustand (B) in den verriegelten Fangzustand (C), vom verriegelten Fangzustand (C) in den Öffnungszustand (B) und vom Öffnungszustand (B) in den verriegelten Sperrzustand.

JOSEF HACKER, Mittbach

---

## Einsperrgitter für Rinder

---

Die Erfindung betrifft ein Einsperrgitter für Rinder gemäß dem Oberbegriff des Hauptanspruchs.

Es ist Aufgabe der Erfindung, ein Einsperrgitter für einen Fischgrätenmelk- und -Fütterungsstand gemäß dem Oberbegriff des Hauptanspruchs derart weiterzubilden, daß die Steuerung auf einfache Weise unterschiedlichen Betriebsweisen des Melk- und -Fütterungsstandes und/oder Erweiterungen desselben angepaßt werden kann.

Diese Aufgabe wird durch den kennzeichnenden Teil des Hauptanspruchs gelöst sowie durch die bevorzugten Weiterbildungen gemäß den Unteransprüchen.

Im folgenden wird die Erfindung anhand von Zeichnungen näher erläutert; es zeigen

Fig. 1 die Grundform der erfindungsgemäßen Einsperröffnung in Seitenansicht;

Fig. 2 eine Teildraufsicht einer abgewandelten Ausführungsform des erfindungsgemäßen Einsperrgitters mit
Schrägversetzung;

Fig. 3 eine selbstverriegelnde, durch den Fangorganantrieb entriegelbare Verriegelungseinrichtung;

Fig. 4a bis 4v abgewandelte Einsperröffnungen mit
abgewandelten Bewegungsprinzipien für das Fangorgan;

Fig. 5 bis 11 Blockdiagramme verschiedener erfindungsgemäßer Steuersysteme;

Fig. 12 ein Relaisdiagramm einer Steuereinrichtung für
das erfindungsgemäße Einsperrgitter;

Fig. 13 ein Blockschaltbild einer elektronischen Zentralsteuereinrichtung für das erfindungsgemäße Einsperrgitter;

Fig. 14 eine Computersteuerungseinrichtung für das erfindungsgemäße Einsperrgitter;

Fig. 15 eine Blockdarstellung eines Einzelsteuermoduls
für die Steuerung von Einzelantrieben des erfindungsgemäßen
Einsperrgitters;

Fig. 16 eine Prinzipdarstellung eines Steuersystems
für gemeinsamen Antrieb des erfindungsgemäßen Einsperrgitters;

Fig. 17 eine perspektivische Darstellung einer mechanischen Ausführungsform der Steuerung des erfindungsgemäßen Einsperrgitters;

Fig. 18 einen Schnitt entlang der Linie a-a der Figur 17;

Fig. 19 und 20 Detailansichten einer weiteren mechanischen Ausführungsform der Steuerung des erfindungsgemäßen Einsperrgitters;

Fig. 21 bis 23 Detailansichten einer weiteren Ausführungsform zur mechanischen Steuerung des erfindungsgemäßen Einsperrgitters, wobei Figur 22 einen Schnitt entlang der Linie
b-b der Figur 21 zeigt;

Fig. 24a bis 24d schematische Darstellungen zur Erläuterung der Arbeitsweise einer pneumatischen Steuereinrichtung
für das erfindungsgemäße Einsperrgitter und

Fig. 25 ein Blockschaltbild einer Kraftfuttersteuereinrichtung für das erfindungsgemäße Einsperrgitter.

0091972

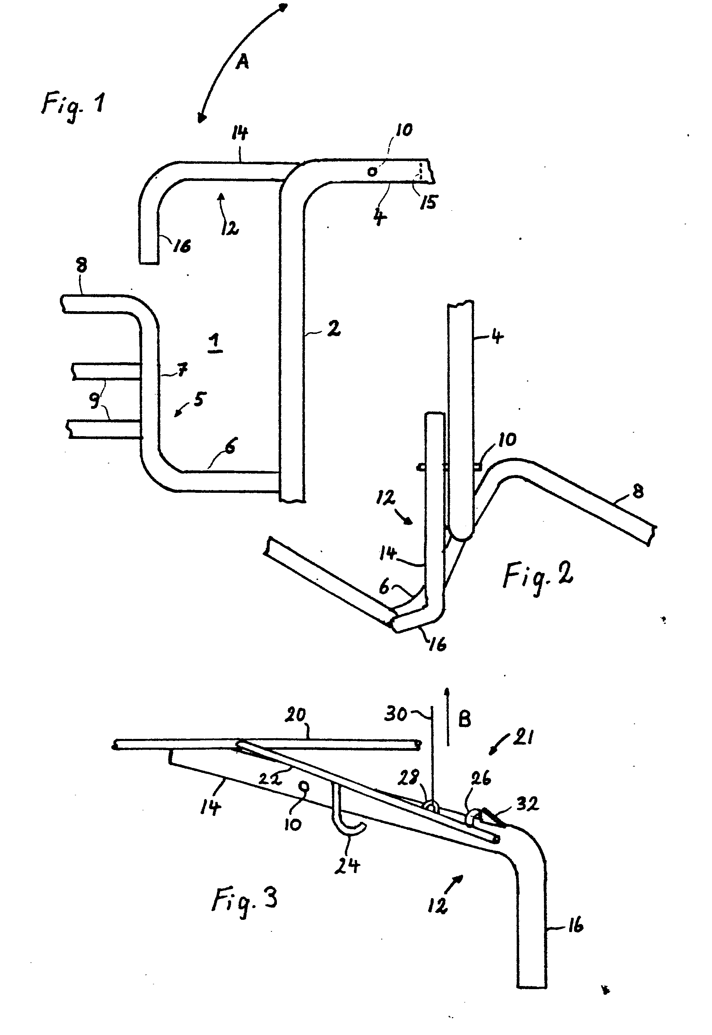

In den Figuren bezeichnen gleiche Bezugzeichen gleiche
oder entsprechende Bauteile. Figur 1 zeigt die Grundform
der Einsperröffnung 1 des erfindungsgemäßen Einsperrgitters. Sie wird auf der rechten Seite über die gesamte Höhe
durch ein im Boden eingelassenes langes Standrohr 2 begrenzt, welches oben zu einem horizontalen Holm 4 abgekrümmt ist. Ein allgemein S-förmig gekrümmtes Rohr 5 ist
an das Standrohr 2 angeschweißt. Es umfaßt einen unteren,
etwa horizontalen Abschnitt 6, einen mittleren, etwa vertikalen Abschnitt 7 und einen oberen, horizontalen oder
gegebenenfalls schräg nach oben verlaufenden Abschnitt 8.
Die Übergänge sind jeweils verrundet. Weitere Rohre 9 dienen der Versperrung des Raums neben der Einsperröffnung.
Die obere Begrenzung und der obere Teil der linken Seitenbegrenzung der Einsperröffnung 1 werden durch ein gemäß
der Pfeillinie A um einen Bolzen 10 verschwenkbares Fangrohr 12 definiert. Es umfaßt einen oberen,langgestreckten,
horizontalen Teil 14, welcher bei der strich-punktierten
Linie 15 endet sowie einen vertikalen Teil 16, welcher
etwa mit dem vertikalen Rohrstück 7 fluchtet. Der Übergang
ist wiederum verrundet. In der in Figur 1 gezeigten Sperrstellung wird das Fangrohr 12 durch einen nicht gezeigten
Anschlag daran gehindert, unter seinem eigenen Gewicht herabzufallen. Andererseits verhindert eine nicht gezeigte
Verriegelung,daß die eingesperrte Kuh das Fangrohr anhebt.

Eine Anzahl von Einsperröffnungen dieser Art sind miteinander in Reihe zu einem Einsperrgitter verbunden. Die Stangen 8 und 9 der jeweiligen linken Seite einer Einsperröffnung erstrecken sich dabei zur rechten Seite der nächsten
Einsperröffnung.

In geöffneter Stellung ist der Abschnitt 14 des Fangrohrs 12 nahezu vertikal ausgerichtet und die Einsperröffnung ist weit geöffnet. Die Kuh, welche sich dem in einem Trog hinter der Einsperröffnung dargebotenen Lockfutter zuwendet, kann ihren Kopf bequem über den Rohrabschnitt 8 heben und sodann seitlich und nach unten in die Einsperröffnung 1 senken. Der Innenabstand zwischen dem Standrohr 2 und dem Rohrabschnitt 7 ist derart gewählt, daß der Hals der Kuh bequem in der Öffnung Platz findet, der Kopf jedoch nicht zurückgezogen werden kann. Der vertikale Abstand zwischen der Innenseite des Rohrabschnitts 6 und der oberen Fläche des Rohrabschnitts 8 beträgt etwa die Hälfte bis zwei Drittel der lichten Höhe der Einsperröffnung 1. Diese Abmessungen erlauben einerseits ein leichtes Einheben des Kopfes und stellen andererseits sicher, daß der Kopf der Kuh eine für den nachfolgenden Einsperrvorgang ausreichend definierte Position einnimmt. Nunmehr läßt man das Fangrohr 12 unter seinem eigenen Gewicht nach unten fallen, bis es an den nicht gezeigten Anschlag zur Anlage kommt und mit der nicht gezeigten und später zu erläuternden Verriegelung verriegelt wird. Normalerweise wird den Kühen Lockfutter geboten. Die Kuh senkt daher ihren Kopf in den Raum zwischen dem Rohrabschnitt 7 und dem Standrohr 2 ab. Daher kann das Fangrohr 12 ohne Behinderung in seine Fangstellung abgesenkt werden. Erfindungsgemäß kann jedoch auch die Lockfuttergabe unterbleiben. Die Kuh hält dabei ihren Kopf in einer natürlichen oberen Lage. Auch hierdurch wird die Absenkung des Fangrohrs in die verriegelte Position nicht behindert, da die lichte Höhe der Einsperröffnung 1 unabhängig von der Höhe des Rohrabschnitts 8 ausreichend groß gewählt werden kann, so daß die Kuh auch ohne Lockfuttergabe das Absenken des Fangrohrs 12 nicht behindert. Andererseits sorgt der nach unten gekrümmte Rohrabschnitt 16 dafür, daß die Einsperröffnung 1 vollständig geschlossen wird. Die Kuh kann nun den Kopf weder zurückziehen noch nach oben aus der Einsperröffnung her-

ausheben. Eine Beanspruchung des Fangrohrs 12 in einer Richtung senkrecht zur Zeichenebene wird durch den Holm 4 aufgefangen, da sowohl der hinter dem Bolzen 10 gelegene Abschnitt des Fangrohrs 12 als auch ein Teil des vor dem Bolzen 10 gelegenen Abschnitts des Fangrohrs 12 am Holm 4 anliegt.

Die beschriebene Grundform der Einsperröffnung kann in verschiedenster Weise abgewandelt werden. Vorstehend wurde die Ausbildung der Einsperröffnung für ein Freßgitter beschrieben, bei dem sämtliche stationären Rohre aller Einsperröffnungen in einer gemeinsamen Ebene liegen und bei dem die Fangrohre jeweils parallel zu dieser Ebene liegen. Das Freßgitter kann jedoch auch für einen Fischgrätmelkstand ausgebildet sein. In diesem Falle sind z.B. die Rohrabschnitte 7 jeweils gegen die Standrohre 2 versetzt angeordnet. Wenn die Standrohre 2 in der Papierebene liegen, so liegen die Rohrabschnitte 7 über der Papierebene und die Rohre 8 und 9 verlaufen schräg. Außerdem sind die Rohre 8 und 9 dabei in ihrem linken Teil unter die Papierebene gekrümmt, so daß die Schulter des Tieres bequem Platz findet. Bei einer solchen Fischgrätanordnung kann der Rohrabschnitt 14 des Fangrohrs 12 in seinem vorderen Bereich aus der Papierebene herausgekrümmt sein. Alternativ kann der Rohrabschnitt 14 über seine gesamte Länge parallel zur Papierebene verlaufen, während der Abschnitt 16 schräg nach unten und vorne verläuft. Vorzugsweise ist das Standrohr 2 derart eingesetzt, daß der obere Holm 4 jeweils senkrecht oder schräg zu der durch sämtliche Standrohre 2 gebildeten Hauptebene des Fischgrätmelkstandes verläuft. In diesem Falle verläuft auch der horizontale Abschnitt 14 des Fangrohres 12 senkrecht oder schräg zur Hauptebene und der kurze senkrechte Abschnitt 16 verläuft entweder schräg nach links unten zum Rohrabschnitt 7 hin oder aber der vordere Teil des Rohrabschnitts 14 ist nach links abgekrümmt, so daß nun der Rohrabschnitt 16 senkrecht nach unten verlaufen kann.

Letztere Ausführungsform der Einsperröffnung wird bei den nachfolgend beschriebenen, bevorzugten Ausführungsformen des erfindungsgemäßen Fanggitters verwendet. Diese bevorzugte Anordnung ist daher in Figur 2 in Draufsicht dargestellt.

Der Bolzen 10 verläuft vorzugsweise in horizontaler Richtung. Er kann jedoch auch geneigt sein, so daß die Schwenkebene des Fangrohrs 14 geneigt ist. Eine solche Anordnung kann sich günstig auf die Zugänglichkeit der Einsperröffnung 1 von oben her auswirken. Die Vorteile des in Verriegelungsstellung horizontal angeordneten Fangrohrs 12 mit einem sich nach unten erstreckenden, einen Teil der seitlichen Begrenzung der Einsperröffnung 1 bildenden Abschnitt 16 treten auch dann in Erscheinung, wenn der Bolzen 10 vertikal angeordnet wird und das Fangrohr 12 daher in einer horizontalen Ebene drehbar ist.

Der Rohrabschnitt 16 muß in Schließstellung nicht konzentrisch zum Rohrabschnitt 7 angeordnet sein oder auf das Ende des Rohrabschnitts 7 hin gerichtet sein. Er kann vielmehr auch gemäß Fig. 1 nach links versetzt sein. Ferner muß das Ende des Rohrabschnitts 16 nicht bis zum Rohr 18 oder zum Rohrabschnitt 7 führen. Vielmehr kann ein mehr oder weniger großer Abstand vorgesehen sein. Entscheidend für die Position und Länge des Rohrabschnitts 16 ist ausschließlich das Erfordernis, daß die Kuh bei geschlossenem Fangrohr ihren Hals nicht aus der Einsperröffnung bewegen kann.

Das erfindungsgemäße Einsperrgitter kann in vorteilhafter Weise in Modulbauweise hergestellt werden. Jedem Standplatz wird dabei eine Fertigungseinheit zugeordnet. Diese erstreckt sich dabei gemäß Fig. 2 vom Standrohr 2 und Holm 4 nach links bis zum Ende der Rohre 8 und 9. Jede einzelne Moduleinheit kann an der Fabrikationsstätte fertig montiert werden. Die dabei erhaltenen Einheiten können aufgrund ihrer Form leicht gestapelt werden und somit platzsparend transportiert werden. Zur Endmontage ist es lediglich erforderlich, an den entsprechenden Stellen Einlaßöffnungen für die Standrohre 2 im Boden vorzusehen. Die Standrohre 2 werden dann in diese Einlaßöffnungen eingesetzt. Gegebenenfalls kann das hintere Ende des Holms 4 an einer gegenüberliegenden Wand befestigt werden oder aber an einem weiteren hinteren Standrohr, welches in den Figuren nicht gezeigt ist.

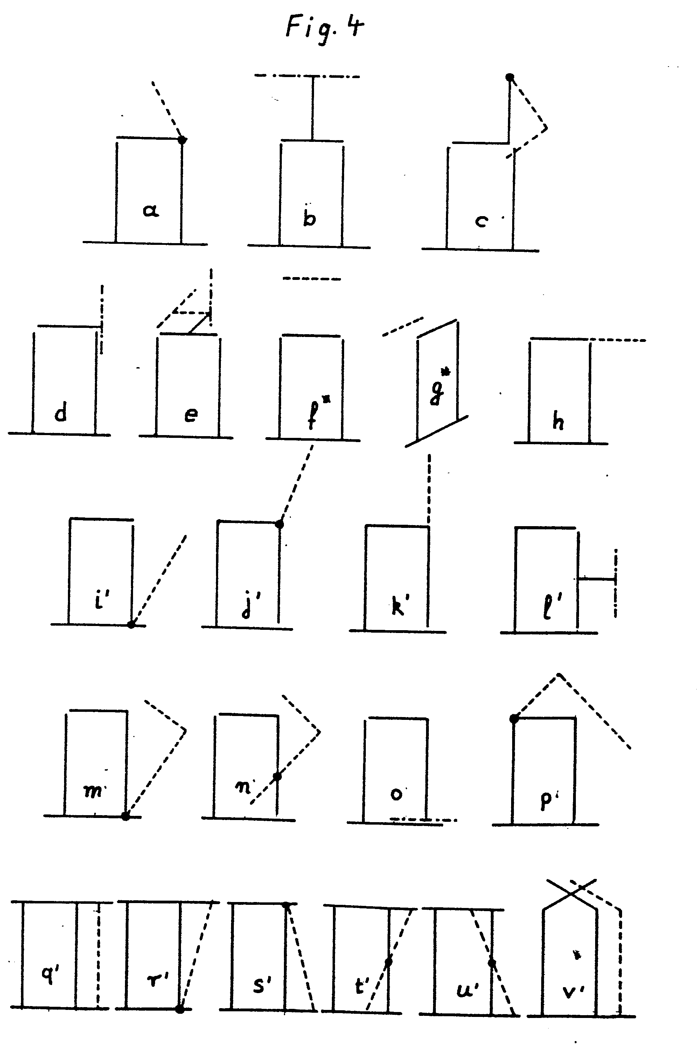

Die Modulbauweise ist nicht nur für die Ausführungsformen der Einsperröffnungen gemäß den Figuren 1 und 2 geeignet, sondern auch für Abwandlungen derselben, bei denen das Fangorgan um eine Achse schwenkbar ist, welche konzentrisch zum Abschnitt 14 verläuft, so daß der Abschnitt 16 in einer vertikalen Ebene verschwenkt wird. Darüberhinaus ist die Modulbauweise bei allen bekannten Typen von Einsperröffnungen und insbesondere auch bei den in Figur 4 dargestellten Einsperröffnungen anwendbar. Die Modulbauweise ist insbesondere günstig in Verbindung mit den weiter zu unten zu erläuternden elektrischen Steuerungseinrichtungen. Diese Modulbauweise ermöglicht eine äußerst einfache Erweiterung des Melk- und -Fütterungsstandes bei einer Vergrößerung der Herde. Außerdem ergeben sich erhebliche Vorteile bei der Verzinkung, da die einzelnen zu verzinkenden Einheiten weniger sperrig sind. Dies gilt insbesondere, wenn die einzelnen Moduleinheiten eine Stapelform haben. Allgemein liegt eine stapelbare Form dann vor, wenn alle Teile einer Moduleinheit innerhalb einer gedachten Schale liegen, welche derart ausgebildet ist, daß konvexe Bereiche der einen Schale in konkave Bereiche der anderen Schale passen. Erfindungsgemäß ist eine solche Bauweise insbesondere bei einem Einsperrgitter für Fischgrätenmelkstände möglich und vorteilhaft. Sämtliche einer Einsperröffnung zugeordneten Steuermittel wie Sensoren, Betätigungsorgane, Verriegelungsorgane oder dergleichen können bereits im Herstellungswerk fertig montiert werden. Ihre Anordnung kann dabei so getroffen werden, daß die stapelbare Schalenbauform hierdurch nicht beeinträchtigt wird.

Durch eine solche Anordnung erreicht man die erforderliche
Stabilität in Querrichtung. Die Stangen 8 und 9 erstrecken
sich sodann bis zur linken Seite des Standrohrs 2 des
nächsten Standplatzes. Sie werden hier entweder einzeln
oder über ein gemeinsames Querrohr mit einer oder mehreren
Rohrschellen oder dergl. befestigt. Hierdurch erzielt man
die erforderliche Längsstabilität. Die Endmontage des Melkstandes ist daher äußerst vereinfacht. Es können beliebig
lange Melkstände aus beliebig vielen Einheiten zusammengesetzt werden, z.B. Doppelvierer, Doppelfünfer, Doppelsechser usw.. Es ist lediglich erforderlich, für den Anfang des Melkstandes und für das Ende des Melkstandes ein
Übergangselement bereitzustellen, welches den Übergang
zum Eingangstor bzw. zum Ausgangstor herbeiführt. Das Eingangstor ist gemäß Fig. 2 auf der rechten Seite angeordnet,
während das Ausgangstor des Melkstandes auf der linken
Seite angeordnet ist. Daher besteht das eingangsseitige
Übergangselement aus einem Abschnitt der Stangen 8 und 9,
während das ausgangsseitige Übergangselement aus einer
Standplatzeinheit mit Standrohr 2, Holm 4, Fangrohr 12 und
verkürzten Rohren 8 und 9 besteht.

Im folgenden soll anhand der Figur 3 eine bevorzugte Verriegelung des Fangrohrs 12 erläutert werden. Sie ist als Selbstverriegelung 21 ausgebildet und umfaßt eine durchgehende, sich
über sämtliche Einsperröffnungen 1 des Einsperrgitters erstreckende, drehbare, aber nicht längs verschiebbare Stange
20. Jeder Einsperröffnung 1 ist eine Querstange 22 zugeordnet, welche jeweils an der Stange 20 angeschweißt ist und
somit in einer zum Fangrohr 12 parallel verlaufenden und
nahe bei diesem Fangrohr liegenden Ebene verschwenkbar ist.
Sie trägt einen nach unten hängenden Mitnehmerbügel 24, einen oberen Verriegelungsbügel 26 und eine Öse 28, an der
ein Zugseil 30 befestigt ist. Der Verriegelungsbügel 26 wirkt
mit einer Nase 32 im vorderen Bereich des Abschnitts 14 des
Fangrohrs 12 zusammen. In Figur 3 ist das Fangrohr 12 in
Verriegelungsstellung dargestellt, in der es unter seinem

0091972

eigenen Gewicht an einem nicht gezeigten Anschlag anliegt, welcher eine Schwenkbewegung nach unten verhindert. Der Schwerpunkt des Fangrohrs 12 liegt zwischen dem Bolzen 10 und dem Rohrabschnitt 16. Durch Schwerkrafteinwirkung auf die Querstange 22 ruht der Mitnehmerbügel 26 auf dem horizontalen Abschnitt 14 des Fangrohrs 12, und zwar um eine geringe Strecke hinter der Nase 32. Der Mitnehmerbügel 24 hat einen lichten Abstand vom Rohrabschnitt 14. Wenn nun das Zugseil 30 gemäß der Pfeillinie B nach oben gezogen wird, so wird die Querstange 22 im Gegenuhrzeigersinn verschwenkt und der Verriegelungsbügel 26 wird über die Spitze der Nase 32 angehoben. Im Verlauf der weiteren Schwenkbewegung gelangt der Mitnehmerbügel 24 in Angriff am Rohrabschnitt 14, so daß auch das Fangrohr 12 nach oben geschwenkt wird. Dabei findet eine Relativverschiebung zwischen Verriegelungsbügel 26 und Nase 32 in einer Richtung parallel zur Längsrichtung des Rohrabschnitts 14 statt. Diese Verschiebung des Verriegelungsbügels 26 wird durch die Nase 32 nicht behindert. Das Fangrohr 12 kann somit frei nach oben verschwenkt werden. Andererseits kann das Fangrohr 12 aber nicht durch die Kuh von unten angehoben werden, da bei einem Anheben des Fangrohrs der auf dem Fangrohr ruhende Verriegelungsbügel 26 an der Nase 32 anstößt. Wesentlich für diese Art der Selbstverriegelungsvorrichtung ist die Anordnung der Drehachse der Stange 20 oberhalb und hinter der Drehachse des Bolzens 10. Selbstverständlich können auch alle Querstangen 22 an gesonderten, drehbaren Stangen 20 angeschweißt sein, so daß alle Fangrohre 12 durch gesonderte Zugseile 30 betätigt werden können. Eine ähnliche Selbstverriegelungseinrichtung kann auch dem hinter dem Bolzen 10 gelegenen Abschnitt des Fangrohrs 12 zugeordnet sein. Dabei befindet sich die Drehachse der Stange 20 jedoch unter und vor der Drehachse des Bolzens 10. Die Nase 32 ist am hinteren Ende des Fangrohrs 12 ausgebildet und ragt nach unten. Die Querstange 22 muß in diesem

0091972

Falle jedoch gegen ihr eigenes Gewicht durch eine einerseits an der Querstange, andererseits am Fangrohr befestigte Zugfeder normalerweise nach oben gezogen werden. Die Querstange der Selbstverriegelungsvorrichtung kann auch am Bolzen 10 angelenkt sein. In diesem Falle muß jedoch ein gesondertes Verriegelungselement vorgesehen sein, welches durch die erste Bewegungsphase der Querstange 22 entriegelt wird. Die Ausbildung der Selbstverriegelungsvorrichtung mit einer durchgehenden Stange 20 ist insbesondere für die Fanggitterausbildung gemäß Figur 2 geeignet, während gesonderte Selbstverriegelungsvorrichtungen mit gesonderten Drehstangen bei einer Ausführungsform gemäß Figur 1 erforderlich sind.

Selbstverständlich ist eine für jedes einzelne Fangrohr vorgesehene, gesonderte Selbstverriegelungsvorrichtung auch bei einem Fischgrätmelkstand mit einer Anordnung gemäß Fig. 2 von großem Vorteil für die Ermöglichung einer weiter unten zu erläuternden, selektiven Platzeinweisung, Einsperrung und Entlassung der Kühe. Fig. 3 zeigt nur eine von vielen möglichen Ausführungsformen einer Selbstverriegelungseinrichtung. Es kommen insbesondere auch feder- oder schwerkraftbeaufschlagte Riegel in Frage, welche in Ausnehmungen eingreifen und durch Zugbeaufschlagung durch das Zugseil 30 in Entriegelungsstellung gebracht werden, ehe das Fangrohr 12 angehoben wird.

Selbstverständlich muß die Verriegelung der Fangrohre 12 in Schließstellung nicht durch eine Selbstverriegelungseinrichtung der bisher beschriebenen Art erfolgen. Vielmehr kann auch eine gesonderte, fremdbetätigte Verriegelungseinrichtung vorgesehen sein, welche durch einen Betätigungsmagneten oder dergl. selektiv in den verriegelten und/oder entriegelten Zustand gebracht werden kann. Die Verriegelungseinrichtung kann dabei normalerweise unter

0091972

Federbeaufschlagung oder Schwerkraftbeaufschlagung in eine
Ausnehmung eingreifen. Kurz vor dem Anheben des Fangrohrs
12 muß jedoch durch die gesonderte (magnetische, mechanische oder dergl.) Betätigungseinrichtung eine Entriegelung herbeigeführt werden. Diese Verriegelungseinrichtungen
sind jedoch hinsichtlich des Aufbaus und hinsichtlich der
Bedienungserfordernisse aufwendiger als die in Fig. 3 gezeigte Selbstverriegelungseinrichtung mit der zugseilbetätigten Selbstentriegelungsfunktion.

0091972

Bei den bisher beschriebenen Fangrohrverriegelungen wird
das Fangrohr durch einen gesonderten Verriegelungsmechanismus gegen ein Hochschwenken in die Öffnungsposition
starr verriegelt. Es ist jedoch auch möglich, eine Öffnung des Fangrohrs durch die Kuh und ein unerwünschtes
Entweichen der Kuh aus der Einsperröffnung ohne gesonderten Verriegelungsmechanismus ausschließlich durch die Ausbildung des Fangrohrs zu verhindern. In der nachfolgenden
Beschreibung soll auf Fig. 1 Bezug genommen werden. Das
dort gezeigte Fangrohr 12 ist aus der Schließposition
frei nach oben verschwenkbar. Insbesondere kann auch die
Kuh durch Anheben ihres Halses oder Kopfes das Fangrohr
12 hochschwenken. Dabei liegt jedoch das Fangrohr 12 vermöge seines Eigengewichts stets auf dem Hals der Kuh auf.
Andererseits kann die Kuh ihren Hals nicht seitlich aus
der Öffnung bewegen, da dies durch den Rohrabschnitt 16
verhindert wird, solange dieser nur lang genug ist und
nicht schräg nach außen verläuft. Sobald die Kuh versucht,
durch rasches Senken und nachfolgendes seitliches Bewegen
ihres Halses aus der Einsperröffnung zu schlüpfen, folgt
das Fangrohr vermöge seiner Schwerkraft der Bewegung des
Halses des Tiers nach unten, so daß die Einsperrwirkung
des Fangrohrs stets erhaltenbleibt. Diese Einsperrwirkung wird ohne jeden zusätzlichen Verriegelungsmechanismus ausschließlich durch die besondere Formgebung des
Fangrohrs 12 und durch die Gewichtsbeaufschlagung (oder
Federbeaufschlagung) desselben erreicht, d.h. durch ein
formschlüssiges und gegebenenfalls kraftschlüssiges Zusammenwirken zwischen Fangrohr und Tier. Durch das formschlüssige Zusammenwirken und aufgrund der besonderen
Formgebung des Fangorgans 12 steht einer seitlichen Bewegung des Halses der Rohrabschnitt 16 im Wege, und zwar
aufgrund der kraftschlüssigen Zusammenwirkung, weitgehend
unabhängig von einer leicht aufwärts verschwenkten Stellung des Fangrohrs 12. Verallgemeinernd kann festgestellt werden, daß eine solche formschlüssige Selbstverriegelungswirkung stets dann vorliegt, wenn die Richtung der Herausbewegung des Halses aus der Einsperröffnung durch ein
Fangorgan begrenzt ist und wenn dieses Fangorgan durch
die Bewegung des Halses der Kuh nicht aus seiner die Bewegung eingrenzenden Position bewegt werden kann. Diese
formschlüssige Verriegelung kann durch eine weitere Ausgestaltung des Fangrohrs 12 noch verbessert werden, und zwar
dadurch, daß der Rohrabschnitt 16 in Schließstellung nicht
nur senkrecht nach unten geführt wird, sondern in seinem
unteren Abschnitt auch noch nach innen. Um zu verhindern,
daß die Kuh das nicht mit einer gesonderten Verriegelungseinrichtung versehene Fangorgan 12 durch eine ruckartige
Bewegung seines Halses hochschleudert und dann rasch aus
der Einsperröffnung entweicht, kann eine zusätzliche Federbeaufschlagung des Fangorgans 12 vorgesehen sein oder
eine Bewegungsdämpfungseinrichtung bekannter Bauweise. Die
vorstehend beschriebene, formschlüssige Verriegelung
zwischen Fangorgan und Hals der Kuh bildet den Idealfall
einer elastischen Verriegelung, welche der weiter oben
beschriebenen, starren Verriegelung gegenübersteht. Es
sind jedoch auch Übergänge zwischen diesen beiden Verriegelungsarten möglich, bei denen das gesonderte Verriegelungsorgan elastisch ausgebildet ist.

Bei den bisher beschriebenen Fangorganen 12 ist sowohl die
obere Begrenzung als auch die seitliche Begrenzung durch
ein starres Rohr gebildet. Anstelle des starren Rohrs kann
jedoch auch eine elastische Kette, ein Seil oder dergl.
mindestens in einem Abschnitt vorgesehen sein. Ferner muß
der obere Rohrabschnitt 14 in Schließstellung nicht horizontal verlaufen. Er kann vielmehr auch in Schließstellung vertikal verlaufen oder insgesamt nach oben gekrümmt sein. Die letztere Form ist für die formschlüssige Verriegelung besonders günstig.

Wie bereits erläutert, liegt das Fangrohr 12 in Schließstellung an einem nichtgezeigten Anschlag an. Hier kann
zur Abfederung der Stoßbeanspruchung ein Gummipuffer vorgesehen sein. Ferner kann ein gabelförmiger Anschlag in
Schließstellung des Fangrohrs 12 über das hintere Ende desselben greifen und die Fallbewegung in Schließposition in
der letzten Bewegungsphase abbremsen.

Die Einsperröffnung und die Fangrohrgestaltung gemäß den
Fig. 1 bis 3 ist in mehrfacher Hinsicht optimal. Je nach
der weiter unten zu erläuternden Position des Schwerpunktes vor oder hinter dem Anlenkbolzen 10 erfolgt die Öffnungsbewegung und/oder Schließbewegung des Fangrohrs 12
gegen die Schwerkraft. Bei der in den Fig. 1 bis 3 gezeigten Ausführungsform liegt der Schwerpunkt vor dem Anlenkbolzen 10, so daß das Fangrohr 12 gegen die Schwerkraft in
Öffnungsposition gebracht wird, während es unter seinem
Eigengewicht in Schließposition fällt. Ein besonderes Merkmal dieser Ausführungsform besteht nun darin, daß der
Schwerpunkt seine tiefste Position in Schließstellung und
seine höchste Position in Öffnungsstellung einnimmt. Die
Stange fällt daher stets nur unter Eigengewicht in Schließstellung und muß nicht durch Fremdbetätigung und übermäßige Krafteinwirkung in Schließstellung bewegt werden. Daher begünstigt diese Art des Fangrohrs die Möglichkeit einer für das Tier gefahrlosen Automatisierung des
Betätigungsvorgangs. Diese Automatisierungsmöglichkeiten
sollen weiter unten im Detail erläutert werden. Darüberhinaus ist eine Besonderheit der Ausführungsform gemäß
den Fig. 1 bis 3 darin zu erblicken, daß das Drehmoment
durch die im Schwerpunkt angreifende Schwerkraft im Verlauf der Schließbewegung des Fangrohrs 12 zunimmt. Hierdurch wird ein definitives Einrasten des Selbstverriegelungsmechanismus begünstigt und das Fangrohr 12 gelangt
auch nach längerem Gebrauch und nach Verschmutzungen der
Anlenkung stets ohne Störung definitiv in seine Verriegelungsposition. Ein weiterer, wesentlicher Vorteil besteht
darin, daß eine abgekrümmte Fangrohrausbildung gemäß
Fig. 1 bis 3 möglich ist. Es muß jedoch betont werden, daß
auch ein Fangrohr ohne den abgewinkelten Abschnitt 16 die
zuvor erwähnten Vorteile aufweist. Darüberhinaus ist die
Lagerung des Fangrohrs äußerst einfach und es sind keine
zusätzlichen Führungen erforderlich. Das Fangrohr ist in
Schließstellung stabilisiert und zur Stabilisierung ist
lediglich der Querholm 4 erforderlich, welcher ohnehin für
die Querstabilisierung des Melkstandes benötigt wird.
Außerdem ist das Fangrohr 12 äußerst einfach aufgebaut und
umfaßt nur Teile, welche auch zur Begrenzung der Einsperröffnung erforderlich sind, während darüberhinaus praktisch
keine weiteren Teile erforderlich sind.

Man kann den Schwerpunkt des Fangrohrs 12 nach Belieben
wählen, indem man entweder den hinter dem Anlenkbolzen 10
gelegenen Abschnitt verlängert oder durch ein angeschweißtes oder in das Fangrohr eingeschobenes Gewicht beschwert.
Hierdurch kann der Kraftaufwand für das Öffnen wesentlich
verringert werden. Dies ist insbesondere vorteilhaft für
eine Fernwirkbetätigung des Fangrohrs, welche weiter unten
näher erläutert werden soll.

In Fig. 4 sind eine Reihe weiterer Einsperröffnungen dargestellt, welche für den erfindungsgemäßen Melk- und -Fütterungsstand geeignet sind. Jede dieser Einsperröffnungen kann wiederum durch Verkürzung oder Verlängerung der beweglichen Teile abgewandelt werden. Die Schließposition ist jeweils mit ausgezogenen Linien dargestellt, während die Öffnungsposition mit gestrichelten Linien dargestellt ist. Die Schwenkachse ist entweder durch einen Punkt dargestellt oder durch eine strichpunktierte Linie. Die einzelnen Ausführungen sind fortlaufend mit den Buchstaben a bis v bezeichnet. Alle diese Einsperröffnungen können in einer gemeinsamen Ebene angeordnet werden, so daß jeweils die rechte und linke Seite gleichwertig ist. Bei dieser Anordnung gibt es zu jeder dargestellten Ausführung eine spiegelbildliche Ausführung. Lediglich die mit einem Sternchen versehenen Ausführungen sind entartet, so daß eine spiegelbildliche Ausführung nicht möglich ist. Bei allen gezeigten Ausführungsformen ist nur eine bewegliche Stange dargestellt. Es können jedoch bei einigen Ausführungsformen auch jeweils zwei bewegliche Stangen angeordnet werden, welche symmetrisch zueinander bewegbar sind. Bei diesen Ausführungsformen ist der Buchstabe gestrichen.

Die Einsperröffnung gemäß den Fig. 1 bis 3 ist schematisch in Fig. 4a dargestellt. Dabei wird die obere Seite der Einsperröffnung durch eine bewegliche Stange gebildet, die geöffnet und geschlossen werden kann. Die Fig. 4b und 4c zeigen ähnliche Einsperröffnungen, bei denen die bewegliche Stange ebenfalls gegen die Schwerkraft verschwenkbar ist. Dabei sind die Einsperrstangen komplizierter gestaltet und das Drehmoment nimmt im Verlauf der Schließbewegung ab. Ein abgewinkelter Knieabschnitt (16) ist jedoch
möglich. Die Fig. 4d und 4e zeigen Einsperröffnungen, bei
denen die bewegliche Stange ebenfalls die obere Seite der
Einsperröffnung bildet, jedoch nun in einer horizontalen
Ebene, d.h. nicht gegen die Schwerkraft, verschwenkbar
ist. Dabei ist die abgewinkelte Ausführung gemäß Fig. 1
möglich. Zur Betätigung benötigt man jedoch entweder eine
in zwei Richtungen wirksame Betätigungseinrichtung oder
zusätzlich zur Betätigungseinrichtung eine Zugfeder.
Außerdem bieten sich für die Selbstverriegelungseinrichtung
keine so eleganten Lösungen an, wie die in Fig. 3 gezeigte.
Darüberhinaus sind die Fangrohre bzw. deren Lagerung aufwendiger.

Die Fig. 4f bis 4h zeigen ebenfalls Einsperröffnungen, bei
denen die obere Seite durch eine bewegliche Stange begrenzt
ist. Diese ist jedoch nicht verschwenkbar gelagert, sondern
in vertikaler Richtung verschiebbar bzw. in horizontaler
Querrichtung bzw. in horizontaler Längsrichtung verschiebbar. Die Ausführungsform gemäß Fig. 4f zeigt dabei in Bezug auf die Schwerkrafteinwirkung noch eine Reihe von Vorteilen der Ausführungsform gemäß Fig. 4a. Außerdem ist dabei auch ein abgewinkelter Abschnitt 16 möglich. Jedoch erfordern alle Ausführungsformen der Fig. 4f bis 4h einen
größeren Aufwand hinsichtlich der Führung und Lagerung.

Bei den bisher beschriebenen Ausführungsformen ist die bewegliche Stange stets der oberen Seite der Einsperröffnung
zugeordnet. Die Fig. 4i bis 4l zeigen Einsperröffnungen,
bei denen eine seitliche Begrenzungsstange beweglich ist,
und zwar gemäß den Fig. 4i und 4j um eine obere oder untere (oder im Übergangszustand auch mittige) horizontale
Schwenkachse verschwenkbar oder gemäß Fig. 4k in Längsrichtung auf und ab verschiebbar oder in Horizontalrichtung
wegschwenkbar oder schiebbar. In den Fällen 4k und 4l kann
die bewegliche Stange auch nur einen oberen Teil der seitlichen Begrenzung bilden.

Bei den bisher beschriebenen Ausführungsformen der Einsperröffnung wird stets nur eine Seite derselben durch eine bewegliche Stange gebildet. Die Fig. 4m bis 4p zeigen Ausführungsformen, bei denen sowohl eine seitliche Begrenzung als
auch eine obere Begrenzung beweglich sind und in Form einer
einstückigen Stange in Öffnungsstellung geschwenkt werden
können, und zwar gemäß den Fig. 4m, 4n und 4p in der Ebene
der Einsperröffnung und gemäß Fig. 4o aus dieser Ebene heraus (nach hinten).

Die bisher beschriebenen Einsperröffnungen gehören allesamt
dem Öffnungs-Schließ-Typ an, bei dem im Öffnungszustand
die allseitige Begrenzung der Einsperröffnung gesprengt
ist und die Kuh ihren Kopf in die Einsperröffnung heben
kann. Die Fig. 4q bis 4v zeigen Einsperröffnungen vom
"Expansions-Kontraktions-Typ", bei denen die Kuh ihren
Kopf in die expandierte Einsperröffnung einführen muß.

Selbstverständlich kann jeweils auch nur ein Teil der
oberen Begrenzung und/oder der seitlichen Begrenzung
beweglich ausgebildet sein.

Bei den bisher beschriebenen Einsperröffnungen sind alle
Seiten einschließlich der oberen Seite durch Begrenzungselemente begrenzt. Man kann jedoch auch Einsperröffnungen verwenden, bei denen nur zwei seitliche Begrenzungen
vorgesehen sind und die obere Begrenzung fehlt. Diese
Einsperröffnungen können leicht aus den Einsperröffnun- gen gemäß Fig. 4 entwickelt werden. Von besonderem Vorteil ist es dabei, eine der langen, senkrechten Begrenzungen stationär und einstückig vorzusehen, während die andere aus zwei getrennten Teilen besteht, deren unterer
stationär angeordnet ist und deren oberer beweglich ist.
Zwischen dem Fall einer Einsperröffnung ohne obere Begrenzung und dem Fall einer Einsperröffnung mit einer am Hals
der Kuh angreifenden, oberen Begrenzung ist eine Vielzahl
von Übergangsfällen denkbar, bei denen die obere Begrenzung zwar vorhanden ist, jedoch so hoch angeordnet ist,
daß sie von der Kuh nicht erreicht werden kann. Dies ist
besonders günstig für die Ausbildung einer formschlüssigen, von der Kuh nicht zu öffnenden Selbstverriegelungsfunktion (ohne gesonderten Verriegelungsmechanismus).

Man sieht, daß die oben erwähnte optimale Merkmalskombination der Einsperröffnung und Fangrohranordnung nur bei
dem Konstruktionsprinzip gemäß Fig. 4a erreicht werden
kann, während alle anderen Konstruktionsprinzipien den
einen oder anderen Nachteil haben. Wie bereits erwähnt,
können alle Einsperröffnungen, gleich welchen Konstruktionsprinzips, in Schrägstellung angeordnet werden, wie
dies bei einem Fischgrätmelkstand erforderlich ist. Dabei kann die Bewegungsrichtung entweder in der oben definierten Einsperrebene verlaufen oder in einer hierzu
senkrechten Ebene oder aber auch parallel zur Hauptebene,
die durch die Standrohre 2 aufgespannt wird, d.h. in
Scherrichtung zu dieser Hauptebene.

Bei den bisher beschriebenen Ausführungsformen liegt der Schwerpunkt des Fangrohrs (in Schließstellung) stets über der Einsperröffnung, d.h. im Falle eines verschwenkbaren Fangrohrs auf der der Einsperröffnung zugewandten Seite des Anlenkbolzens. Er fällt dabei selbsttätig in die Verriegelungsstellung, so daß der Verriegelungsmechanismus vereinfacht sein kann. Eine ähnliche Vereinfachung des Betätigungs- und Verriegelungsmechanismus erzielt man jedoch auch, wenn der Schwerpunkt im Falle eines angelenkten Fangrohrs auf der von der Einsperröffnung abgewandten Seite des Anlenkpunktes liegt.

Wie bereits angedeutet, eignet sich das Konstruktionsprinzip der Einsperröffnung und des Fangrohrs gemäß den Fig. 1 bis 3 vorzüglich zur Automatisierung der Melkstandsteuerung durch Kombination mit Betätigungsorganen, Fernwirkeinrichtungen, Logikschaltungen und Sensoren. Die Betätigungsorgane müssen dabei nur in einer Richtung (Hubrichtung) wirken. Ähnliche, jedoch in der einen oder anderen Hinsicht weniger vorteilhafte Automatisierungen sind auch z.B. bei den Konstruktionsprinzipien der Fig. 4b bis 4 v möglich.

Bevor die schaltungsmäßigen Details der erfindungsgemäßen automatischen Steuerungseinrichtungen erläutert werden, soll im folgenden die Melkstandsteuerung einer grundsätzlichen Analyse unterzogen werden. Prinzipiell unterscheidet man bei einem Melkstand die Steuerung der Platzeinweisung, der Einsperrung der Kühe und der Entlassung der Kühe.

Durch die Platzeinweisung soll sichergestellt werden, daß stets der hinterste, noch unbelegte Platz durch die nächste Kuh belegt wird und daß nicht etwa die erste Kuh schon den ersten Platz belegt und den gesamten Melkstand blockiert.

Bei einem einfachsten Fall der Platzeinweisung bleiben sämtliche Einsperröffnungen nach Öffnung des Eingangstors verschlossen. Sämtlichen,den Melkstand betretenden Kühen ist der Zugang zum Lockfutter versperrt. Nachdem alle Kühe vollständig oder teilweise in den Melkstand eingedrungen sind, werden sämtliche Einsperröffnungen gleichzeitig geöffnet, so daß die Kühe nun zum Lockfutter gelangen können und ihre endgültige Melkstellung einnehmen. Dieses einfachste Platzeinweisungsprinzip eignet sich besonders für kurze Melkstände mit nur wenigen Standplätzen. Bei längeren Melkständen findet bei geschlossenen Einsperröffnungen nur ein Teil der Kühe im Melkstand Platz, so daß für die noch draußenstehenden Kühe eine weitergehende Platzeinweisungssteuerung erforderlich ist. Diese erfolgt durch eine sukzessive Öffnung der Einsperröffnungen. Diese sukzessive Freigabe kann nach einem starren Programm ablaufen. Dieses kann durch Fremdauslösung durch den Melker gestartet werden oder durch Selbstauslösung durch die erste oder eine nachfolgende Kuh oder durch eine mit dem Eingangstor gekoppelte Zeitsteuereinrichtung. Die bisher beschriebenen Platzeinweisungssysteme können als "fremdgeführte" Platzeinweisungssysteme bezeichnet werden. Vorteilhafter sind jedoch Melkstände mit selbstgeführter Platzeinweisung, bei der durch Betätigung eines Sensors jeweils die Einsperrgitter für eine oder mehrere nachfolgende Kühe geöffnet werden. Derartige Melkstände sind dem Tierverhalten besser angepaßt. Es sind dabei allerdings, zumindest bei einem Teil der Standplätze, Sensoren erforderlich. Diese müssen an einer derartigen Stelle angebracht werden, daß sie erst betätigt werden können, wenn die zugeordnete Kuh eine vorbestimmte, wohldefinierte Position eingenommen hat, z.B. die endgültige Freßposition. Im einfachsten Falle löst jede Kuh für die jeweils nachfolgende Kuh die Freigabe der Einsperröffnung aus. Übergangsformen werden etwa dadurch erhalten, daß einzelne
Kühe die Freigabe der Einsperröffnungen für eine jeweils
nachfolgende Gruppe von Kühen auslösen, so daß z.B. die
erste Kuh durch Betätigung eines Sensors die Freigabe der
Plätze zwei und drei auslöst, während die dritte Kuh
durch Betätigung eines Sensors die Freigabe der Plätze
vier und fünf auslöst, so daß nur jeder zweite Platz mit
einem Sensor versehen werden muß. Bei einer bevorzugten
Ausführung der Platzeinweisung wird die hinterste Einsperröffnung bereits vor oder mit der Öffnung des Eingangstors geöffnet, so daß hier für die Kuh ohne weiteres
erkennbar das Lockfutter zugänglich ist. Hierdurch wird
ein reibungsloser Betrieb des Melkstandes begünstigt. Der
dort vorgesehene Sensor kann nun gemäß den verschiedenen,
beschriebenen Platzeinweisungssystemen die gemeinsame
Öffnung der nachfolgenden Plätze, die starre, sukzessive
Öffnung aller nachfolgenden Plätze oder nur des einen
nachfolgenden Platzes oder einer Gruppe von nachfolgenden
Plätzen auslösen.

Die Platzeinweisung muß nicht durch Betätigung der Fangorgane erfolgen. Sie kann auch durch Betätigung gesonderter, die an sich offenen Einsperröffnungen blockierender Sperrorgane bewirkt werden. Diese Sperrorgane können
in Form von angelenkten Türen oder verschwenkbaren Armen
oder dergl. vorgesehen sein. Die Sperrorgane oder Türen
können an einer der seitlichen Begrenzungen der Einsperröffnung angelenkt sein oder an jedem anderen stationären
Bauteil des Einsperrgitters, und sie können insbesondere
auch in Form von verschwenkbaren, seitlichen Begrenzungen
anstelle der Rohre 8, 9 vorgesehen sein.

Bei der Einsperrung der Kühe unterscheidet man wiederum die Fremdeinsperrung und die selbstgesteuerte Einsperrung. Bei der einfachsten Fremdeinsperrung werden alle Einsperröffnungen nach Belegung sämtlicher Plätze gleichzeitig durch Fremdauslösung (Knopfdruck durch Melker oder dergl.) verschlossen. Diese Fremdeinsperrung kann auch mit dem Verschließen der Eingangstür gekoppelt werden. Alternativ können die einzelnen Fangrohre auch sukzessive in Schließstellung gebracht werden, und zwar wiederum nach einem starren, voreingestellten Programm. Dieses Programm kann mit einer voreinstellbaren, zeitlichen Verzögerung relativ zur Öffnung des Eingangstors oder zur Betätigung eines Sensors des ersten Platzes oder eines nachfolgenden Platzes oder des letzten Platzes gestartet werden. Bei einem Melkstand mit starr geführter Platzeinweisung und starr geführter Einsperrung pflanzt sich somit ein Platzeinweisungsimpuls in Richtung vom ausgangsseitigen Ende zum eingangsseitigen Ende fort, gefolgt von einem Einsperrimpuls, welcher sich in gleicher Richtung fortpflanzt.

Bei einer selbstgeführten Einsperrung werden die Einsperrvorgänge jeweils einzeln oder gruppenweise durch tierbetätigte Sensoren ausgelöst. Im einfachsten Fall kann die Versperrung der Plätze eins bis N durch Betätigung des Sensors am Platz N ausgelöst werden. Im anderen Extremfall kann die Versperrung des Platzes n (n = 1, 2, ... N) durch den Sensor am Platz n ausgelöst werden. Zwischen diesen beiden Extremfällen sind verschiedenste Übergänge denkbar, z.B. die Einwirkung des Sensors am Platz n auf die Versperrung einer vorhergehenden Gruppe von Plätzen. Ein besonders einfacher Fall aus der letzteren Fallgruppe wird dadurch erhalten, daß der Sensor des Platzes n die Einsperrung des nächsthinteren Tiers am Platz n - 1 auslöst. Dieses Prinzip kann gekoppelt werden mit der Auslösung der Freigabe des nächstvorderen Platzes n + 1. Bei
einer weiteren bevorzugten Melkstandsteuerung löst der
Sensor am Platz n die Einsperrung am Platz n und die Freigabe des Platzes n + 1 aus. Bei der gewählten Numerierung
ist der erste Platz dem Ausgang benachbart angeordnet,
während der Platz N dem Eingang benachbart angeordnet ist.

Ferner kann bei einem Melkstand mit Einsperrung auch die
Entlassung der Tiere nach beendetem Melkvorgang gesteuert
werden. Im einfachsten Falle kommt eine Fremdentlassung
gemeinsam für alle Plätze in Frage. Diese kann z.B. ausgelöst werden durch den Melker oder auch durch einen Auslöser
am letzten Melkzeug und insbesondere auch gekoppelt mit
der Öffnung der Ausgangstür. Es kommt aber auch eine sukzessive Fremdentlassung in Frage. Wenn z.B. der Melkvorgang am Platz n beendet ist, so können nun schon alle
oder eine vordere Teilgruppe der Kühe der Plätze eins bis
n entlassen werden, sofern bei ihnen der Melkvorgang ebenfalls schon beendet ist. Bei längeren Melkständen kann
hierdurch das Auslaufen der Kühe aus dem Melkstand begünstigt werden, so daß es nicht zu Stauungen kommt und
der Melkstand möglichst rasch freigemacht und für den
nachfolgenden Melkvorgang vorbereitet werden kann. Diese
sukzessive Fremdentlassung kann wiederum durch Sensoren
an den Melkzeugen ausgelöst werden. Selbstverständlich
kann die Fremdentlassung auch nach einem starren, sukzessiven Programm ablaufen, ausgelöst nach beendetem Melkvorgang bei der Kuh mit der längsten Melkzeit.

Bei einer besonders vorteilhaften Ausführungsform arbeitet
der erfindungsgemäße Melk- und/oder -Fütterungsstand mit
einer selbstgeführten Entlassung der Tiere. Sobald die
hinterste Kuh ihren Standplatz verläßt und ihren Hals aus
der Einsperröffnung bewegt, erzeugt der zugeordnete Sensor ein Signal, welches die Einsperröffnung des nächsthinteren, noch besetzten Standplatzes öffnet bzw. entriegelt.
Diese nächsthintere Kuh kann daher ihren Kopf erst aus der
Einsperröffnung befreien, nachdem die ihr zum Ausgang hin
benachbarte Kuh bereits ihren Standplatz verlassen hat. Es
ist dabei besonders vorteilhaft, die Einsperröffnung des
zum Ausgang hin benachbarten, bereits vom Tier verlassenen
Standplatzes wiederum in den verriegelten Sperrzustand zu
bringen, bevor das nächste Tier aus seiner Fangstellung
entlassen wird. Hierdurch wird verhindert, daß die Tiere
beim Verlassen des Melkstandes offene Einsperröffnungen
vorfinden, um sich dort eventuell zurückgebliebenen Futterresten zuwenden zu können.

Wie bereits angedeutet, kann die Steuerung der Einsperröffnungen bzw. der Fangrohre auch mit der Steuerung des
Eingangsrohrs und des Ausgangstors zusammengeschaltet werden. Die Steuerung des Eingangstors E und des Ausgangstors A kann wiederum als Fremdsteuerung ausgeführt sein,
und zwar mit der Sequenz $E_{ZU}$-$A_{AUF}$ $\longrightarrow$ $E_{ZU}$-$A_{ZU}$ $\longrightarrow$
$E_{AUF}$-$A_{ZU}$ $\longrightarrow$ $E_{ZU}$-$A_{ZU}$. Es kann jedoch auch eine selbstgeführte Steuerung des Eingangstors und des Ausgangstors
vorgesehen sein, welche in die Steuerung der Fangrohre
integriert ist.

Im folgenden sollen die Betätigungsorgane für die Fangrohre beschrieben werden. Bei den Ausführungsformen gemäß
den Fig. 1 bis 3 ist eine Hubeinrichtung erforderlich,
welche nur in einer Richtung wirken muß. Besonders vorteilhaft ist ein Hubmagnet, welcher entweder als Gleichstrommagnet oder als Wechselstrommagnet ausgeführt werden
kann. Dabei kann die Entwicklung der Hubkraft im Verlauf
der Hubbewegung der Änderung der Belastung im Verlauf der
Schwenkbewegung des Fangrohrs angepaßt werden. Solange der
Hubmagnet erregt ist, verbleibt das Fangrohr in seiner
oberen Öffnungsposition. Bei Entregung des Hubmagneten
fällt es in seine Schließposition zurück. Es ist dabei
günstig, das Fangrohr besonders leicht auszubilden, und
zwar entweder durch Materialwahl (leichtes Metall oder
dergl.) und/oder durch Verlagerung des Schwerpunktes in
die Nähe des Anlenkbolzens 10. Die Angriffsstelle des Zugseils 30 kann dabei entsprechend der günstigsten Hubhöhe
des Hubmagneten gewählt werden. Alternativ kann die Betätigung der Fangrohre auch pneumatisch erfolgen, und zwar mit
Hilfe der Druckluftquelle, welche auf einem Melkstand ohnehin zur Verfügung steht. Vorteilhaft kann auch eine
elektropneumatische Betätigungseinrichtung sein, bei der jedem pneumatischen Zylinder ein Solenoid -betätigtes Umsteuerventil zugeordnet ist. Die letztere Betätigungseinrichtung kann in gleicher Weise gesteuert werden wie ein
Hugmagnet. Ferner kommt natürlich auch eine hydraulische
oder elektrohydraulische Betätigung in Frage oder eine Betätigung mit einem mit Endlagenschaltern ausgerüsteten
Elektromotor oder einem Schrittmotor.

Ganz allgemein kann man einfach wirkende oder doppelt
wirkende Betätigungseinrichtungen verwenden. Einfach
wirkende Betätigungseinrichtungen sind immer dann vorteilhaft, wenn z.B. bei verschiedenen Ausführungsformen der
Fig. 4 die Einsperröffnung unter Schwerkraft in die
Schließstellung oder in die Öffnungsstellung gelangt, wobei zusätzliche Variationen durch Anbringung von Gewichten
im Sinne einer Schwerpunktverlagerung möglich sind, wodurch
ein sich unter Schwerkraft in die Schließstellung bewegendes Fangorgan nunmehr unter Einfluß des Schwerpunktverlagernden Gewichts in seinem Verhalten umgekehrt wird
und sich unter Schwerkrafteinwirkung in die Öffnungsstellung bewegt. An die Stelle der Schwerkraft können bei Verwendung von einfach wirkenden Antriebsorganen auch Zugfedern treten. Die Zugfeder kann im Antriebsorgan selbst
vorgesehen sein oder am Einsperrgitter. Die einfach wirkenden Antriebsorgane können ziehend oder drückend wirken.
Die pneumatischen Betätigungsorgane können mit Überdruck
und/oder Unterdruck betrieben werden.

Den einzelnen Einsperröffnungen können gesonderte Antriebsorgane zugeordnet werden, z.B. gesonderte Zugmagnete,
pneumatische Zylinder, hydraulische Zylinder oder Elektromotoren. Einen Sonderfall bilden dabei die durch das Tier
selbst angetriebenen Einsperröffnungen, welche auch als
Selbstfanggitter bekannt sind. Einsperrgitter dieses Typs
sind in schematischer Darstellung in den Fig. 4n und 4t gezeigt. Zu dieser Klasse von Antrieben gehören auch
Fangorgane, welche nach Entriegelung durch das Tier geöffnet werden können. Selbstverständlich können die erfindungsgemäßen Steuersysteme auch bei Einsperrgittern
mit solchen Fangorganen eingesetzt werden.

Anstelle der Einzelantriebsorgane kann auch ein
allen Einsperröffnungen zugeordneter, gemeinsamer Antrieb
vorgesehen werden. Dabei müssen jedoch den einzelnen Einsperröffnungen Antriebsenergie-Speicherelemente zugeordnet
werden. Diese können potentielle mechanische Energie speichern (Federn, Gewichte, Druckkammern oder dergl.).

Wie bereits erwähnt, können den einzelnen Standplätzen Signalgeber zugeordnet sein, welche durch die einzelnen
Kühe beim Einnehmen des Standplatzes ausgelöst werden.
Diese Signalgeber müssen derart angeordnet werden, daß
sie nicht durch vorbeigehende Kühe ausgelöst werden, sondern nur im Falle des Einnehmens einer Einsperrposition
durch die jeweilige Kuh ausgelöst werden. Sie können verschiedenen Körperteilen der Kuh zugeordnet sein, und zwar
verschiedenen Bereichen des Kopfes, des Halses, der Schulter und der Seite der Kuh oder dergl.. Im allgemeinen
kommen sowohl Berührungsschalter als auch berührungslose
Schalter in Frage. Bei der Gruppe der Berührungsschalter
kann insbesondere ein mechanischer Auslöser in Form eines
verschwenkbaren oder verschiebbaren Auslösehebels vorgesehen sein. Dieser kann mit einem mechanischen Schalter
zusammenwirken oder durch einen an ihm befestigten Magneten mit einem Reed-Schalter oder dergl.. Als mit dem Auslösehebel zusammenwirkende mechanische Schalter kommen
insbesondere Endlagenschalter oder Druckknopftaster oder
dergl. in Frage.

Als berührungslose Schalter kommen Lichtschranken mit einer Lichtquelle und einem photoempfindlichen Element (photoempfindlicher Widerstand, photoempfindlicher Transistor oder Thyristor oder dergl.) in Frage. Ferner kommen induktive Endlagenschalter in Frage oder induktive Näherungsschalter. Besonders bevorzugt sind kapazitive Annäherungsschalter. Der Signalgeber kann insbesondere in der Einsperröffnung oder hinter der Einsperröffnung und insbesonders auch am oder im Futtertrog angeordnet sein.

Der Platzeinweisungsfunktion und der Einsperrfunktion können gesonderte Sensoren oder Fühler zugeordnet sein, welche an unterschiedlichen Positionen angeordnet sein können. Für beide Funktionen kann jedoch auch jeweils der gleiche Sensor oder Fühler verwendet werden.

0091972

Die Sensoren oder Fühler, welche von den Tieren betätigt
werden können, können entweder kurzzeitig wirksam sein
oder so lange wirksam sein, solange das jeweilige Tier in
der Einsperröffnung eingesperrt ist. Für beide Typen von
Signalgebern werden weiter unten konkrete Ausführungsbeispiele angegeben. Der Signalgeber des ersten Typs liefert
nur bei der ersten Betätigung beim Einsperren des Tiers
ein kurzzeitiges Signal. Dies kann z.B. praktisch dadurch
geschehen, daß ein Magnet sich an Reed-Schalter vorbeibewegt oder bei pneumatischen Schaltern bei der ersten Betägigung eine Nocke an der Auslösestange vorbeiführt, so
daß diese nach kurzzeitiger Betätigung wieder in die Ausgangslage zurückkehrt. Bei elektrischen Schaltern können
Elemente vorgesehen sein, welche auf eine bestimmte Signalflanke ansprechen,oder aber Differenzierglieder, die
an einer Anstiegsflanke einen Nadelimpuls erzeugen, verbunden mit einem monostabilen Multivibrator. Häufig erzielt man eine einfachere Steuerung dadurch, daß man die
Sensoren oder Fühler derart ausbildet, daß sie durch das
eingesperrte Tier im wirksamen Zustand gehalten werden.
Solange das Tier eingesperrt ist, gibt der Sensor oder
Fühler ein Dauersignal ab. Dabei kann der Fühler oder
Sensor so ausgebildet sein, daß das Signal beendet wird,
sobald das Tier nach beendetem Melkvorgang den Platz verläßt. Bei beiden Sensor- oder Fühlerprinzipien kann eine
gesonderte Verriegelung vorgesehen sein, welche den Sensor oder Fühler nach der Betätigung durch das Tier in
der Betätigungsstellung verriegelt. Diese Verriegelungseinrichtung kann durch ein gesondertes Signal entriegelt
werden, sobald das Tier den Melkstand verläßt. Neben den
oben bereits im einzelnen erwähnten elektrischen Sensoren
oder Fühlern kommen auch rein mechanische Sensoren oder
Fühler in Frage oder pneumatische Fühler oder magnetische
Fühler.

Die Signalübertragung kann durch mechanische Mittel (Seilzug, Stangen oder dergl.) erfolgen oder pneumatisch (Überdruck und/oder Unterdruck), hydraulisch oder aber auch
drahtlos durch akustische oder elektromagnetische Wellen,
wobei auch Lichtleiter in Frage kommen. Bevorzugt sind
Steuersysteme mit gemischter Signalübertragung (mechanisch-
elektrisch; elektrisch-pneumatisch; mechanisch – elektrisch-
pneumatisch; mechanisch-pneumatisch). Als Stellglieder
kommen Relais in Frage, und zwar magnetische Relais oder
Reed-Relais, elektromagnetische Relais, Leistungstransistoren, Thyristoren, Triacs oder mechanisch betätigte elektrische
Schalter. Bei Verwendung von vollständigen oder teilweise
pneumatischen Steuersystemen werden übliche pneumatische
Ventile verwendet, die mechanisch betätigt werden können
oder elektrisch oder pneumatisch. Pneumatische Steuerleitungen oder Stellgliedbetätigungen sind insbesondere
vorteilhaft, wenn die Steuerfunktion mit der Steuerung
des Melkzeugs gekoppelt werden soll.

Weiter unten werden konkrete Ausführungsformen des erfindungsgemäßen Steuersystems erläutert, und zwar Steuerungen elektrischen Typs, mechanischen Typs oder pneumatischen Typs oder gemischte Steuersysteme. Bevor diese konkreten Ausführungsbeispiele erläutert werden sollen,
wird das Steuersystem im folgenden jedoch zunächst grundsätzlich dargestellt.

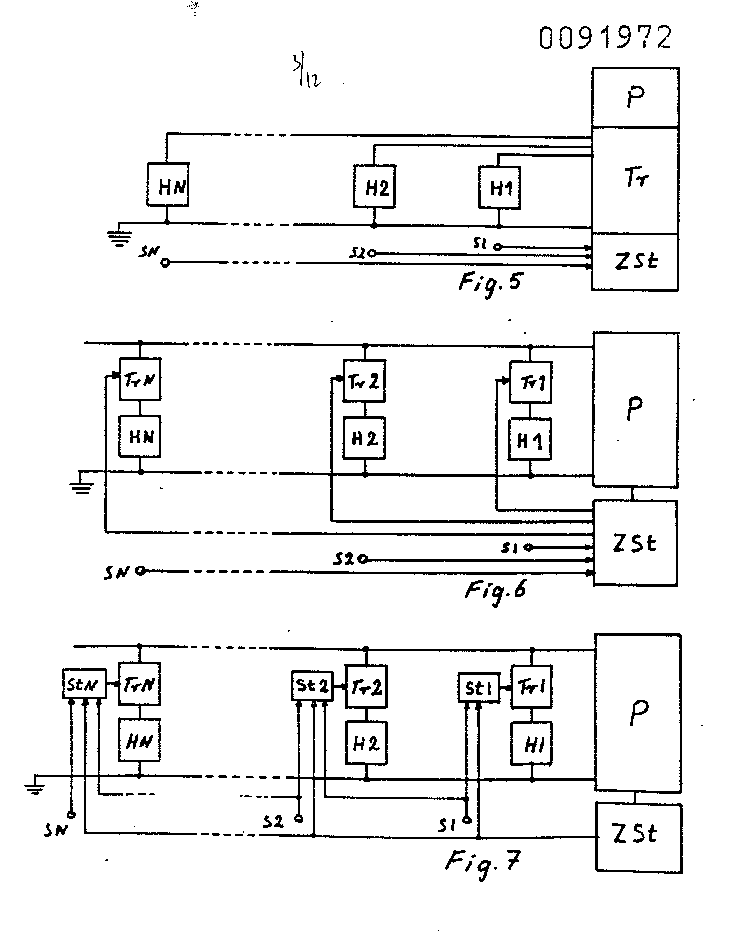

Fig. 5 zeigt in Blockdarstellung den typischen Fall einer
Zentralsteuerung mit gesonderten Antriebsorganen. Dabei
sind die Antriebsorgane H1 bis HN durch gesonderte Energieübertragungspfade (elektrisch, mechanisch, pneumatisch,
hydraulisch oder gemischt) mit der Zentralsteuerungsanlage
verbunden, welche einen Energieversorgungsteil P, einen
Treiberteil Tr und eine Zentralsteuereinheit ZSt umfaßt.

Den einzelnen Standplätzen sind Sensoren S1 bis SN zugeordnet, welche durch Signalübertragungspfade (mechanisch,
elektrisch, pneumatisch, hydraulisch, drahtlos, akustisch
oder elektromagnetisch) mit der Zentralsteuerungseinheit
verbunden sind. In Fig. 5 ist eine elektrische Ausbildung
des Steuersystems mit einer Erdleitung dargestellt. Bei
einer pneumatischen Steuerung treten Rohre an die Stelle
elektrischer Leitungen und anstelle der Erdleitung kann
jeweils ein Auslaßrohr in die Atmosphäre münden. Bei
hydraulischen Steuerungen ist jedem Antriebsorgan H1 bis
HN eine gesonderte Rückführleitung zugeordnet. Ein Ausführungsbeispiel für dieses Zentralsteuersystem ist in
Fig. †2 gezeigt.

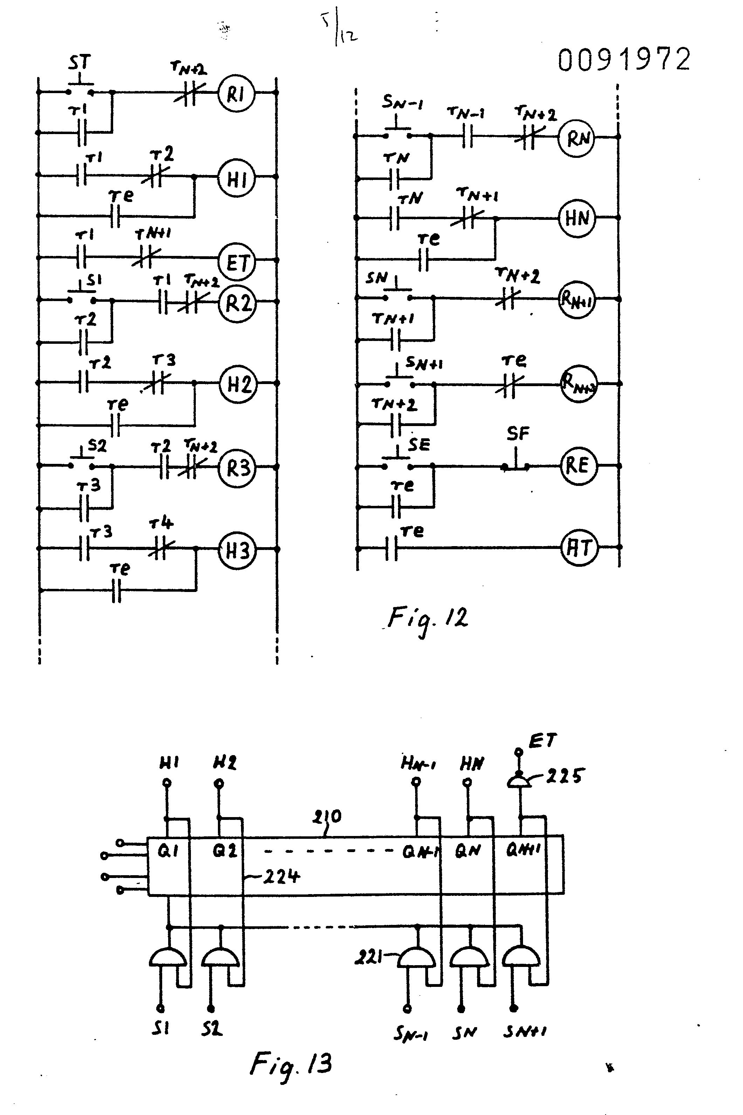

Fig. 6 zeigt ein abgewandeltes Zentralsteuersystem, bei
dem wiederum gesonderte Antriebsorgane vorgesehen sind
und bei dem aber den einzelnen Antriebsorganen Einzeltreibersysteme Tr1 bis TrN zugeordnet sind. Diese liegen
jeweils in Reihenschaltung zum Antriebsorgan und die
einzelnen Reihenschaltungen liegen parallel zueinander
zwischen einem gemeinsamen Energieübertragungspfad und
einer Erdleitung bzw. Rückführleitung oder dergl.. Die
Zentralsteuereinheit ZSt empfängt wiederum die Signale
der Sensoren S1 bis SN und erzeugt gemäß einem inneren
Logiksystem die jeweils dem Betätigungszustand des Melkstandes entsprechenden Betätigungssignale, welche über
gesonderte Signalpfade den Treiberorganen Tr1 bis TrN
zugeführt werden. Ausführungsbeispiele einer elektrisch
oder elektronisch arbeitenden Zentralsteuerlogik für
dieses Steuersystem sind in den Fig. 12 bis 14 gezeigt.
Die Steuersignale werden dabei auf elektrischem Wege den
Treiberorganen zugeführt. Bei letzteren kann es sich um
elektrisch betätigte, pneumatische, hydraulische oder
elektrische Ventile handeln, jenachdem, ob die Antriebsenergie elektrischer, pneumatischer oder hydraulischer
Art ist. Die Steuersignale können auch auf mechanische
Verriegelungs- und Entriegelungsorgane einwirken, falls
der Antrieb mechanisch oder zum Teil mechanisch erfolgt.
Das Treiberorgan Tr1 bis TrN ist gemäß Fig. 6 nur auf einer Seite des Antriebsorgans H1 bis HN angeordnet. Es
kann jedoch auch auf der anderen Seite angeordnet sein
oder auf beiden Seiten. Letzterer Fall tritt regelmäßig
bei pneumatischen und hydraulischen Steuerungen ein, da
sowohl der Zufluß als auch der Abfluß des Strömungsmediums oder Druckmediums gesteuert werden muß. Es können
dabei Absperrventile oder Wegeventile verwendet werden,
z.B. Zwei/Zwei-Wegeventile, welche in einer Stellung den
Durchfluß sperren und in der anderen den Durchfluß öffnen,
nen, oder Drei/Zwei-Wegeventile, welche in Null-Stellung
bei einem einfach wirkenden Antrieb entlüften und je
nach Arbeitsstellung eine Richtungsumkehr erlauben. Für
doppelt wirkende Zylinder kommen auch Vier/Zwei-Wegeventeile oder Vier/Drei-Wegeventile in Frage. Der Durchschnittsfachmann kann diese Ventile je nach den Erfordernissen des gewählten Steuersystems ohne weiteres auswählen.


Bei doppelt wirkenden Antrieben sind allgemein Treiber für
Richtungsumkehr erforderlich.

Bei einer drahtlosen Steuersignalübertragung sind die
Treiberorgane Tr1 bis TrN zusätzlich auch als Empfänger
ausgebildet. In diesem Falle können die gesonderten Treibersignalleitungen entfallen. Es kann aber auch ein Rundsteuersystem verwendet werden, welches den Aufbau gemäß
Fig. 6 hat, jedoch ohne gesonderte Signalleitungen für
die Steuerung der Treiberorgane. Dabei gelangen die Steuersignale über die Hauptenergieleitung zu den Treiberorganen. Es kann dabei jedem Treiberorgan mit Empfänger
eine gesonderte Empfangsfrequenz zugeordnet werden. Andererseits erzeugt die Zentralsteuerungsanlage in üblicher
Weise Frequenzimpulse mit verschiedenen Frequenzen. Diese

0091972

Frequenzimpulse werden von den Empfängern der Treiberorgane durch bekannte Koppelglieder aus den Lastleitungen gefiltert. Rundsteuersysteme sind in großer Zahl bekannt und Einrichtungen hierfür sind im Handel erhältlich.

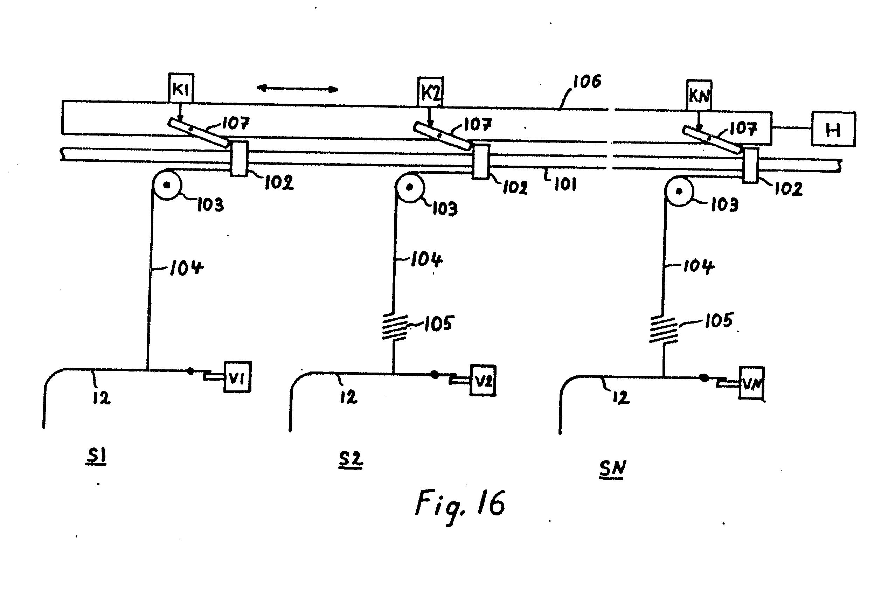

Fig. 16 zeigt eine gemischte mechanische, elektrische
Ausführungsform des Steuersystems gemäß Fig. 6, jedoch
mit gemeinsamem Antrieb und Energiespeichereinrichtungen
in Form von Federn.

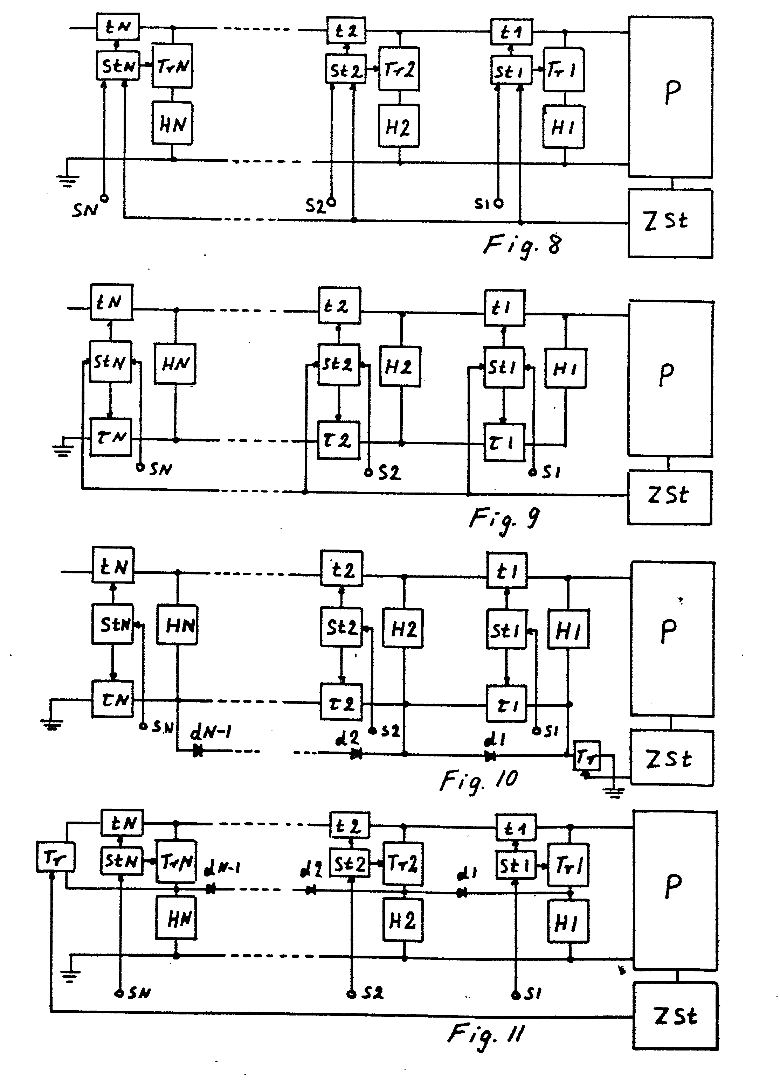

Bei den bisher beschriebenen Ausführungsformen werden
die Sensorsignale über gesonderte Signalleitungen der
Zentralsteuereinheit zugeführt. Bei der Ausführungsform
gemäß Fig. 7 steuert jeder Sensor die zugeordneten Erfolgsorgane direkt an. So steuert z.B. der Sensor S1 den
Antrieb H1 über das Treiberorgan Tr1 und eine Steuereinheit St1 im Sinne der Tiereinsperrung an, während er andererseits über eine gesonderte Leitung den Antrieb H2
über das Treiberorgan Tr2 und eine gesonderte Steuereinheit St2 im Sinne einer Platzfreigabe ansteuert. Der
letzte Sensor SN steuert nur den ihm zugeordneten Antrieb
HN im Sinne einer Einsperrung an. Die Zentralsteuereinheit
dient zur gemeinsamen Ansteuerung aller Einzelsteuereinheiten St1 bis StN zum Zwecke der gemeinsamen Öffnung aller Einsperröffnungen (Entlassen der Tiere) oder zum
Zwecke der Verschließung der Einsperröffnungen (Ruhestellung oder Ausgangsstellung des Melkstandes). Dieses
Steuersystem kann mit der Relaisschaltung gemäß Fig. 1 verwirklicht werden. Eine besonders vorteilhafte elektronische Steuerung dieses Typs ist jedoch in Fig. 15 gezeigt.

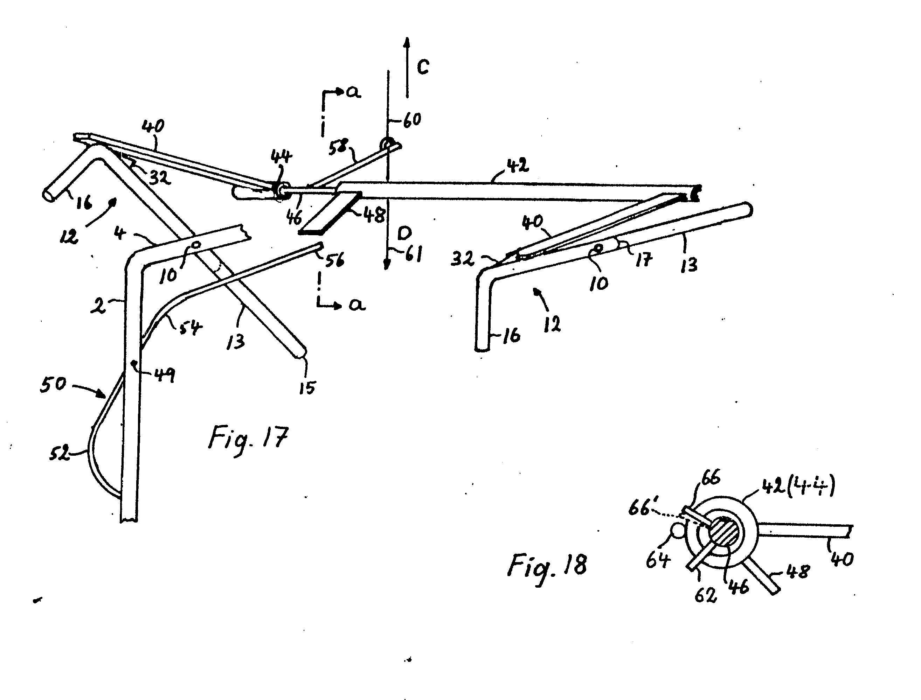

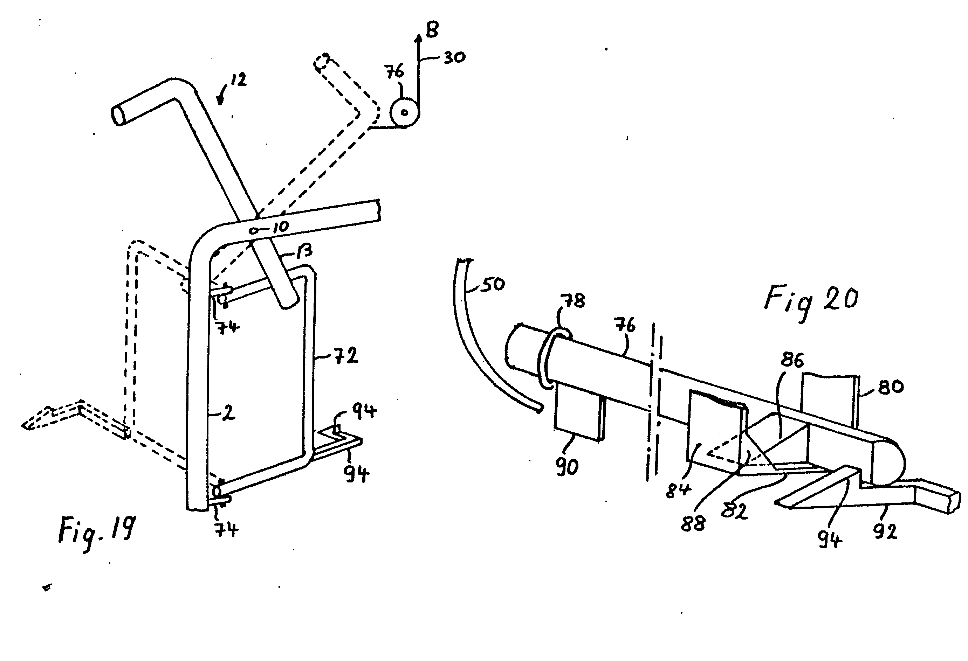

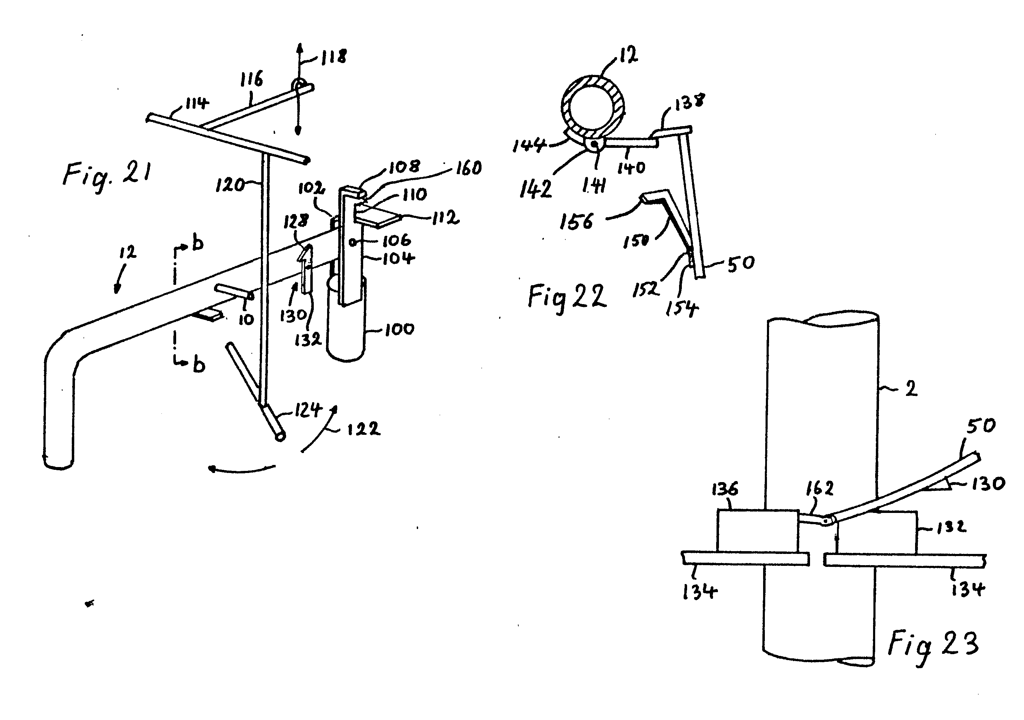

Ein mechanisches Ausführungsbeispiel dieses Systems ist in den Fig. 17 und 18 dargestellt. Dabei ist die Platzeinweisungsfunktion verwirklicht, jedoch nicht die Einzeleinsperrfunktion. Die Signalleitung vom Sensor S1 zur zugeordneten Steuereinheit St1 usw. ist daher jeweils weggelassen. Ferner fällt in diesem Falle die von der Zentralsteuerungseinheit zu den einzelnen Einsperröffnungen führende Signalübertragungsstrecke mit der Betätigungsenergie-Übertragungsstrecke zusammen. Ein weiteres, rein mechanisches Ausführungsbeispiel für dieses Steuersystem ist in den Fig. 19 und 20 gezeigt. Dabei ist wiederum eine gemeinsame Einsperrung aller Tier durch eine Zentralsteuerung vorgesehen, so daß die Signalübertragung z.B. vom Sensor S1 zur Steuereinheit St1 weggelassen wird. Außerdem zeigt dieses weiter unten näher erläuterte Ausführungsbeispiel den Fall eines gemeinsamen Antriebsorgans für alle Einsperröffnungen und einer Energiespeicherung mit Hilfe von Federn, welche der Platzeinweisungsbetätigung dienen. Ein weiteres, rein mechanisches Ausführungsbeispiel, jedoch mit Selbsteinsperrfunktion, ist in den Fig. 21 bis 23 gezeigt. Dabei ist wiederum ein gemeinsamer Antrieb vorgesehen, wobei die Energiespeicherung jedoch durch Gewichte erfolgt.

Bei den bisher beschriebenen Steuersystemen befinden sich sämtliche Treiberorgane in Parallelschaltung zueinander (in Reihe mit den parallel zueinander geschalteten Antriebsorganen). Man kann jedoch die Treiberorgane auch in Reihe schalten. Fig. 8 zeigt ein derartiges Steuersystem. Dabei sind zusätzliche Treiberorgane t1 bis tN in der Hauptantriebsleitung oder Energieversorgungsleitung für die Einzelantriebe H1 bis HN vorgesehen, und zwar jeweils an einer Stelle, welche in Energieflußrichtung hinter der Anknüpfungsstelle des Einzelantriebs liegt. Das Treiberorgan t1 liegt z.B. unmittelbar hinter der Abzweigstelle für das Antriebsorgan H1. Ferner sind wiederum
die bereits beschriebenen, parallelgeschalteten Treiberorgane Tr1 bis TrN vorgesehen. Jedem Standplatz ist wiederum ein Sensor S1 bis SN zugeordnet, dessen Signal direkt
einer Einzelsteuereinheit St1 bis StN zugeführt wird. Diese steuert die beiden zugeordneten Treiberschaltungen t1,
Tr1 usw. an. Die Treiberorgane Tr1 bis TrN dienen der
Selbsteinsperrung, ausgelöst vom Sensor,während die Treiberorgane t1 bis tN der Platzeinweisung dienen. Die Treiberorgane Tr1 bis TrN können wiederum auf der anderen Seite des Antriebsorgans H1 bis HN angeordnet sein oder auf
beiden Seiten desselben. Die Treiberorgane t¹ bis tN können auch jeweils vor der Anknüpfungsstelle des Antriebs
angeordnet sein. Zur gemeinsamen Entlassung der Tiere und
zur  Wiederherstellung der Ausgangsposition ist eine Zentralsteuereinheit ZSt vorgesehen, welche über eine gemeinsame Steuerleitung sämtliche Steuereinheiten St1 bis StN
ansteuert. Bei dem Steuersystem gemäß Fig. 8 kann naturgemäß auch die Zentralsteuereinheit gemäß Fig. 6 vorgesehen sein, so daß die Sensorsignale direkt an die Zentralsteuereinheit gegeben und dort verarbeitet werden,
während die Betätigungssignale entweder direkt den Treiberorganen Tr1, t1 usw. zugeführt werden oder über Einzelsteuereinheiten St1 usw.. Spezielle Ausführungsbeispiele dieses Steuersystems werden weiter unten erläutert.

Fig. 9 zeigt ein Steuersystem, bei dem die Treiberschaltungen ausschließlich in Reihe geschaltet sind, und zwar
einmal die Treiberschaltungen t1 bis  tN sowie weitere
Treiberschaltungen $\tau$1 bis $\tau$N. Die Treiberorgane t1 bis
1N dienen der Platzeinweisung, während die Treiberorgane
$\tau$1 bis $\tau$N der Selbsteinsperrung dienen. Im übrigen gelten
für die Steuersysteme gemäß den Fig. 8 und 9 entsprechend
die Ausführungen, welche für die Steuersysteme gemäß den
Fig.5 bis 7 gemacht wurden.

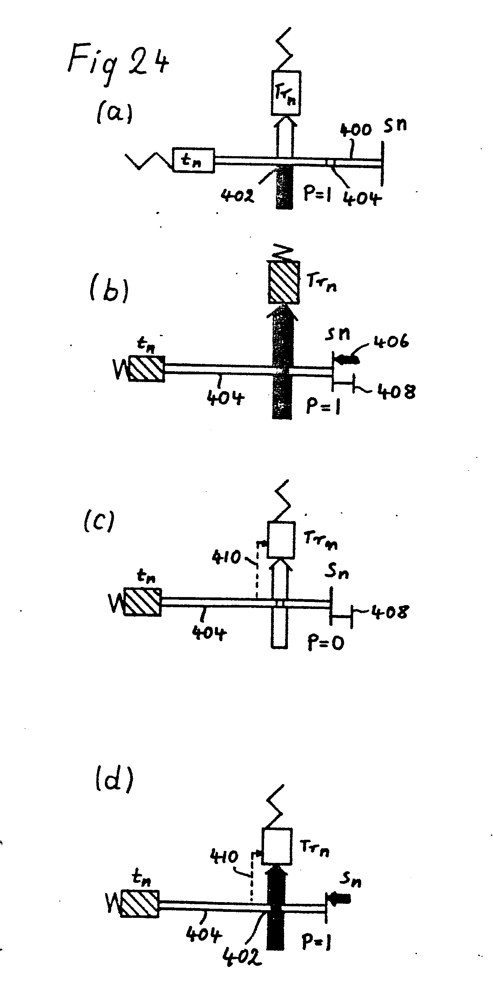

Bei den Steuersystemen der Fig. 8 und 9 erfolgt die gemeinsame Ansteuerung zum Zwecke der Entlassung oder der Wiederherstellung der Ausgangsposition durch eine Zentralsteuereinheit über eine gesonderte, gemeinsame Steuerleitung. Wie bereits ausführlich erläutert, können die Steuersignale auch über die Hauptenergieleitung zugeführt werden. Eine weitere Abwandlungsmöglichkeit ergibt sich dadurch, daß man eine gesonderte Leitung vorsieht, welche zur Führung der Antriebsenergie dient. Derartige Steuersysteme sind in den Fig. 10 und 11 gezeigt. Es handelt sich um Abwandlungen der Steuersysteme gemäß den Fig. 8 und 9. Dabei sind die Antriebsorgane H1, H2, ... HN auf der einen oder anderen Seite jeweils mit einer zusätzlichen, gemeinsamen, energieführenden Leitung versehen. Diese führt jedoch die Energie nur in einer Richtung, und zwar aufgrund von die Energieleitung in der anderen Richtung sperrenden Organen (z.B. Rückschlagventile, Leistungsdioden, steuerbare Dioden oder dergl.) d1 bis $d_{N-1}$. Ferner ist in dieser zusätzlichen Energieführungsleitung eine von der Zentralsteuereinheit ZSt angesteuerte, gesonderte Treibereinheit Tr vorgesehen. Die Steuersysteme gemäß den Fig. 8 bis 11 eignen sich vorzüglich für pneumatische Steuerungen. Ein Ausführungsbeispiel einer pneumatischen Steuerung, welche zum Steuersystem gemäß Fig. 8 gehört, ist in Fig. 24 gezeigt. Weitere, konkrete Ausführungsbeispiele werden weiter unten erläutert.

Für die Steuersysteme der Fig. 10 und 11 gelten die bereits bei den Systemen der Fig. 5 bis 7 gemachten Ausführungen und Erläuterungen sinngemäß.

- 37 -                                    0091972

Bei den Steuersystemen der Figuren 5 bis 11 sind mannigfache Änderungen möglich. So können z.B. bei dem Steuersystem der Figur 8 die Treiberorgane t1 bis tN auch in
der anderen Hauptenergieleitung liegen, und zwar wiederum
zwischen den Anschlüssen zweier Antriebsorgane und wiederum entweder in Zuordnung zum einen oder anderen Antriebsorgan vor oder hinter demselben. Dabei kann auch
die Verbindung des Energieversorgungsteils P mit dem Erd-
anschlⅬ3 des Antriebsorgans H1 eliminiert werden. Desgleichen können auch die Reihenschaltungen von Treiberorganen
t1 bis tN bzw. $\mathcal{T}$ 1 bis $\mathcal{T}$N jeweils vor oder hinter den
Anknüpfungsstellen der zugeordneten Antriebsorgane liegen
(Figur 9). Ferner können bei diesem System zusätzliche
Treiberorgane in den Parallelleitungen der Antriebsorgane,
und zwar vor und/oder hinter diesen liegen. Die gleichen
Abwandlungen sind auch bei den Steuersystemen der Figuren
10 und 11 möglich.

Bisher wurden die Steuersysteme im Hinblick auf gesonderte
Antriebseinrichtungen erläutert. Sie können jedoch auch
zur Steuerung im Falle eines gemeinsamen Antriebs verwendet werden. Dabei treten anstelle der Antriebsorgane H1
bis HN Schaltorgane und/oder Kupplungsorgane für die Betätigungsenergieweiterleitung bzw. -speicherung. Die Zentralsteuersysteme der Figuren 5 und 6 sind ohne weiteres
für alle oben beschriebenen Steuerverfahren eines Melkstandes anwendbar, umschaltbar oder programmierbar. Das
gleiche gilt jedoch auch für die Steuersysteme der Figuren 7 bis 11. Hierbei sind lediglich geringfügige Abwandlungen erforderlich. Bei gemeinsamer Einsperrung aller
Tiere wird z.B. die Verbindungsleitung zwischen S1 und St1
(Figur 7) eliminiert. Bei Einsperrung des nächsthinteren
Tieres und Öffnung des nächstvorderen Platzes muß beim
Steuersystem der Figur 7 lediglich das Signal des Sensors
S2 anstatt zu St2 nunmehr zur Steuereinheit St1 geführt werden. Weitere Abwandlungen der Ausführungsform gemäß
Figur 7 sind dem Durchschnittsfachmann mit den oben gegebenen Erläuterungen ohne weiteres möglich. Bei den
Steuersystemen der Figuren 8 bis 11 sind Abwandlungen
der Platzeinweisungsfunktion z.B. dadurch möglich, daß
man einen Teil der in Reihe geschalteten Treiberschaltungen t1 bis tN wegläßt, z.B. jedes zweite Treiberorgan. Ferner kann wiederum das Signal, z.B. des Sensors
S2 anstatt zur Steuereinheit St2 zur Steuereinheit St1
geführt werden, um hierdurch die Selbsteinsperrung in
eine Einsperrung des nächsthinteren Tieres umzuwandeln,
usw., usw.. Wenn man bei der Ausführungsform der Figur 9
das Treiberorgan $\tau$n eines Steuermoduls n auf der anderen Seite (auf der rechten Seite) der Anknüpfungsstelle
des Antriebsorgans Hn anordnet und das Treiberorgan Tr1
wegläßt, so wird dabei z.B. durch den Sensor S2 die Öffnung des Standplatzes S3 und zugleich die Einsperrung
beim Standplatz S1 angesteuert.

Im folgenden sollen konkrete Ausführungsformen der erfindungsgemäßen Steuersysteme erläutert werden. Bei den
verwendeten Logiksystemen handelt es sich meist um Folgesteuersysteme. Man kann die gesamte Logik-

0091972

schaltung mit Relais aufbauen. Dieser Schaltungsaufbau ist besonders bei kleineren Melkständen bevorzugt. Die Steuerung der sukzessiven Platzfreigabe bzw. der sukzessiven Einsperrung bzw. der sukzessiven Entlassung erfolgt vorzugsweise mit einem Zeitrelais oder Sequenzrelais (Programmgeber).

Dabei ist auf einer von einem Synchronmotor angetriebenen Welle oder Trommel eine Vielzahl von einzeln einstellbaren Kontaktpaaren vorgesehen. Durch richtiges Einstellen der Position der Kontakte und durch Wahl der Drehgeschwindigkeit des Synchronmotors kann die zeitliche Abfolge der Schaltvorgänge frei gewählt werden und dem ungünstigsten Verhalten der Kühe im Melkstand angepaßt werden. Mit einer solchen Einrichtung kann ein Melkstand auf einfachste Weise gesteuert werden. Es soll erwähnt werden, daß das zeitliche Verhalten eines solchen Programmgebers auch mechanisch nachgebildet werden kann, und zwar durch eine drehbare Stange, welche sich über sämtliche Standplätze erstreckt und für jeden Standplatz Auslösestifte aufweist, welche jeweils ein Umfangsrichtung gegeneinander versetzt sind. Diese Auslösestifte können im Falle der Platzeinweisung auf Verriegelungseinrichtungen entriegelnd einwirken (insbesondere vorteilhaft bei Fangrohren, deren Schwerpunkt hinter dem Anlenkbolzen liegt).

Für alle anderen Steuersysteme sind Relaisschaltungen erforderlich. Im folgenden sollen verschiedene Relaissteuerungen erläutert werden, und zwar für die Fangrohre in Kombination mit dem Eingangstor und dem Ausgangstor. Es wird dabei angenommen, daß das Ausgangstor und das Eingangstor jeweils als Schiebetore ausgeführt sind und in zur Horizontalen geneigten Führungsschienen laufen und somit unter Schwerkrafteinwirkung in die Schließposition gelangen. Dies ist besonders günstig, da die Tiere hierdurch nicht verletzt werden. Sie werden daher durch Zugeinrichtungen, ähnlich den Hubmagneten, jeweils in Öffnungsrichtung gezogen und dort gehalten und sie rollen bei Entregung oder Abschaltung der Zugvorrichtung selbsttätig in die Schließposition zurück.

Im folgenden soll eine Relaissteuerung für einen Fischgrätmelkstand mit sensorgesteuerter, sukzessiver Platzeinweisung und Selbstfangfunktion sowie mit gemeinsamer Entlassung der Tiere und für das Eingangstor und Ausgangstor
anhand der Fig.12 erläutert werden. Jeder Einsperröffnung
ist ein gesonderter Einzelantrieb H1 bis HN zugeordnet.
Jedem Einzelantrieb ist ein Betätigungsrelais R1 bis RN
zugeordnet. Jedes Relais ist als Halterelais ausgebildet.
Im Erregerkreis des ersten Relais R1 ist ein Starttastschalter ST vorgesehen. Er wird durch den Selbsthaltekontakt r1 überbrückt. Ähnliche Selbsthaltekontakte r2 bis
rN sind auch bei den anderen Halterelais vorgesehen. Weiterhin weist jede der Relais R1 bis RN einen normalerweise
offenen Kontakt r1 bis rN im Erregerkreis der zugeordneten
Antriebseinrichtung H1 bis HN auf. Ferner liegen in den
Erregerkreisen der Relais R2 bis RN normalerweise offene
Kontakte r1 bis $r_{N-1}$ der Relais R1 bis $R_{N-1}$. Im Erregerkreis des Eingangstors ET liegt ebenfalls ein normalerweise offener Kontakt r1 des ersten Relais R1. Ferner ist
ein zusätzliches Relais $R_{N+1}$ vorgesehen, welches als Halterelais ausgebildet ist und durch einen Tastschalter SN
erregt werden kann. Dieses Relais $R_{N+1}$ weist je einen
normalerweise geschlossenen Kontakt $r_{N+1}$ im Erregerkreis
des Eingangstors und im Erregerkreis des Antriebs HN auf.
In dem Erregerkreis der Antriebe H1 bis $H_{N-1}$ befindet sich
ebenfalls jeweils ein normalerweise geschlossener Kontakt
r2 bis rN. Ferner ist ein weiteres Relais $R_{N+2}$ vorgesehen,
welches wiederum als Selbsthalterelais ausgebildet ist
und durch den Tastschalter SN erregbar ist. Je ein normalerweise geschlossener Kontakt $r_{N+2}$ des Halterelais $R_{N+2}$
befindet sich in den Erregerkreisen der Relais R1 bis $R_{N+1}$.
Schließlich befindet sich in den Erregerkreisen der Relais
R2 bis $R_{N+1}$ Sensorenschalter S1 bis SN der Einsperröffnungen 1 bis N. Ferner ist ein Entlassungsrelais RE vorgesehen, in dessen Erregerkreis sich ein Tastschalter SE
befindet und das als Halterelais ausgebildet ist. Ferner befindet sich in seinem Erregerkreis ein normalerweise geschlossener Tastschalter SF, welcher die Relaisschaltung in den Ausgangszustand zurückbringt. Das Relais RE weist eine Vielzahl von normalerweise offenen
Kontakten re auf, welche zur unabhängigen Ansteuerung der
Antriebe H1 bis HN sowie zur Steuerung des Ausgangstors
AT dienen.

Außerdem weist das Relais RE einen normalerweise geschlossenen Kontakt $\overline{re}$ auf, welcher im Erregerkreis des Relais
$R_{N+2}$ liegt.

Diese Relaisschaltung arbeitet folgendermaßen. Zunächst
wird der Startschalter ST betätigt. Das Relais R1 zieht
an. Der Haltekontakt r1 wird geschlossen und der Antrieb
H1 wird erregt, so daß das Fangorgan der ersten Einsperröffnung geöffnet wird. Gleichzeitig wird das Eingangstor
ET geöffnet. Nun ist der Melkstand vorbereitet. Das erste
Tier betritt den hintersten Standplatz und betätigt den
Sensor S1. Hierdurch wird das Halterelais R2 erregt und
der Antrieb H2 wird ebenfalls erregt und das Fangorgan
der zweiten Einsperröffnung wird geöffnet. Gleichzeitig
wird der normalerweise geschlossene Kontakt r2 im Erregerkreis des Antriebs H1 geöffnet, so daß das Fangorgan der
ersten Einsperröffnung in seine Schließposition fällt und
sich dabei selbsttätig verriegelt. Dieser Vorgang wiederholt sich nun bis zur Betätigung des Sensors SN. Hierdurch wird das zusätzliche Relais $R_{N+1}$ erregt, wodurch
der Antrieb HN abgeschaltet wird. Ferner wird gleichzeitig das Eingangstor ET geschlossen. Nun sind alle Tiere
des Melkstandes eingesperrt und sowohl das Ausgangstor
als auch das Eingangstor sind geschlossen. Die Relais R1 bis $R_{N+1}$ sind jedoch noch allesamt erregt. Daher kann nun das zusätzliche Relais $R_{N+2}$ betätigt werden, und zwar nach einer Zeitverzögerung durch einen Schalter $S_{N+1}$ des Relais $R_{N+1}$. Durch die Erregung des Relais $R_{N+2}$ werden nun die Relais R1 bis $R_{N+1}$ entregt. Das Relais $R_{N+2}$ wird jedoch durch den Selbsthaltekontakt gehalten. Nun können die im Melkstand eingesperrten Tiere gemolken werden. Nach beendetem Melkvorgang werden die Tiere gemeinsam entlassen. Hierdurch wird der Entlassungsschalter SE betätigt, wodurch das Selbsthalterelais RE erregt wird. Hierdurch werden sämtliche Einzelantriebe H1 bis HN sowie der Antrieb des Ausgangstors AT erregt. Sämtliche Fangorgane werden hochgeschwenkt und das Ausgangstor wird geöffnet. Nun können die Tiere den Melkstand verlassen. Ferner wird der normalerweise geschlossene Kontakt $\overline{re}$ im Erregerkreis des Halterelais $R_{N+2}$ geöffnet, so daß dieses Relais abfällt. Schließlich wird der Endschalter SF betätigt, wodurch das Relais RE abfällt und wiederum sämtliche Fangorgane sowie das Ausgangstor in Schließposition gebracht werden. Nun ist der Melkstand für einen neuen Melkvorgang bereit.

Die beschriebene Relaissteuerung kann leicht zur Verwirklichung der anderen, oben beschriebenen Betriebsweisen umgestaltet werden. Durch eine Verlagerung der Kontakte kann jeweils die relativ zum Sensor nächsthintere Einsperröffnung geschlossen werden, während die relativ zum Sensor nächstvordere Einsperröffnung geöffnet wird. Ferner können nach der Platzeinweisung sämtliche Einsperröffnungen gleichzeitig geschlossen werden, und zwar z.B. durch den Sensor SN der letzten Einsperröffnung. Hierzu muß lediglich in den Erregerkreisen der Antriebe H1 bis HN je ein normalerweise geschlossener Kontakt des Halterelais $R_{N+1}$ vorgesehen sein. Die sukzessiven Öffnungen und Schließungen der Fangorgane können bei der Platzeinweisung, der Einsperrung und der Entlassung auch nach einem starren Programm mit Hilfe einer Zeitsteuereinrichtung gesteuert werden.

Die Relaissteuereinrichtung sollte vorzugsweise nicht im Melkraum untergebracht werden, da hier aufgrund der Ausdünstungen der Tiere aggressive Gase vorhanden sind, welche die Schaltkontakte beeinträchtigen können. Daher wird die Steueranlage vorzugsweise in einem Nebenraum untergebracht. Zur Erhöhung der Störungsfreiheit kann man anstelle der Relaissteuerung auch eine ruhende, elektronische Steuerung vorsehen.

Fig. 13 zeigt eine Ausführungsform einer ruhenden, elektronischen Steuereinrichtung 200. Diese umfaßt als Zentralbauteil ein Schieberegister 210 mit parallelen Ausgängen Q1 bis $Q_{N+1}$. Die Ausgänge Q1 bis QN sind den Einsperröffnungen 1 bis N zugeordnet. Ferner weist das Schieberegister 210 einen Taktsignaleingang T auf, welcher mit einer Wählschaltung 220 verbunden ist. Diese umfaßt je ein UND-Glied 221 für die Sensoren S1 bis SN sowie ein zusätzliches UND-Glied 222 für den Startschalter ST. Die Ausgänge der UND-Glieder 221, 222 sind zu den Eingängen eines weiteren UND-Gliedes 223 geführt. Ferner ist jeder der Ausgänge Q1 bis $Q_{N+1}$ des Schieberegisters 210 über eine Rückkopplungsleitung 224 mit einem zweiten Eingang der UND-Glieder 221, 222 verbunden. Ferner weist das Schieberegister Eingänge auf, mit denen sämtliche Ausgänge gesetzt oder zurückgesetzt werden können. Darüberhinaus sind Eingänge K und I vorgesehen, über die das Schieberegister in den Ausgangszustand versetzt werden kann, indem z.B. der Ausgang Q1 ein L-Signal aufweist, während alle anderen Ausgänge ein O-Signal aufweisen. Alternativ können jedoch

- 45 -   0091972

auch die beiden ersten Eingänge Q1 und Q2 L-Signale aufweisen. Zur Vereinfachung der Einstellung der Ausgangssituation können aber auch parallele Eingänge vorgesehen
sein, die mit einer Codierschaltung gleichzeitig angesteuert werden können. Die Ausgänge Q1 bis QN sind mit
den Einzelantriebseinrichtungen H1 bis HN verbunden. Der
Ausgang $Q_{N+1}$ ist über einen Inverter 225 mit dem Antrieb
des Eingangstors ET verbunden. Der Entlassungsschalter SE
kann mit dem CLEAR-Eingang oder mit der Codierschaltung
verbunden sein, derart, daß sämtliche Ausgänge Q1 bis
$Q_{N+1}$ gleichzeitig auf L-Signal gesetzt werden. Vorstehend
wurde eine ruhende Steuerung für ein Einsperrgitter mit
Einzelantrieben beschrieben. Durch eine geringfügige Abwandlung kann es jedoch auch für ein Einsperrgitter mit
gemeinsamem Antrieb ausgebildet werden (Fig.16). Hierzu muß lediglich der Ausgang Q1 mit dem Verriegelungsorgan V1 verbunden werden, während der Ausgang Q2 mit dem Verriegelungsorgan V2 und mit der Kupplung K1 verbunden ist. Der Ausgang Q3 ist mit der Verriegelung V3 und der Kupplung K2
verbunden, usw.. Der Ausgang N ist schließlich mit der
Verriegelung VN und der Kupplung $K_{N-1}$ verbunden, während
die Verriegelung KN mit dem Ausgang $Q_{N+1}$ verbunden ist.


Die Verwendung eines Schieberegisters hat den Vorteil, daß
mehrere Schieberegister auf einfache Weise in Reihe geschaltet werden können, so daß durch einfache Maßnahmen
Steuereinrichtungen für beliebig große Melkstände zusammengekoppelt werden können. Alternativ kann auch eine
Schieberegistereinrichtung für die in der Praxis vorkommende, größtmögliche Anzahl von Einsperröffnungen eines
Melkstandes ausgelegt sein. Eine solche Steuerungseinrichtung kann sodann einheitlich für verschiedenste Melkstände hergestellt werden.

Bei doppelreihigen Fischgrätmelkständen kann eine einzige
Steuereinrichtung durch eine Wählschaltung wahlweise mit
dem linken Einsperrgitter oder dem rechten Einsperrgitter
verbunden werden.

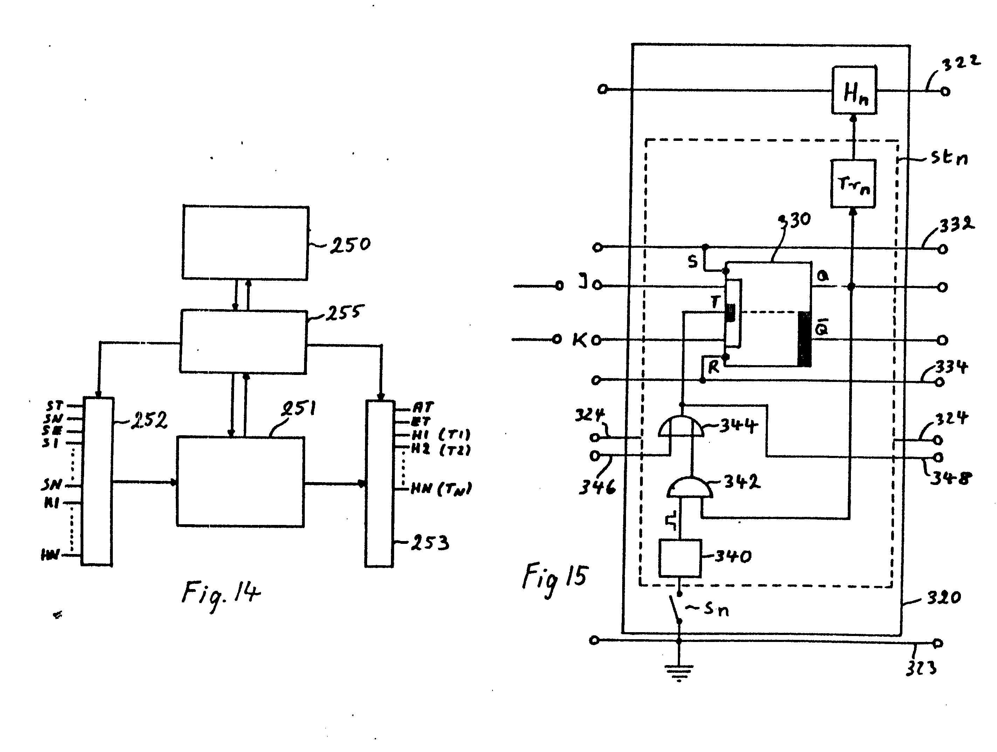

Bei sehr großen Melkständen kann auch die beschriebene,
ruhende Logiksteuerung noch zu aufwendig sein. Man kann
daher gemäß Fig. 14 eine Mikroprozessorsteuerung vorsehen.
Diese umfaßt einen Programmspeicher 250, in dem das Folgesteuerprogramm für die einzelnen Antriebe H1 bis HN oder
für die Verriegelungen V1 bis VN und Kupplungen K1 bis KN
gespeichert ist. Die ausgelesenen Programmbefehle werden
einem zentralen Mikroprozessor 251 seriell durch ein Steuerwerk 255 zugeführt. Der Dateneingang des Mikroprozessors
ist mit dem seriellen Ausgang einer Eingangswählschaltung
252 verbunden. Diese weist eine Vielzahl von parallelen
Eingängen auf, welche mit den verschiedensten, zur Steuerung erforderlichen Signalquellen verbunden ist, z.B.mit
dem Startschalter, den Sensoren S1 bis SN, dem Entlassungsschalter SE sowie den Antrieben H1 bis HN. Der Datenausgang des Mikroprozessors 251 ist mit einem seriellen Eingang einer Ausgangssteuerschaltung 253 verbunden, welche
eine Vielzahl von parallelen Ausgängen aufweist. Diese
sind mit den Einzelantrieben H1 bis HN und mit den Antrieben für das Eingangstor ET und das Ausgangstor AT verbunden. Eine solche Steuereinrichtung kann ohne weiteres
auch für ein Einsperrgitter mit gemeinsamem Antrieb verwendet werden.

Es kommen verschiedenste Mikroprozessoren bekannter Bauart
in Frage. Im einfachsten Fall enthält der Mikroprozessor
nur eine einzige logische Verarbeitungsschaltung, in der
alle Daten seriell verarbeitet werden. Da es sich ausschließlich um Binärdaten handelt und da die Signale aus-

schließlich L-Zustand und O-Zustand haben können, kann
die logische Datenverarbeitungsschaltung äußerst einfach
aufgebaut sein. Sie umfaßt lediglich ein Eingangsflipflop sowie ein UND-Glied für die erforderlichen UND-Verknüpfungen und ein ODER-Glied für die erforderlichen
ODER-Verknüpfungen. Ein erster Zwischenspeicher ist über
je eine Torschaltung mit dem Ausgang des UND-Gliedes verbunden sowie mit der den Ausgang des Eingangsflipflops
mit dem Eingang des UND-Gliedes verbindenden Leitung. Der
Ausgang des ersten Zwischenspeicher-Flipflops ist einerseits mit dem zweiten Eingang des UND-Gliedes und andererseits mit einem ersten Eingang des ODER-Gliedes verbunden.
Dem ODER-Glied ist ein zweites Zwischenspeicher-Flipflop
zugeordnet, dessen beide Eingänge über je eine Torschaltung einerseits mit dem Ausgang des ODER-Gliedes und andererseits mit O-Signal verbunden sind, während der Ausgang des Flipflop-Zwischenspeichers einerseits mit dem
zweiten Eingang des ODER-Gliedes und andererseits über
eine weitere Torschaltung mit dem Ausgangsanschluß verbunden ist.

Eine solche Mikroprozessorsteuerung hat den Vorteil, daß
sie auf einfachste Weise verschiedensten Melkständen und
Melkstandsteuerungen angepaßt werden kann, so daß die
jeweiligen Bedingungen und die jeweiligen Wünsche am Ort
auf einfachste Weise berücksichtigt werden können. Zur
Änderung des Steuervorgangs im Sinne der Auswahl einer
der oben beschriebenen Betriebsweisen und zur nachträglichen Erweiterung des Melkstandes oder dergl. muß lediglich das Programm geändert werden. Der Mikroprozessor
251 errechnet die jeweiligen Verknüpfungsgleichungen. Das
dazu erforderliche Programm kann von jedem Programmierer
leicht erstellt werden.

Bei den bisher beschriebenen Steuereinrichtungen ist noch eine Vielzahl von Leitungen erforderlich, welche den einzelnen Einsperröffnungen zugeführt werden müssen. Bei einer Melkstandsteuerung mit Platzeinweisung, Selbstfanggitter und Sensoren sowie Einzelantrieben ist jedem Antrieb eine Steuerleitung zugeordnet, während jeder Sensor über eine Signalleitung mit der zentralen Steuereinheit verbunden sein muß. Bei einem häufig vorkommenden Doppelzwölf-Melkstand müssen daher mindestens 48 Leitungen verlegt und angeschlossen werden. Zur Verringerung des Leitungsaufwandes und der Einbaukosten kann die erfindungsgemäße elektrische Steuereinrichtung auch mit einer Multiplex-Datenübertragungseinrichtung verknüpft werden. Hierzu ist in bekannter Weise der zentralen Steuereinrichtung ein Multiplexer zugeordnet, der die parallelen Eingangs- und Ausgangssignale in serielle Eingangs- und Ausgangssignale umwandelt. Jeder Einsperröffnung ist ein Übertragungskanal zugeordnet. An jeder Einsperröffnung befindet sich eine periphere Steuereinheit, welche auf die Signale im jeweiligen Kanal anspricht bzw. die Rückmeldesignale auf den jeweiligen Kanal ausgibt. Bei jedem Übertragungskanal sind Signalplätze für die Antriebssteuerung, die Antriebsrückmeldung und das Sensorsignal vorgesehen. Bei Verwendung einer solchen Multiplex-Datenübertragungseinrichtung benötigt man für den gesamten Melkstand, gleich welcher Größe, maximal nur eine Steuersignalleitung, eine Taktsignalleitung und eine Synchronisationssignalleitung. Diese drei Leitungen sind für sämtliche Einsperröffnungen vorgesehen. Die Montage ist daher äußerst vereinfacht.

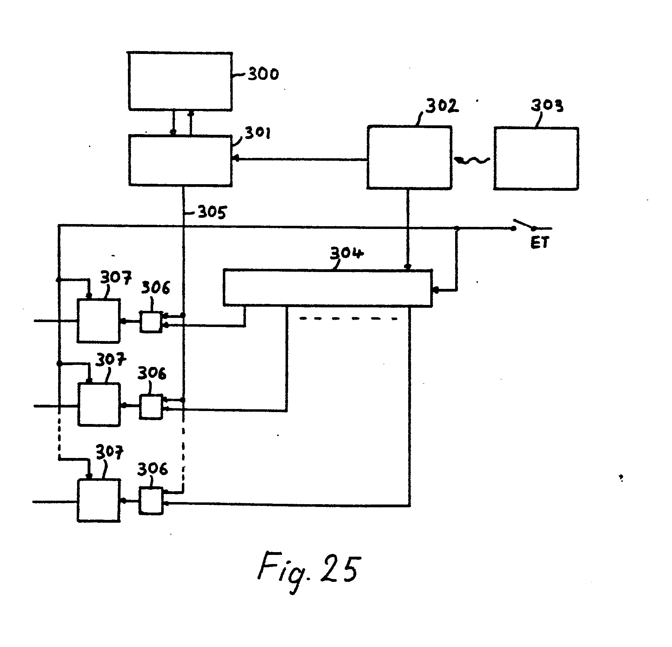

Die Multiplex-Datenübertragungseinrichtung ist insbesondere vorteilhaft, falls der Melkstand mit zusätzlichen Steuerfunktionen ausgerüstet werden soll. Als zusätzliche Steuerfunktionen kommen insbesondere die Steuerungen des
Melkzeugs in Frage, dem Steuersignale und Rückmeldesignale zugeordnet sind. Insbesondere kann das Melkzeug automatisch abgenommen werden. Ferner kann nach beendetem Melkvorgang auch der Melkstand automatisch gespült werden.
Ferner können Kotbeseitigungseinrichtungen mit der zentralen Steuerung gesteuert werden sowie wahlweise ein- und
ausschwenkbare sowie durch Solenoidventile ein- und ausschaltbare Euterwaschgeräte. Daher eröffnet der erfindungsgemäße Melkstand erstmalig den Weg zu einer Vollautomatisierung des Melkvorgangs. Besonders vorteilhaft ist die
Verbindung des erfindungsgemäßen Melkstandes mit einer
automatischen Fütterungsanlage. Häufig werden die Kühe mit
Hilfe einer zentralen Computersteuerung mit Kraftfutter gefüttert. Hierzu trägt jede Kuh eine Kennungsmarke. Die
Fütterungsstation befindet sich im Stall. Sie weist einen
Kennungsempfänger auf, welcher den Speicher der Computersteuerungseinrichtung ansteuert. In diesem Speicher sind
bei den jeweiligen Adressen die Fütterungsdaten für die
einzelnen Tiere gespeichert. Die Ausgangssignale werden
einer Kraftfutterförder- oder -dosiereinrichtung zugeführt.
Bisher wird zusätzlich zum Melkstand noch eine gesonderte,
computergesteuerte Kraftfutterstation vorgesehen. Für
24 Kühe ist dabei je eine solche Station erforderlich, so
daß bei einer größeren Anzahl von Tieren sehr viele
Kraftfutterstationen vorgesehen sein müssen. Hierbei ergeben sich wiederum die bekannten Probleme aufgrund des
Futterneides, da Tiere, welche wenig Kraftfutter erhalten,
versuchen werden, andere Tiere von der Kraftfutterstation
zu verdrängen. Es ist daher nicht gewährleistet, daß eine
Kuh so lange an der Fütterungsstation verbleibt, bis sie
die ihr zugedachte Kraftfutterdosis verzehrt hat. Alle
diese Probleme können mit dem erfindungsgemäßen Einsperrgitter auf äußerst einfache Weise gelöst werden. Es ist daher lediglich erforderlich, den Melkstand auch als Kraftfutterstation zu verwenden. Hierzu wird jeder Standplatz
mit einer Kraftfutterschale und einer Kraftfutterdosiereinrichtung versehen. Die Kraftfutterfunktion kann mit
allen Standplätzen eines Melkstandes verbunden sein oder
nur mit einer Reihe eines Doppelmelkstandes oder nur mit
einem Teil der Standplätze einer Reihe. Die Tiere sind
während der Kraftfuttergabe eingesperrt, so daß ein ungestörter Kraftfutterverzehr und eine präzise Kraftfutterverabreichung gewährleistet sind. Im einfachsten Fall ist
dabei an jedem Standplatz ein Kennungsempfänger angeordnet, welcher mit der Zentral-Computeranlage verbunden ist.
Das erfindungsgemäße Einsperrgitter erlaubt hier jedoch
eine wesentliche Vereinfachung. Es ist nämlich möglich,
lediglich hinter dem Eingangstor einen einzigen Kennungsempfänger vorzusehen, da aufgrund der Platzeinweisungsfunktion die Tiere in der Reihenfolge, in der sie den
Melkstand betreten und am Kennungsempfänger vorbeigehen,
auch die Standplätze des Melkstandes einnehmen. Eine
Schaltung für eine solche Kraftfuttersteuerung ist in
Fig. 25 gezeigt.

Sie umfaßt den zentralen Speicher 300, eine Einlese-Auslese-Steuereinheit 301, welche von einem gemeinsamen Kennungsempfänger 302 am Eingang des Melkstandes angesteuert
wird. Der Kennungsempfänger 302 spricht auf die Kennungsmarken 303 der einzelnen Tiere an, und zwar durch drahtlose Übermittlung. Ferner leitet der Kennungsempfänger
302 für jede Kennung ein Taktsignal ab, welches einem
Takteingang eines Schieberegisters 304 zugeführt wird. Dieses weist parallele Ausgänge Q1 bis QN auf, welche den
einzelnen Standplätzen zugeordnet sind. Die Steuersignale
werden bei der durch die Kennung angesteuerten Adresse des
Speichers 300 ausgelesen und gelangen seriell über eine Datenleitung 305 zu Eingangstoren 306. Letztere werden
durch die Ausgangssignale des Schieberegisters 304 aufgesteuert. Die Fütterungsdaten können sodann in nachgeschalteten Zwischenspeichern 307 gespeichert werden. Die
Anzahl der Zwischenspeicher 307 entspricht der Anzahl der
Standplätze. Von hier werden sie durch eine Torsteuerung
den einzelnen Kraftfutterdosierungseinrichtungen zugeführt. Die Torsteuerung kann mit der Eingangstorsteuerung gekoppelt sein. Ferner kann ein Rücksetzsignal gemeinsam dem Schieberegister 304 sowie den Zwischenspeichern 307 zugeführt werden.

Die Ausführungsform gemäß Fig. 25 hat den Vorteil, daß sichergestellt wird, daß jede Futterration für eine am Kennungsempfänger erfaßte Kuh erst ausgegeben wird, wenn diese
Kuh den für sie vorgesehenen Platz eingenommen hat und sich
gegebenenfalls dort eingesperrt hat. Der erfindungsgemäße
Melk- und -Fütterungsstand kann für die Kraftfutterverabreichung nur bei den beiden hintersten Plätzen (Doppelstand)
ausgebildet werden. Hierzu muß dieser hinterste Platz lediglich durch eine Stange oder dergleichen von den anderen
Plätzen abgetrennt werden. Die Kühe müssen dabei nach Verzehr des Kraftfutters den Platz rückwärtsgehend verlassen.
Andererseits kann der erfindungsgemäße Melk- und -Fütterungsstand auch im Durchtriebs-Kraftfutterverabreichungsbetrieb
arbeiten. Dabei sind die vorderen und hinteren Tore stets
offen. Die Kühe können die Standplätze nach Belieben betreten und verlassen. Die Steuerung kann dabei so vorgenommen
werden, daß die Einsperröffnung des hintersten (dem Ausgang
am nächsten liegenden) besetzten Platzes geöffnet oder entriegelt ist, so daß diese Kuh ihren Platz nach Belieben verlassen kann. Sobald diese Kuh ihren Platz verläßt, schließt
sich die weiter oben beschriebene selbstgeführte Entlassungssteuerung an. Dies gewährleistet einen reibungslosen Betrieb des Fütterungsstandes. Die sukzessive Entlassungssteuerung und die sukzessive Platzeinweisungssteuerung ver-

laufen dabei parallel. Sobald die Kuh an dem dem Eingang am nächsten liegenden Standplatz ihr Kraftfutter verzehrt hat und entlassen worden ist, beginnt ein neuer Betriebszyklus. Es ist besonders vorteilhaft, den für die Kraftfutterdosierung benötigten Computer auch für die Steuerung der Einsperröffnungen zu verwenden, und zwar anstelle des weiter oben beschriebenen Mikroprozessors.

Fig. 15 zeigt ein weiteres, konkretes Elektronik-Steuersystem. Dabei handelt es sich um eine Ausführungsform
des Steuersystems gemäß Fig. 7. Bei der Ausführungsform
gemäß Fig. 13 wird in der Zentralsteuereinheit ein Schieberegister verwendet. Dieses Schieberegister kann in Einzelflipflops, z.B. vom MS-JK-Typ aufgelöst werden. Jedes
einzelne Flipflop wird dabei in einer Einzelsteuereinheit des jeweiligen Standplatzes untergebracht, und zwar
zusammen mit einer Reihe weiterer Bauelemente. Dies ermöglicht eine verbesserte Modulbauweise, so daß nicht nur
die mechanischen Begrenzungen und Fangorgane in Modulbauweise hergestellt werden können, sondern auch die zugeordneten Steuereinrichtungen. Jedem Standplatz ist ein
Einzelsteuerungsmodul 320 zugeordnet. Dieses umfaßt ein
Einzelantriebsorgan Hn (n = 1 bis N), welches in einer
energieführenden Leitung 322 liegt. Diese weist zwei Anschlüsse auf, welche der Reihenschaltung der einzelnen
Module eines Melkstandes dienen. Ferner besteht eine
nichtgezeigte Verbindung zwischen dem Antriebsorgan Hn
und einer Energierückführleitung 323. Letztere kann im
Falle einer elektrischen Betätigung als Erdungsleitung
ausgeführt sein und durchgehend über alle Standplätze
verlegt werden. Selbstverständlich kann auch diese Erdungsleitung in das Modul integriert werden. Die Leitungen 322 und 323 können selbstverständlich wiederum auch
pneumatische oder hydraulische Energieleitungen sein.

Jedes Modul 320 enthält eine Steuereinheit Stn und einen Sensor Sn. Die Steuereinheit Stn ist mit einer gesonderten Stromversorgungsleitung(stabilisiert +6 V) 324
versehen sowie durch eine nichtgezeigte Verbindungsleitung mit der Erdleitung 323 verbunden. Jede Steuereinheit Stn enthält ein MS-JK-Flipflop 330 mit Ausgängen
Q und $\overline{Q}$ sowie mit Eingängen J, K und mit einem Takteingang T. Ferner sind ein Setzeingang S und ein Rücksetzeingang R vorgesehen. Der Setzeingang S ist mit einer
Setzleitung 332 verbunden, während der Rücksetzeingang
mit einer Rücksetzleitung 334 verbunden ist. Beide Leitungen weisen wiederum jeweils zwei Ausgangsanschlüsse
für Reihenschaltung auf. Ferner wird bei der Reihenschaltung jeder der Eingänge J mit dem Ausgang Q des
benachbarten Steuermoduls verbunden, während andererseits der Eingang K mit dem Ausgang Q̄ des benachbarten
Steuermoduls verbunden wird. Die Eingänge J und K des
ersten Steuermoduls sind mit einer Zentralsteuereinheit
verbunden, welche ferner auch mit der Setzleitung 332
und der Rücksetzleitung 334 verbunden wird. Der Ausgang
Q ist über ein Treiberorgan Trn mit dem Antriebsorgan
Hn verbunden.

Der Sensor Sn wird von dem Tier, welches sich einer Einsperröffnung zuwendet, betätigt. Es handelt sich dabei um
einen Schalter, welcher geschlossen wird. Das Schaltersignal gelangt zu einem Signalformer 340, welcher als Endprellschaltung wirkt und den dargestellten, einmaligen
Signalimpuls liefert. Hierzu kann eine Differenzierschaltung und ein Monoflop dienen. Letzteres sorgt für die erforderliche Flankensteilheit. Das Sensorsignal steht an
einem UND-Glied 342 an. Der andere Eingang desselben ist
mit dem Ausgangsanschluß Q des Flipflops 330 verbunden.
Der Ausgang des UND-Gliedes 342 ist mit einem Eingang eines ODER-Gliedes 344 verbunden. Der andere Eingang desselben ist zu einem Eingangsanschluß 346 herausgeführt.
Der Ausgang des ODER-Gliedes 344 ist einerseits mit dem
Takteingang T des Flipflops 330 verbunden und andererseits mit einem auf der anderen Seite des Moduls gelegenen Taktanschluß 348 verbunden.

Bei der Errichtung des Melkstandes wird an jedem Standplatz eine Steuer- und Antriebseinheit 320 vorgesehen.
Diese kann schon bei der Herstellung eingebaut werden.
Bei der Endmontage werden die einzelnen Melkstandmodule
aufgestellt und miteinander verkoppelt. Dabei müssen die
Steuer- und Antriebsmodule lediglich durch Verbindungsleitungen miteinander verbunden werden. Die Art der Verbindung ist aus Fig. 15 ohne weiteres ersichtlich. Die
Verbindungsleitungen können dabei bereits an einer Seite
des Moduls fest angelötet sein, so daß nur noch eine Verbindung hergestellt werden muß. Sie können sich durch
Rohre erstrecken, welche ohnehin als Begrenzungsrohre
bei einem Melkstand vorhanden sind, z.B. durch die Rohre
8, 2 und 4 der Fig. 1. Das Steuer- und Antriebsmodul 320
kann jeweils als gesonderte Einheit gefertigt werden, so
daß sich die Herstellungskosten erheblich verringern.
Der gleiche Vorteil der Modulbauweise hinsichtlich Herstellung und Montage ergibt sich bei allen Steuersystemen
der Fig. 7 bis 11.

Im folgenden soll die Arbeitsweise dieser Steuereinrichtung
beschrieben werden. Zu Beginn, in Ruhestellung des Melkstandes, sind alle Fangorgane geschlossen und sie ruhen
unter Eigengewicht auf einem Anschlag. Alle Antriebsorgane
Hn sind entregt. Alle Ausgänge Q der Flipflops stehen auf
Null-Pegel. Alle Sensoren stehen in der Ausgangsposition
oder Ruheposition. Durch Betätigung eines Startschalters
der Zentralsteuereinheit werden die Setzleitung 332 und
die Rücksetzleitung 334 auf 1-Pegel gesetzt, während am
Eingang J1 bzw. am Eingang K1 des ersten Steuermoduls
1-Pegel bzw. Null-Pegel ansteht. Nunmehr wird durch den
Startschalter der Takteingang 346 des ersten Moduls mit
einem Taktimpuls beaufschlagt. Hierdurch wird der Ausgang
Q1 des ersten Flipflops auf 1-Signal gesetzt, während der logische Zustand der Eingänge J1 und K1 sich umkehrt. Bei
den nachfolgenden Steuervorgängen bleiben die Eingänge
J1 und K1 auf Null-Pegel bzw. 1-Pegel. Die Ausgänge Q2,
Q3, ... QN verbleiben auf Null-Pegel. Das Signal am Ausgang Q1 gelangt zur Treiberschaltung Tr1 und diese
steuert den Einzelantrieb H1 an, so daß das zugeordnete
Fangorgan geöffnet wird. Nun befindet sich der Melkstand
in seiner Ausgangsposition für die Platzeinweisung. Das
Zentralsteuergerät steuert das Eingangstor an, welches geöffnet wird. Nun betreten die Kühe eine nach der anderen
den Melkstand. Die erste Kuh betätigt den Sensor S1 des
hintersten Standplatzes. Hierdurch wird ein Taktimpuls
gebildet, welcher zum UND-Glied 342 gelangt. Da der Ausgang Q des zugeordneten Flipflops 330 auf 1-Pegel steht,
gelangt der Taktimpuls über das ODER-Glieder 344 zum Takteingang T des Flipflops 330 des ersten Standplatzes. Hierdurch wird der 1-Pegel vom Ausgang Q1 zum Ausgang Q2 verschoben, während der Ausgang Q1 auf Null-Pegel gelangt.
Hierdurch wird in der bereits beschriebenen Weise das
Fangorgan des zweiten Standplatzes durch den Antrieb H2
geöffnet, während das Fangorgan H1 des ersten Standplatzes
durch Entregung des Antriebs H1 in Schließposition gelangt
und das dort befindliche Tier einsperrt. Der Taktimpuls
des ersten Steuermoduls steht auch über die Leitung 348
am linken Eingang des ODER-Gliedes 344 des nachfolgenden
Antriebs- und Steuermoduls 320 des zweithintersten Standplatzes an, usw.. Auf diese Weise gelangt der Taktimpuls
des jeweils betätigten Sensors Sn zu den Takteingängen T
aller Flipflops 330. Andererseits ist jeweils nur ein einziger Sensor Sn aktiviert, nämlich der Sensor des Standplatzes mit geöffnetem Fangorgan. Dies wird erreicht durch
die Verbindung des rechten Eingangs des UND-Gliedes 342
mit dem Ausgang Q des Flipflops 330 innerhalb des Antrieb-
und Steuermoduls. Alle anderen Sensorschaltungen sind verriegelt. Auf diese Weise wird eine Wählschaltung verwirklicht, welche jeweils den Sensor des offenen Standplatzes
aktiviert. Bei einer versehentlichen Betätigung eines Sensors eines weiter vorne gelegenen Standplatzes durch eine
vorbeigehende Kuh wird kein Taktsignal an die Flipflops
weitergegeben. Das gleiche gilt für eine Sensorbetätigung
durch bereits eingesperrte Kühe.

Der beschriebene Vorgang wiederholt sich, bis die letzte
Kuh den Sensor SN betätigt. Hierbei wird der Ausgang QN
auf Null gesetzt. Somit wird die Anfangsinformation, die
zu Beginn des Platzeinweisungsvorgangs von der Zentralsteuereinheit in die als Schieberegister wirkende Flipflopkette eingegeben wird, im Verlauf der Sensorbetätigung vom Melkstandausgang zum Melkstandeingang verschoben und schließlich mit der letzten Sensorbetätigung aus
der Flipflopkette herausgeschoben. Nun befinden sich wiederum sämtliche Ausgänge Q auf Null-Pegel. Alle Kühe sind
eingesperrt und werden gemolken. Nach beendetem Melkvorgang wird die Setzleitung 332 auf Null-Pegel gesetzt,
wodurch sämtliche Ausgänge Q aller Flipflops gleichzeitig auf 1-Pegel gelangen und sämtliche Einzelantriebe
H1 bis HN aktiviert werden. Dieser Zustand wird so lange
aufrechterhalten, bis sämtliche Tiere den Melkstand verlassen haben. Nun wird der Rücksetzeingang auf Null-Pegel gesetzt, während der Setzeingang auf 1-Pegel gelangt.
Hierdurch werden wiederum sämtliche Ausgänge Q auf Null-
Pegel gesetzt und die Fangorgane fallen in ihre Ruhestellung oder Schließstellung. Der gesamte Steuerzyklus kann
nun wiederholt werden.

Die beschriebene Steuereinrichtung kann in mannigfacher
Weise abgewandelt werden. Es können verschiedenste Flipflops eingesetzt werden, und zwar insbesondere verschiedenste JK-Flipflops, RS-Flipflops, D-Flipflops usw.. Diese können durch Taktimpulse gesteuert werden oder aber durch positive Anstiegsflanken, negative Abfallflanken oder beide. Es können beliebige andere Wählschaltungen verwendet werden, und zwar insbesondere auch Wählschaltungen mit einem Zähler, die bei jedem Sensorimpulseingang das Ausgangssignal an einen nachfolgenden Ausgang weiterschieben. Anstelle der UND-Glieder 344 kann auch eine verdrahtete ODER-Verknüpfung treten. Ausführungen dieser Art sind dem Fachmann bekannt. Im Falle eines flankengetriggerten Flipflops kann die Sensoreinrichtung auch Dauersignale liefern. Die beschriebene elektronische Steuereinrichtung kann auch ohne weiteres durch eine analoge, pneumatische oder mechanische Steuereinrichtung ersetzt werden. Es ist hierzu lediglich erforderlich, anstelle des Flipflops ein mechanisches oder pneumatisches, bistabiles Kippglied zu verwenden.

Bei dem bisher beschriebenen Antrieb für das erfindungsgemäße Einsperrgitter ist jedem Fangorgan eine gesonderte
Antriebseinrichtung zugeordnet. Es ist jedoch auch möglich, für alle Fangorgane einen gemeinsamen Antrieb vorzusehen und die Einzelsteuerung der Fangorgane durch die Ansteuerung von Verriegelungen und Kupplungen zu ermöglichen.
Fig. 16 zeigt eine Prinzipdarstellung eines solchen Antriebs.
Es sind dabei N Einsperröffnungen mit N Fangorganen 12
vorgesehen. Die Fangorgane weisen keine durch den Antrieb
entriegelbaren Selbstverriegelungseinrichtungen auf. Vielmehr ist für jedes Fangorgan 12 eine Solenoid-betätigbare
Verriegelungseinrichtung V1, V2, ... VN zugeordnet. Diese
Verriegelungseinrichtungen sind durch Ansteuerung eines
Solenoids entriegelbar. Vorzugsweise sind sie derart ausgebildet, daß sie bei der Schließbewegung des Fangorgans
12 selbsttätig einrasten. Die Verriegelungsfunktion kann
jedoch ebenfalls durch das Solenoid gesteuert werden.
Über den Fangorganen 12 ist eine durchgehende Stange 101
angeordnet, auf der Gleitkupplungshülsen 102 verschiebbar
gelagert sind. Jede dieser Hülsen ist über ein über eine
Rolle 103 geführtes Zugseil 104 direkt mit dem zugeordneten Fangorgan 12 verbunden. Alle Zugseile 104 mit Ausnahme
des der ersten Einsperröffnung zugeordneten Zugseils enthalten eine Zugenergie-Speichereinrichtung 105 in Form einer Zugfeder. Ferner ist eine weitere, durchgehende, längsverschiebbare Stange 106 vorgesehen, welche durch einen
gemeinsamen Antrieb gemäß der Pfeillinie in eine Schließposition und eine Öffnungsposition bewegbar ist. Es kann
ein manueller Antrieb vorgesehen sein oder aber ein pneumatischer oder hydraulischer Antrieb, welcher wiederum entweder manuell oder aber auch elektrisch angesteuert werden
kann. Ferner kann natürlich auch ein Elektromotorantrieb
vorgesehen sein.

An der Stange 106 sind ferner Verriegelungsklauen 107 angelenkt, welche normalerweise unter Eigengewicht in ihrer Verriegelungsposition gehalten werden. Diese Verriegelungsklauen 107 sind als Doppelhebel ausgebildet. Das rechte untere Ende greift an der Kupplungshülse 102 an, während das linke obere Ende einem Steuersolenoid K1, K2,..... KN zugeordnet ist. Bei Betätigung des Solenoids wird die Verriegelungsklaue 107 im Gegenuhrzeigersinn gedreht und die Kupplungshülse wird entriegelt.

Diese Antriebssteuerung arbeitet folgendermaßen. Normalerweise befinden sich alle Fangorgane 12 in Ruheposition, d.h. in Schließstellung. Sie sind dabei durch die Verriegelungsorgane V1 bis VN verriegelt. Die durchgehende Stange 106 befindet sich in der linken Endposition. Die Klauen 107 nehmen ihre aktive Stellung ein, und die Kupplungshülsen 102 nehmen jeweils ihre linke Position ein. Die Zugfedern 105 sind entspannt. Das Startsignal wirkt entriegelnd auf die Verriegelungseinrichtung V1 der hintersten Einsperröffnung ein. Danach wird der gemeinsame Antrieb H erregt und die Stange 106 wird in ihre rechte Endposition bewegt. Dabei werden die Kupplungshülsen 102 mitgeführt. Hierdurch wird das entriegelte Fangorgan 12 in seine Offenstellung geschwenkt. Andererseits sind die Fangorgane V2, V3, ... VN noch verriegelt. Daher werden die Zugfedern 105 gespannt. Nun ist das Einsperrgitter für die Platzeinweisung vorbereitet. Die erste Kuh wendet sich dem Lockfutter hinter der hintersten Einsperröffnung zu und betätigt dabei den zugeordneten Sensor S1. Das Sensorsignal wirkt nun auf die zentrale Steuerungseinrichtung ein. Hierdurch wird das Solenoid K1 der ersten Einsperröffnung erregt, die Klaue 107 wird im Gegenuhrzeigersinn verschwenkt und die zugeordnete Kupplungshülse 102 wird unter dem Gewicht des Fangorgans 12 nach links geschoben und das Fangorgan fällt in seine Schließposition.

Dabei rastet die Verriegelung V1 selbsttätig ein. Gleichzeitig wird die Verriegelung V2 entriegelt und das Fangorgan 12 der zweiten Einsperröffnung wird in seine Offenstellung hochgeschwenkt. Danach wird der Sensor S2 der zweiten Einsperröffnung durch die nachfolgende Kuh betätigt und der beschriebene Vorgang wiederholt sich, bis schließlich der Sensor SN der N-ten Einsperröffnung betätigt wird und das Solenoid KN erregt, wodurch diese N-te Einsperröffnung verschlossen wird. Das Signal des Sensors SN kann wiederum zur Ansteuerung des Eingangstors dienen.

Diese Antriebssteuerungseinrichtung kann in verschiedenster Weise abgewandelt werden. Anstelle des Zugantriebs kann ein Druckantrieb vorgesehen sein, wobei naturgemäß Druckfedern verwendet werden müssen. Der Antrieb kann auch als Drehantrieb ausgebildet sein, wobei naturgemäß als Energiespeichereinrichtungen Torsionsfedern verwendet werden. Anstelle der Energiespeicherung durch Federn kann auch eine Energiespeicherung durch Gewichtsverlagerung erfolgen. Ein Beispiel einer solchen Steuerung wird weiter unten erläutert. Ferner kann alternativ die Stange 106 zusätzlich drehbar gelagert sein. Sie weist jeweils Segmentanschläge auf, welche mit den Kupplungshülsen 102 zusammenwirken. Durch Drehung der Stange können die Segmentanschläge entweder in Verriegelungsposition oder in Entriegelungsposition gedreht werden. Sie gleiten bei der Entriegelung über eine Entriegelungskante von der Kupplungshülse weg. Erfindungsgemäß können nun die Entriegelungskanten in Umfangsrichtung gegeneinander versetzt sein, dergestalt, daß bei der Drehung der Stange 106 zunächst die Kupplungshülse 102 der ersten Einsperröffnung entriegelt wird und danach die Kupplungshülse der zweiten Einsperröffnung usw.. Die Stange 106 kann dabei kontinuierlich gedreht werden, so daß die Platzeinweisungsvorgänge nach einem starren Programm ablaufen. Sie kann aber
auch durch ein Schrittschaltwerk oder einen Schrittmotor
gedreht werden, und zwar unter Steuerung durch die Sensoren S1 bis SN. Im Falle eines Drehantriebs der Fangorgane
12 kann die drehbare Stange auch anstelle des Anlenkbolzens 10 oder konzentrisch zu diesen vorgesehen werden.
Dabei können auch die Verriegelungsorgane V1 bis VN
durch Segmentanschläge an der drehbaren Stange betätigbar sein. Bei den bisher beschriebenen
Varianten wirken alle Sensoren elektrisch auf die Steuerung ein. Es kann sich jedoch auch um mechanische Sensoren handeln, welche mechanisch auf die Verriegelungen V1
bis VN und auf die Kupplungen K1 bis KN einwirken oder
welche mechanisch auf die drehbare Stange über ein Schrittschaltwerk einwirken. Anstelle der Gleitkupplungshülsen
102 können auch drehbare Kupplungselemente vorgesehen sein,
wobei das Zugseil jeweils spulenartig auf- und abgewickelt
wird.

Im folgenden sollen drei ausschließlich mechanische Ausführungsformen des Steuersystems gemäß Fig. 7 erläutert
werden. Bei der Ausführungsform gemäß den Fig. 17 und 18
werden Fangrohre verwendet, bei denen der Schwerpunkt
hinter dem Anlenkbolzen 10 liegt. Sowohl die Einsperrung
als auch die Entlassung und die Wiederherstellung der Ausgangsposition werden gemeinsam für alle Standplätze von
einer Zentralsteuerung aus gesteuert. Lediglich die Platzeinweisungsfunktion wird durch Sensoren an den einzelnen
Standplätzen gesteuert. Die Fangrohre bewegen sich bei
Entriegelung selbsttätig in die Offenstellung, und zwar
aufgrund des Gewichts des hinter dem Anlenkbolzen 10 gelegenen Abschnitts. Dieser Abschnitt kann zur Verlagerung
des Schwerpunkts lang ausgeführt sein oder der dort befindliche Rohrabschnitt kann mit einem eingesetzten oder
angeschweißten Gewicht beladen sein.

Fig. 17 zeigt zwei Fangrohre 12, deren eines sich in Öffnungsposition befindet, während das andere die Schließstellung einnimmt. Die stationären Rohre sind zur Erhöhung der Übersichtlichkeit nicht dargestellt, bis auf das dem geöffneten Fangrohr 12 zugeordnete Standrohr 2 mit Querholm 4.

Eine verschwenkbare Hebeplatte 40 dient zur Verriegelung des Fangrohrs 12 in seiner Schließstellung. Dabei liegt die vordere Kante der Hebeplatte 40 an der hinteren Kante der Nase 32 an. Das Rohr 12 versucht sich durch sein eigenes Gewicht im Uhrzeigersinn zu verdrehen, so daß stets ein ausreichender Anlagedruck zwischen der Hebeplatte 40 und der Nase 32 besteht. Wenn die eingesperrte Kuh ihren Kopf anhebt, so wird dieser Anlagedruck lediglich verstärkt, so daß die Kuh das Fangrohr 12 nicht öffnen kann. Zur Öffnung des Fangrohrs 12 muß lediglich die Hebeplatte 40 um einen geringen Betrag nach oben verschwenkt werden bis die vordere Kante über der oberen Spitze der Nase 32 zu liegen kommt. Die Nase 32 greift sodann an der unteren Seite der Hebeplatte 40 an und das Fangrohr 12 kann sich aufgrund seines eigenen Gewichts selbsttätig im Uhrzeigersinn verschwenken, wobei die Hebeplatte 40 mitgenommen wird. Zum Schließen des Fangrohrs 12 muß die Hebeplatte 40 im Gegenuhrzeigersinn nach unten geschwenkt werden. Hierdurch wird das Fangrohr 12 ebenfalls im Gegenuhrzeigersinn verschwenkt und die Nase 32 gleitet entlang der unteren Seite der Hebeplatte 40 nach vorne bis zu deren Vorderkante und danach greift die Vorderkante der Hebeplatte 40 wiederum hinter der Nase 32 ein. Sämtliche Hebeplatten 40 können fest mit einer einzigen durchgehenden Stange verbunden sein, welche in beiden Richtungen gedreht werden kann, jedoch nicht längs verschiebbar ist.

Bei der in Figur 17 dargestellten Anordnung sind alle Fangrohre 12 gesondert betätigbar. Hierzu sind die hinteren Enden der Hebeplatten 40 mit Hülsen 42,44 verbunden, welche auf einer durchgehenden Stange drehbar, aber nicht längsverschiebbar gelagert sind. Die Hülse 44 der ersten Einsperröffnung ist kurz ausgebildet und trägt lediglich die Hebeplatte 40. Die Hülsen 42 der nachfolgenden Einsperröffnungen sind verlängert und ragen in den Bereich der jeweils vorangehenden Einsperröffnung. Sie tragen an ihrem linken Ende jeweils eine kurze Betätigungsplatte 48, welche mit einem am Standrohr 2 durch einen Bolzen 49 angelenkten Bügel 50 zusammenwirkt. Der Bügel 50 umfaßt einen unteren gekrümmten Abschnitt 52 und einen oberen Abschnitt 54. Der Schwerpunkt des Bügels liegt hinter dem Standrohr 2 und der Bügel 50 ruht in der in Figur 17 gezeigten Position unter seinem eigenen Gewicht an einem nicht gezeigten Anschlag. Der untere gekrümmte Abschnitt 52 ragt in die Einsperröffnung. Sobald eine Kuh ihren Hals in die Einsperröffnung einführt bzw. sich dem Lockfutter zuwendet, wird der Bügel 50 im Gegenuhrzeigersinn verschwenkt und das Ende 56 des Bügels 50 greift an der unteren Fläche der kurzen Betätigungsplatte 48 an. Hierdurch wird die Betätigungsplatte 48, die Hülse 42 und die Hebeplatte 40 im Uhrzeigersinn verschwenkt und das Fangrohr 12 der nachfolgenden Einsperröffnung wird entriegelt. Der Bügel 50 muß die Betätigungsplatte 48 nur um einen solchen Betrag verschwenken, daß die Hebeplatte 50 über die Nase 32 des Fangrohrs 12 angeho-ben wird. Sodann schwenkt das Fangrohr 12 unter seinem eigenen Gewicht selbsttätig in die geöffnete Stellung. Es nimmt dabei die Hebeplatte 40, die Hülse 42 und die Betätigungsplatte 48 mit. Sodann kann die nächste Kuh den nachfolgenden Platz betreten, wodurch wiederum der dort vorgesehene Bügel betätigt wird und das dritte Fangrohr geöffnet wird, usw.. Auf diese Weise öffnet jede Kuh die Einsperröffnung für die jeweils nachfolgende Kuh.

Nachdem alle Kühe ihre Plätze eingenommen haben, müssen sämtliche Fangrohre 12 geschlossen werden. Hierzu wird ein Zugseil 60, welches an einer an der Stange 46 angeschweißten Hebestange 58 angreift, in Richtung des Pfeiles C nach oben gezogen. Dabei dreht sich die Stange 46 gemäß Figur 18 im Uhrzeigersinn und ein an der Stange 46 befestigter Mitnehmerstift 62 gelangt in Anlage an einem Anschlagstift 64, welcher an der Außenseite der Hülse 42 angeschweißt ist und sich in axialer Richtung über deren Ende hinaus erstreckt. Somit wird auch die Hülse 42 und somit auch die Hebeplatte 40 im Uhrzeigersinn gedreht und sämtliche Fangrohre 12 werden in Schließstellung geschwenkt. Diese Stellung ist in Figur 17 auf der rechten Seite sowie in Figur 18 dargestellt. Die Stange 46 dreht sich sodann unter Eigengewicht wieder in die in Figur 18 gezeigte Ausgangslage zurück, in der sie durch einen nicht gezeigten Anschlag gehalten wird.

Nun sind sämtliche Kühe eingesperrt und können gemolken werden. Nach beendetem Melkvorgang müssen die Kühe wieder aus dem Melkstand entlassen werden, wozu sämtliche Fangrohre 12 hochgeschwenkt werden müssen. Zu diesem Zweck wird ein Zugseil 61 gemäß der Pfeillinie D abwärts gezogen, wodurch die Hebestange 58 und die Stange 46 im Gegenuhrzeigersinn gedreht werden. Hierdurch gelangt jeweils ein weiterer Mitnehmerstift in Anlage am Anschlagstift 46. Nun werden die Hülsen 42 mitgedreht und die Hebeplatten rasten aus. Nun klappen sämtliche Fangrohre unter Eigengewicht in die Offenstellung. Nun können sämtliche Kühe ihren Platz verlassen.

Nun muß der Melkstand für den nächsten Melkvorgang vorbereitet werden. Hierzu müssen sämtliche Fangrohre 12 , mit Ausnahme des ersten Fangrohrs in die Schließstellung gebracht
werden. Zu diesem Zweck wird das Zugseil 60 wiederum nach
oben gezogen, der Mitnehmerstift 62 greift am Anschlagstift
64 an und sämtliche Hebeplatten 40 werden abwärts geschwenkt
und nehmen dabei sämtliche Fangrohre 12 , einschließlich des
ersten, mit. Dabei werden sämtliche Fangrohre 12 einschließlich des ersten durch die Hebeplatten 40 verriegelt. Sodann
wird das Zugseil 61 gemäß der Pfeillinie D nach unten gezogen, jedoch nicht um den maximal möglichen Drehwinkelbetrag.
Vielmehr wird die Stange 46 nur soweit im Gegenuhrzeigersinn
gedreht, bis der dem ersten Fangrohr 12 zugeordnete Mitnehmerstift 66', welcher gegenüber allen anderen Mitnehmerstiften 66 eine geringe Winkelversetzung aufweist, an dem Anschlagstift 64 angreift. Bei der weiteren Drehbewegung des
Rohrs 46 zeigt die Hülse 44 der ersten Einsperröffnung eine
Voreilung gegenüber sämtlichen nachfolgenden Hülsen 42. Daher wird nun das erste Fangrohr 12 entriegelt, während
noch alle nachfolgenden Fangrohre verriegelt bleiben. Nach
einer geringfügigen Drehung der Stange 46 im Gegenuhrzeigersinn um ein geringes Inkrement ist somit die Stange 12 der
ersten Einsperröffnung vollständig entriegelt und klappt
unter ihrem eigenen Gewicht nach oben. Nunmehr beginnt der
beschriebene Arbeitszyklus wieder von vorne.

Wenn alle Kühe eingesperrt sind, sind die Bügel 50 gegenüber
der in Figur 17 gezeigten Stellung im Uhrzeigersinn verschwenkt
und die Enden 56 liegen an den Betätigungsplatten 48 an. Um
zu verhindern, daß hierdurch die jeweils nachfolgenden Fangrohre 12 entriegelt werden, ist eine nicht gezeigte Verriegelung vorgesehen, welche die Stange 46 in einer Drehposition
verriegelt, in der die Mitnehmerstifte 62 an den Anschlagstiften 64 angreifen (Figur 18).Nun können die Hülsen 42,44 nicht durch Einwirkung der Bügelenden 56 auf die Betätigungsplatten 48 gedreht werden. Nachteiligerweise übt dabei der untere gekrümmte Bügelabschnitt 52 einen gewissen Druck auf den Hals der Kuh aus. Daher kann bei einer weiteren Ausgestaltung der hintere Abschnitt des Bügels vom übrigen Bügel getrennt sein und mit diesem derart verschwenkbar verbunden sein, daß er einerseits die in Figur 17 gezeigte obere Anschlagposition einnehmen kann, andererseits aber gegen eine Federspannung relativ zum übrigen Bügel nach unten verschwenkt werden kann. Nun kann bei verriegelter Stange 46 der Bügel 50 voll einwärts geschwenkt werden. Dabei muß jedoch die Federkraft der nicht gezeigten Feder der Bügel 50 derart bemessen sein, daß die Hülsen 42 bei entriegelter Stange 46 durch die Bügel gedreht werden können.

Bei der zuvor beschriebenen Ausführungsform ist zu Beginn des Arbeitszyklus nur die erste Einsperröffnung geöffnet. Die dort eindringende Kuh öffnet sodann die nachfolgende Einsperröffnung usw.. Zum Verschließen der Einsperröffnungen dienen ausschließlich die Fangrohre 12 . Man kann jedoch die gleiche Funktion auch mit Hilfe eines gesonderten Sperrorgans, z.B. einer Sperrtür, eines Sperrahmens oder einer Sperrstange, welche zusätzlich zum Fangrohr vorgesehen ist, bewirken. Eine konkrete Ausführungsform des erfindungsgemäßen Fanggitters ist in den Figuren 19 und 20 dargestellt. Bei dem hier gewählten Ausführungsbeispiel dieses Prinzips liegt der Schwerpunkt des Fangrohrs 12 wiederum vor dem Bolzen 10, so daß die Fangrohre 12 unter Eigengewicht in die Schließstellung klappen, wie anhand der Figuren 1 bis 3 erläutert. Jedem Fangrohr 12 ist wiederum eine Selbstverriegelungseinrichtung zugeordnet. Diese wurde bereits ausführlich anhand der Figur 3 beschrieben. Sie ist daher in Figur 19 nicht dargestellt. Die nachstehend erläuterte konkrete Ausführungsform geht aus von einem Fanggitter gemäß Figur 2. Das gleiche Prinzip ist jedoch auch anwendbar auf ein Fanggitter ohne Versetzung gemäß Figur 1.

Am Standrohr 2 sind Anlenkplatten 70 befestigt, an denen ein Sperrbügel mittels Anlenkstiften 74 angelenkt ist. In Öffnungsposition hat der Sperrbügel 72 die mit ausgezogenen Linien dargestellte Lage. Er wird durch eine Vorspannfeder gegen einen nicht dargestellten Anschlag gedrückt. Wenn nun das Zugseil 30, welches um eine Umlenkrolle 76 geführt ist, in Richtung des Pfeiles B gezogen wird, so wird zunächst der nicht gezeigte Selbstverriegelungsmechanismus gelöst und danach wird das Fangrohr 12 hochgeschwenkt. Bei den in den Figuren 1 bis 3 gezeigten Ausführungsformen wird das Fangrohr nicht bis in die vertikale Lage hochgeschwenkt. Bei der nun zu beschreibenden Ausführungsform besteht jedoch die Möglichkeit, das Fangrohr 12 über die vertikale Position hinaus in die mit strich-punktierten Linien dargestellte Position zu verschwenken. Bei der Schwenkbewegung der Stange 12 greift der hintere Abschnitt 13 am Bügel 72 an, so daß dieser in die mit strich-punktierten Linien dargestellte Schließposition verschwenkt wird. In dieser Position wird der Bügel durch eine in Figur 20 im Detail dargestellte Verriegelungseinrichtung verriegelt.

Die Verriegelungseinrichtung umfaßt eine Stange 76, welche bis zur nächst vorderen Einsperröffnung reicht. Sie ist an ihrem linken Ende durch einen Ring 78 drehbar und in einem geringen Maße verschwenkbar gelagert. Am rechten Ende ist die Stange in einem teilweise dargestellten Rahmen gelagert, welcher eine vordere vertikale Platte 80, eine untere horizontale Platte 82 und eine vordere vertikale Platte 84 umfaßt. Ferner ist an der Stange 76 ein keilförmiger Vorsprung 86 ausgebildet. In Normalposition liegt an der Innenfläche der vertikalen Platte 80 die Stange 76 an, während die Spitze des keilförmigen Vorsprungs 86 an der Innenfläche der vertikalen Platte 84 anliegt. Der Rahmen ist an den beiden Seitenflächen offen, bis auf eine etwa dreieckige Platte 88, welche als Anlage für den Vorsprung 86 dient und verhindert, daß die Stange 76 nach rechts verschoben werden kann. Andererseits wirkt eine Betätigungsplatte 90 am anderen Ende der Stange 76 mit dem Ring 78 zusammen und verhindert eine Verschiebung der Stange 76 nach rechts.

Am unteren Teil des Bügels 72 ist eine Verriegelungsklaue 92 vorgesehen, welche eine Verriegelungsnase 94 mit einer schrägen Fläche aufweist.

Bei der Verriegelung gleitet die schräge Fläche der Verriegelungsnase 94 unter das Ende der Stange 76 und diese wird geringfügig hochgeschwenkt. Bei der Weiterbewegung des Bügels 72 fällt die Stange 76 wieder hinter der Nase 94 herab. Der mit der Verriegelungsnase 94 zusammenwirkende Teil der Stange 76 weist eine abgeflachte Fläche 96 auf, welche eine sichere Verriegelung gewährleistet. Die Entriegelung erfolgt durch den Bügel 50 der jeweils nächstvorderen Einsperröffnung. Wenn die dort eindringende Kuh sich dem Lockfutter zuwendet, so wird der Bügel 50, welcher normalerweise durch Eigengewicht in der in Figur 20 gezeigten Position gehalten wird, im Gegenuhrzeigersinn verschwenkt und das Ende 51 dieses Bügels greift an der Betätigungsplatte 90 an. Hierdurch wird die Stange 76 gedreht. Im vorderen Bereich wirkt dabei die Spitze des keilförmigen Vorsprungs 86 als Drehpunkt, so daß die Stange 76 hier hochgekippt wird. Dabei gleitet die abgeflachte Fläche 96 an der Verriegelungsnase 94 nach oben bis die Verriegelung ausklinkt. Der Bügel 76 schwenkt nun unter der Einwirkung der nicht dargestellten Vorspannungsfeder in die Figur 19 mit ausgezogenen Linien dargestellte Position zurück.

Zuvor muß das Fangrohr 12 aus der mit strich-punktierten
Linien dargestellten Position in eine normale Öffnungsposition gebracht werden, bei der sein Schwerpunkt vor dem
Anlenkbolzen 10 liegt und das hintere Ende 13 nicht mit
dem zurückklappenden Bügel 72 kollidiert. Zu diesem Zwecke
weist die in Figur 19 nicht dargestellte Selbstverriegelungseinrichtung eine Vorspannungsfeder auf, welche einerseits
am Holm 4 und andererseits an der Querstange 22 (Figur 3)
verankert ist und deren Expansion beginnt, wenn das Fangrohr 12 über die normale Öffnungsposition hinaus in die
in Figur 19 mit ausgezogenen Linien dargestellte Position
und darüberhinaus in die in Figur 19 mit gestrichelten Linien dargestellte Extremposition geschwenkt wird. Nach
dem Entriegeln des Zugseils 30 werden daher sämtliche
Fangrohre 12 unter Einwirkung der nicht gezeigten Zugfedern gemäß Figur 19 im Gegenuhrzeigersinn in die normale
Öffnungsposition verschwenkt, in der sie durch eine weitere
Verriegelung des Zugseils 30 gehalten werden können. Nun
können die Kühe ihre Plätze einnehmen und zwar eine nach
der anderen in geordneter Reihenfolge, wobei jede Kuh durch
Betätigung des Bügels 20 den Sperrbügel 72 der jeweils
nachfolgenden Einsperröffnung in Offenstellung bringt. Nachdem alle Kühe ihren Platz eingenommen haben, muß lediglich
noch die Verriegelung des Zugseils 30 gelöst werden und
alle Fangrohre 12 fallen unter ihrem eigenen Gewicht nach
unten, bis sie zur Anlage an einem nicht gezeigten Anschlag
kommen und durch die Selbstverriegelungseinrichtung verriegelt werden. Alle Fangrohre 12 werden über die Selbstverriegelungseinrichtung gemäß Figur 3 mit Hilfe der durchgehenden Stange 20 jeweils gemeinsam entriegelt, angehoben,
in die maximale rückwärtige Schwenkposition geschwenkt, sodann unter dem Zug der nicht dargestellten Feder in die
normale Öffnungsposition bewegt und schließlich in die Schließposition abgesenkt. Das Fanggitter hat die in Figur 2 gezeigte Grundform. Dabei verlaufen die Stangen 76 jeweils parallel zum Rohr 8 und die Ebene des Bügels 50 liegt jeweils parallel zum Rohr 6, d.h. senkrecht zum Rohr 8.

Die bisher beschriebenen Ausführungsformen des erfindungsgemäßen Fanggitters sind nicht als Selbstfanggitter ausgebildet. Es ist jedoch auch möglich, mit dem erfindungsgemäßen Konstruktionsprinzip ein Selbstfanggitter zu verwirklichen. Diese Ausführungsform soll im folgenden anhand der Figuren 21 bis 23 erläutert werden. Das Fangrohr 12 ist mit dem Bolzen 10 an dem in Figur 21 nicht dargestellten Holm 4 angelenkt. An seinem hinteren Ende 13 ist ein Gewicht 100 mit Hilfe von Platten 102, 104 und einem Stift 106 angelenkt. Eine der Platte 104 ist verlängert und trägt an ihrem oberen Ende einen rechtwinklig nach außen, d.h. von der Schwenkebene der Stange 12 weg, gebogenen Vorsprung 108. Ferner weist dieser verlängerte Abschnitt eine Ausnehmung 110 auf. In der in Figur 21 gezeigten Schließstellung des Fangrohrs 12 greift eine stationäre Verriegelungsplatte 112 in diese Ausnehmung ein. In diesem Zustand liegt der Schwerpunkt des Fangrohrs 12 samt Gewicht 100 vor dem Bolzen 10, so daß das Fangrohr 12 versucht, sich im Gegenuhrzeigersinn zu verdrehen. Dies wird jedoch durch das Zusammenwirken der Verriegelungsplatte 112 mit der unteren Kante der Ausnehmung 110 verhindert.

In der Ausgangssituation sind in dieser Weise alle Fangrohre 12 des Melkstandes verriegelt und die eingesperrten Kühe werden gemolken. Wenn die Kühe an der Unterseite der Fangrohre 12 anstoßen, kommt die Verriegelungsplatte 112 in Anlage an der Oberkante der Ausnehmung 110, so daß die Kühe sich nicht selbst befreien können. Nach beendetem Melkvorgang müssen die Fangrohre 12 hochgeklappt werden.

Hierzu wird eine durchgehende Stange 114 mit Hilfe eines
Arms 116 in Richtung des Pfeils 118, d.h. im Gegenuhrzeigersinn, gedreht. Die durchgehende Stange 114 trägt
an jedem Standplatz des Melkstandes einen in Normalstellung frei herabhängenden Schenkel 120. Dieser Schenkel
120 wird somit in Richtung des Pfeils 122 verschwenkt.
Er trägt an seinem unteren Ende eine kurze Querstange
124. Der Schenkel 120 und die Querstange 124 haben T-Konfiguration. Die Querstange 124 steht schräg zur Hauptebene des Melkstandes, d.h. nicht parallel zum Anlenkstift 10. Der gemäß Fig. 21 linke Abschnitt der kurzen
Querstange 124 gelangt in Angriff am Gewicht 100 und
schwenkt dieses hoch. Dabei wird zunächst die Verriegelung zwischen der Ausnehmung 110 und der stationären Verriegelungsplatte 112 gelöst. Im weiteren Verlauf der
Schwenkbewegung gleitet der Vorsprung 108 der langen
Platte 104 über eine schräge Nase 128 einer Verriegelungsklaue 130, welche am Fangrohr 12 angelenkt ist und
in der in Fig. 21 gezeigten Schließstellung des Fangrohrs
12 vermöge des Gewichts ihres unteren Abschnitts 132 in
der gezeigten Position hängt. Im Verlauf der weiteren
Schwenkbewegung wird die Verriegelungsklaue 130 im Uhrzeigersinn verschwenkt und der Vorsprung 108 greift hinter der schrägen Verriegelungsnase 128 ein, so daß das
Gewicht nun in der horizontalen Position einrastet. Nun
liegt der Schwerpunkt des Fangorgans 12 hinter dem Anlenkbolzen 10. Außerdem ist das Fangrohr 12 nun nicht
mehr verriegelt, so daß es in seine Öffnungsposition
hochklappt, sobald die durchgehende Stange 114 in ihre
Ruhestellung zurückkehrt, welche in Fig. 21 gezeigt ist.
Das Fangrohr 12 kommt dabei in Angriff an einen nichtgezeigten Anschlag.

Nun können sämtliche Kühe den Melkstand verlassen. Der leere Melkstand muß nun für einen neuen Melkvorgang vorbereitet werden. Hierzu wird die Stange 114 im Uhrzeigersinn gedreht, bis die Querstange 124 am Schenkel 120 am oberen Ende eines Bügels 50 angreift. Dieser Bügel hat im wesentlichen die Konfiguration des Bügels 50 der Fig. 17. Das freie, obere Ende ist jedoch wesentlich kürzer, und zwar geringfügig kürzer als der Abstand zwischen dem Anlenkstift 49 und dem oberen Ende des Standrohrs 2. Der Bügel 50 wird unter der Einwirkung einer Feder, welche entweder als Drehfeder oder als Zugfeder ausgebildet sein kann, normalerweise in der in Fig. 17 gezeigten aktiven Position, gehalten, wobei das obere Ende 54 des Bügels 50 frei nach hinten steht und wobei der untere, gekrümmte Bereich 52 weit in die Einsperröffnung hineinragt. Die Ebene der Bügelschwenkbewegung verläuft schräg zur Bewegungsebene des Fangrohrs 12. Dies erkennt man am besten anhand der Fig. 2. Unter Bezugnahme auf diese Figur kann die Bügelbewegungsebene etwa senkrecht zur Richtung der Rohre 8 angenommen werden. Der Bügel ist dabei auf der dem Futtertrog zugewandten Seite des Standrohrs 2 angelenkt. Das freie Ende des Bügels 50 ragt bis in den Raum rechts vom Holm 4. Man erkennt nun, daß die Querstange 24 ohne weiteres am oberen, hinteren Ende des Bügels 50 angreifen kann. Er wird (gemäß Fig. 17) im Gegenuhrzeigersinn verschwenkt, und das hintere, obere Ende des Bügels 50 gleitet dabei an der Querstange 124 entlang. Die Schrägstellung der Querstange 124 begünstigt diesen Betätigungsvorgang. Am Ende dieser Bewegung gelangen alle Bügel in eine inaktive Stellung, in der der untere Endbereich 52 die Einsperröffnung verlassen hat. In dieser Stellung sind sämtliche Bügel (bis auf den ersten Bügel) verriegelt, und zwar durch einen Verriegelungsmechanismus, welcher im einzelnen in Fig. 23 dargestellt ist. Jeder Bügel 50 weist in seinem unteren Endbereich eine Nase 130
auf. Der erste Bügel weist keine Verriegelungsnase 130
auf. Daher wird der erste Bügel auch nicht in einer inaktiven Stellung verriegelt. Der zweite, dritte bis
N-te Bügel wird jedoch dadurch verriegelt, daß die Verriegelungsnase 130 bei der Schwenkbewegung, welche gemäß
Fig. 23 schräg nach links und aus der Papierebene heraus
erfolgt, über die obere Kante einer Verriegelungsplatte
132 gleitet und sodann verriegelnd hinter dieser angreift.
Die Verriegelungsplatte 132 ist an einer drehbaren, aber
nicht längsverschiebbaren Stange 134 angeschweißt. Die
Stange 134 erstreckt sich vom Standrohr 2 des einen Standplatzes jeweils bis zum Standrohr 2 des nächsten Standplatzes. In Fig. 23 ist z.B. eine rückwärtige Ansicht
des Standrohrs 2 der zweiten Einsperröffnung gezeigt. Die
Stange 134 erstreckt sich von diesem Standrohr zum ersten (ausgangsseitig gelegenen) Standrohr hin. Die in
Fig. 23 gezeigte linke Stange 134 erstreckt sich vom Standrohr 2 der zweiten Einsperröffnung bis zum Standrohr 2 der
dritten Einsperröffnung. Die Stangen 134 sind jeweils an
den Standrohren angelenkt, und zwar unter Federvorspannung, derart, daß die Verriegelungsplatten 132 senkrecht
nach oben stehen und am Standrohr 2 anliegen. Zu diesem
Zweck ist eine nichtgezeigte Feder vorgesehen, welche natürlich auch durch ein Gewicht ersetzt sein kann. Das jeweils ausgangsseitig gelegene Ende der Stange 134 trägt
eine zweite Verriegelungsplatte 136, deren Bedeutung weiter unten erläutert werden soll. Man erkennt nun, daß
bei der Drehbewegung der durchgehenden Stange 114 im Uhrzeigersinn die Bügel 50 in die inaktive Stellung verschwenkt werden und dabei die Nase 130 mit ihrer schrägen
Fläche an der Oberkante der senkrechtstehenden Verriegelungsplatte 132 angreift, wobei diese geringfügig gegen
die Federkraft gemäß Fig. 23 zum Betrachter hin verschwenkt wird, so daß die Verriegelungsnase 130 über die
obere Kante der Verriegelungsplatte 132 gleiten kann.
Danach greift die Verriegelungskante der Verriegelungsnase 130 an der hinteren (sichtbaren) Fläche der Verriegelungsplatte 132 an. Nunmehr befinden sich somit alle
Betätigungsbügel 50, bis auf den ersten, in einer inaktiven Stellung.

Die oberen Enden sämtlicher Bügel 50 tragen Verriegelungszungen 138 (Fig. 22). In der inaktiven Stellung des Bügels 50 liegt sein oberes Ende mit der Verriegelungszunge
138 unterhalb des horizontalen Holms 4, so daß die Verriegelungszunge 138 geringfügig in den gemäß Fig. 2 links
vom Holm 4 gelegenen Raum hineinragt.

Nunmehr wird die durchgehende Stange 114 wiederum im Gegenuhrzeigersinn gedreht und die Schenkel 120 werden dabei zusammen mit den Querstangen 124 in Pfeilrichtung 122
verschwenkt. Dabei greifen die Querstangen 124 an den in
Öffnungsstellung befindlichen Fangrohren 112 an, und zwar,
genauer gesprochen, an den Gewichten 100. Die Verriegelung der Gewichte durch die Verriegelungsklaue 130 ist
derart ausgebildet, daß dabei das Gewicht 100 nicht entriegelt wird. Das Fangrohr 12 wird gegen sein Gewicht
in Schließstellung verschwenkt. In dieser Schließstellung
wird das Fangrohr nun verriegelt. Der Verriegelungsmechanismus ist im einzelnen in Fig. 22 gezeigt. Jedes Fangrohr
12 weist in seinem Abschnitt vor dem Anlenkbolzen 10 eine
Verriegelungsklaue 140 auf, welche durch einen Stift 141
und Befestigungsplatten 142 an der Unterseite des Fangrohrs 12 angelenkt ist. Jede Verriegelungsklaue 140 weist
einen gemäß Fig. 22 sich nach links erstreckenden, bogigen Fortsatz 144 auf, der in der in Fig. 22 gezeigten Normalposition am Fangrohr 12 anliegt. Die Verriegelungsklaue 140 ist daher im Gegenuhrzeigersinn aus der in
Fig. 22 gezeigten Position nach oben verschwenkbar. Bei
der Abwärtsbewegung des Fangrohrs 12 durch Einwirkung
der Querstange 124 kollidiert die Verriegelungsklaue 140
mit der Verriegelungszunge 138 am oberen Ende des Bügels
50. Die Verriegelungsklaue 140 wird dabei im Uhrzeigersinn verschwenkt und schlüpft über die Verriegelungszunge
138 hinweg. Sodann rastet sie unterhalb der Verriegelungszunge 138 verriegelnd ein. Diese Position ist in Fig. 22
gezeigt. Ein solcher Verriegelungsmechanismus ist bei
den Fangrohren der Standplätze 2 bis N vorgesehen, nicht
jedoch am ersten Standplatz. Nunmehr befindet sich der
Melkstand in seiner Startposition. Am ersten Standplatz
befindet sich der Bügel in der unverriegelten, aktiven
Position, welche in Fig. 17 dargestellt ist. Andererseits
nimmt das Fangrohr 12 des ersten Standplatzes seine hochgeschwenkte Offenstellung ein, sobald die durchgehende
Stange 114 wieder in ihre Ausgangsdrehstellung gelangt.
Alle Fangrohre 12 der Plätze 2 bis N sind geschlossen und
gemäß Fig. 22 verriegelt. Außerdem sind alle Bügel dieser
Plätze in der inaktiven Stellung verriegelt.

Nun wird das Eingangstor geöffnet und die Kühe treten in
den Melkstand ein. Sie finden nun sämtliche Einsperröffnungen verschlossen, bis auf die hinterste. Daher geht
die erste Kuh bis zu diesem hintersten Platz, hebt ihren
Kopf in die Einsperröffnung und betätigt dabei den Bügel
50. Dabei wirkt der Bügel 50 entriegelnd auf die Verriegelung des Gewichts 100 am (geöffneten) Fangrohr 12 ein.
Hierzu ist im oberen Endbereich des Bügels 50 ein Entriegelungsorgan 150 angelenkt, und zwar bei 152 an einer
Stelle, welche um eine gewisse Strecke unterhalb des oberen Endes des Bügels 50 liegt. Das Entriegelungsorgan 150
befindet sich normalerweise in der in Fig. 22 gezeigten Stellung. Dabei ruht ein unterer Fortsatz 154 an dem Bügel 50 und verhindert ein Herabfallen des Entriegelungsorgans 150 unter seinem Eigengewicht. Das Verriegelungsorgan 50 trägt an seinem oberen Ende einen sich etwa horizontal erstreckenden Fortsatz 156. Bei der Herbeiführung
der Ausgangsposition des Melkstandes schwenkt das Fangrohr
12 des ersten Platzes in seine Öffnungsposition. Dabei
gelangt der untere Abschnitt 132 der Verriegelungsklaue
130 in den Bereich unmittelbar vor dem Fortsatz 156 des
Entriegelungsorgans 150; in Richtung des Fangrohrs 12, zu
dessen hinterem Ende hin gesehen, liegt somit der Fortsatz
156 hinter dem unteren Ende 132 der Verriegelungsklaue
130. Wenn nun die erste Kuh den Bügel gemäß Fig. 17 im
Gegenuhrzeigersinn verschwenkt, so greift der Fortsatz
156 am unteren Abschnitt 132 der Verriegelungsklaue 130
an und diese wird gemäß Fig. 21 im Uhrzeigersinn verschwenkt. Hierdurch gleitet die Nase 128 vom Vorsprung
108 der verlängerten Platte 104 ab, so daß das Gewicht
100 nunmehr entriegelt wird und nach unten schwenkt. Hierdurch verlagert sich nun aber der Schwerpunkt des ersten
Fangrohrs 12 nach vorn in den Bereich vor dem Anlenkbolzen 10, so daß das Fangrohr 12 sich unter Eigengewicht in
die Schließposition bewegt. Dabei gleitet das obere Ende
der verlängerten Platte 104 über eine abgeschrägte Kante
160 an der Vorderkante der stationären Verriegelungsplatte 112 entlang, bis schließlich die Ausnehmung 110
verriegelnd mit der Platte 112 zusammenwirkt. Nun kann
das Fangrohr 12 durch die Kuh nicht mehr angehoben werden
und die erste Kuh ist in ihrer Einsperröffnung verriegelt.

Im folgenden soll der Platzeinweisungsvorgang erläutert
werden. Wie bereits erwähnt, befindet sich das Fangrohr
12 bei verriegeltem Gewicht 100 und bei Anordnung des
Schwerpunkts hinter dem Anlenkbolzen 10 in seiner Schließstellung, wobei es durch die Verriegelungszunge 138 und
die Verriegelungsklaue 140 verriegelt ist. In der Ausgangsstellung des Bügels 50 des hintersten Standplatzes
(aktive Position vor der Betätigung durch die Kuh) hat
das untere Ende des Bügels 50 die in Fig. 23 gezeigte
Position relativ zur Platte 136. Am hinteren Ende des Bügels 50 ist eine Betätigungsklaue 162 angelenkt, wobei
die Anlenkachse sich etwa konzentrisch zum hinteren Abschnitt des Bügels 50 erstreckt. Normalerweise nimmt die
Betätigungsklaue 162 die in Fig. 23 gezeigte Position
ein. Sie ruht dabei unter Eigengewicht auf einem Anschlag.
Andererseits ist die Betätigungsklaue 162 gemäß Fig. 23
im Uhrzeigersinn drehbar.

In der aktiven Stellung des ersten Bügels 50 liegt der
Endabschnitt der Betätigungsklaue 162 zwischen der Platte
136 und dem Standrohr 2, d.h. auf der vom Betrachter abgewandten Seite der Platte 136. Durch die Schwenkbewegung
des Bügels 50 im Gegenuhrzeigersinn (gemäß Fig. 17) greift
die Betätigungsklaue 162 an der Platte 136 an und verschwenkt diese auf den Betrachter zu (Fig. 23). Hierdurch
wird die Stange 134 gedreht und die Verriegelungsplatte
132 des zweiten Standplatzes wird ebenfalls verschwenkt
(gemäß Fig. 23 zum Betrachter hin). Hierdurch wird die
Nase 130 des zweiten Bügels entriegelt, und dieser gelangt
unter Federeinwirkung in die in Fig. 17 gezeigte aktive
Position. Dabei wird die Verriegelungszunge 138 von der
Verriegelungsklaue 140 getrennt und das Fangrohr 12 des
zweiten Standplatzes kann nun unter Eigengewicht in die
Offenstellung schwenken. Dabei gelangt der Fortsatz 156
wiederum in den Bereich unmittelbar hinter dem unteren
Abschnitt 132 der Verriegelungsklaue 130. Dabei gleitet
der Fortsatz 156 über das untere Ende der Verriegelungsklaue 130 hinweg und wird dabei leicht gegen sein Eigengewicht nach oben verschwenkt. Nunmehr befindet sich der
Fortsatz 156 des Entriegelungsorgans 150 des Bügels 50
des zweiten Platzes in seiner aktiven Stellung in Bezug
auf die Verriegelungsklaue 130 für das Gewicht 100 des
Fangrohrs 12 der zweiten Einsperröffnung. Sobald nun die
zweite Kuh den zweithintersten Standplatz betritt, wird
der dort befindliche Bügel wiederum verschwenkt, das Gewicht 100 wird entriegelt, das Fangrohr 12 klappt nunmehr
unter Eigengewicht in seine Schließposition und wird dort
durch die Verriegelungsplatte 112 verriegelt, während andererseits die Platte 136, die Stange 134 und somit auch
die Platte 132 des dritthintersten Standplatzes verschwenkt
werden und der dort befindliche Bügel seine aktive Position einnimmt, wobei die Verriegelung 138, 140 des Fangrohrs 12 der dritten Einsperröffnung entriegelt wird
usw.. Bei der Schwenkbewegung des Bügels 50 in seine aktive Stellung gleitet die Betätigungsklaue 162 jeweils
über die obere Kante der Platte 136 und fällt schließlich hinter dieser Betätigungsplatte 136 (gemäß Fig.23),
d.h. auf deren Vorderseite, wieder in die in Fig. 23 gezeigte Position herab.

Bei der beschriebenen Ausführungsform ist das untere Ende
der Verriegelungsklaue 130 verlängert, so daß es unter
Eigengewicht die in Fig. 21 gezeigte Position einnimmt.
Die Verriegelungsklaue 130 kann jedoch von einer Zugfeder beaufschlagt werden, derart, daß diese versucht, die
Verriegelungsklaue im Gegenuhrzeigersinn zu verdrehen.
Hierdurch ist die Verriegelung des Gewichts 100 unabhängig von der Schwenkbewegung des Fangrohrs 12 stets gesichert, solange nicht das Entriegelungsorgan 150 entriegelnd angreift.

Im folgenden soll eine konkrete Ausführungsform des Steuersystems gemäß Fig. 11 erläutert werden. Jeder Sensor S1 bis SN trägt dabei einen Permanentmagneten, welcher in unmittelbarer Nähe der in Form von Reed-Schaltern vorgesehenen Treiberorgane T1 bis TN und Tr1 bis TrN bewegt werden kann. Die Reed-Schalter T1 bis TN sind normalerweise ausgeschaltet, während die Reed-Schalter Tr1 bis TrN normalerweise eingeschaltet sind. Sie werden durch das Magnetfeld des Permanentmagneten in die jeweils andere Schaltstellung gebracht. Die Steuereinheiten St1 bis StN bestehen somit jeweils aus einem beweglichen Permanentmagneten sowie aus dessen Magnetfeld. Die Reed-Schalter werden in der umgeschalteten (unnormalen) Schaltstellung gehalten, solange die Tiere in die Einsperröffnung eingesperrt sind, d.h. solange der Permanentmagnet in der Nähe der Reed-Schalter verbleibt. Somit liegen Sensoren vom Haltetyp mit Dauersignal vor.

Bei den Ventilen d1 bis $d_{N-1}$ handelt es sich um Leistungsdioden. Der Laststrom fließt zunächst über den geschlossenen Reed-Schalter Tr1 und das Antriebsorgan H1 zur Erdleitung. Daher ist das Antriebsorgan H1 erregt und das zugeordnete Fangorgan befindet sich in Öffnungsposition. Da der Reed-Schalter T1 und auch die nachfolgenden Reed-Schalter t2 bis tN geöffnet sind, werden die Antriebsorgane H2 bis HN nicht mit Strom beaufschlagt. Die zugeordneten Fangorgane sind daher geschlossen. Sobald die erste Kuh den hintersten Platz betritt, wird der Bügel 50 verschwenkt. Der Permanentmagnet gelangt in unmittelbare Nähe der beiden Reed-Schalter t1 und Tr1. Der Reed-Schalter t1 wird eingeschaltet und der Reed-Schalter Tr1 wird ausgeschaltet. Nunmehr fließt der Laststrom über den normalerweise geschlossenen Reed-Schalter Tr2 und das Antriebsorgan H2 zur Erde, so daß das zugeordnete Fangorgan geöffnet wird, während andererseits der Reed-Schalter Tr1 geöffnet wird, so daß das Antriebsorgan H1 entregt wird und das zugeordnete Fangorgan in seine Schließposition fällt. Ein Stromfluß über die Diode vom Reed-Schalter Tr1 zum Antrieb H2 oder vom Reed-Schalter Tr2 zum Antrieb H3 usw. wird durch die Polung der Diode verhindert. Nachdem alle Kühe eingesperrt sind, werden sie gemolken. Nach beendetem Melkvorgang müssen sie wieder gemeinsam entlassen werden. Hierzu erzeugt die Zentralsteuereinheit ZSt ein Signal, welches einen als Treiber Tr vorgesehenen, normalerweise offenen Schaltkontakt schließt. Nun fließt der Laststrom der Reihe nach über die Reed-Kontakte T1, T2, ... TN und sodann über den geschlossenen Schalter Tr und von dort parallel über sämtliche Antriebsorgane HN bis H1, und zwar zum Teil über die in Durchlaßrichtung gepolten Leistungsdioden $d_{N-1}$ bis d1, und danach schließlich wiederum zur Erdleitung. Hierdurch werden sämtliche Fangorgane in Öffnungsstellung geschwenkt. Die Kühe verlassen nun den Melkstand und die Bügel 50 schwenken wieder in ihre inaktive Position. Hierdurch werden die Magnete räumlich von den Reed-Schaltern t1 bis tN und Tr1 bis TrN getrennt, so daß diese ihre Normalschaltstellung einnehmen. Nunmehr wird der Schalter Tr durch die Zentralsteuereinheit geöffnet, so daß der Laststrom wiederum nur über Tr1 und H1 zur Erdleitung fließen kann. Es ist offensichtlich, daß die Energieleitungen auch aus pneumatischen Leitungen bestehen können. In diesem Falle handelt es sich bei den Treiberorganen t1 bis tN und Tr1 bis TrN um pneumatische Ventile, während die Sperrorgane d1 bis $d_{N-1}$ Rückschlagventile sind, welche den Luftstrom nur in einer Richtung durchlassen.

Im folgenden soll eine konkrete Ausführungsform des Steuersystems der Fig. 10 erläutert werden. Dabei bedeuten

$\tau$1 bis $\tau$N normalerweise geschlossene Reed-Kontakte. Im übrigen ist der Aufbau der gleiche wie bei dem konkreten Ausführungsbeispiel des Steuersystems gemäß Fig. 11. Die Wirkungsweise ist ebenfalls analog, mit der Ausnahme, daß nun der zur Entlassung der Tiere dienende Betätigungsstrom von der positiven Leitung über die geschlossenen Reed-Schalter t1 und über die Antriebsorgane H1 bis HN und sodann über die Leistungsdioden d1 bis $d_{N-1}$ zur Erde fließt.

Im folgenden soll eine konkrete Ausführungsform der Steuersysteme der Fig. 8 und 9 erläutert werden. Dabei werden als Treiberorgane t1 bis tN, Tr1 bis TrN bzw. $\tau$1 bis $\tau$N Thyristoren oder Triacs verwendet. Jeder dieser Thyristoren kann durch ein kurzzeitiges Zündsignal gezündet werden. Dieses Zündsignal wird durch den Sensor S1 bereitgestellt. Dieser kann z.B. in Form eines Permanentmagneten auf eine Zündsteuereinrichtung in der Steuereinheit St1 bis StN einwirken. Die Thyristoren t1 bis tN sind in der Ausgangsposition des Melkstandes (vor der Platzeinweisung) nicht leitend. Sie werden daher durch die Betätigung der Sensoren S1 bis SN gezündet. Andererseits sind die Thyristoren Tr1 bis TrN in diesem Stadium des Melkstandes leitend. Das gleiche gilt für die Thyristoren $\tau$1 bis $\tau$N. Sie müssen daher unter Auslösung durch die Sensoren S1 bis SN gelöscht werden. Bei Thyristoren geringer Leistung kann die Löschung mit Hilfe einer Löschschaltung über die Steuerelektrode erfolgen. Bei Thyristoren höherer Leistung sind gesonderte Löschschaltungen erforderlich. In jedem Falle kann jedoch die Löschschaltung von den Sensoren S1 bis SN getriggert werden. Löschschaltungen sind in großer Zahl bekannt. Bei zweckentsprechender Wahl der Löschschaltung kann die Löschung des Thyristors Tr1 bzw. des Thyristors $\tau$1 auch durch die Zündung des Thyristors t1 herbeigeführt werden. Nach beendetem Platzeinweisungs-
und Einsperrvorgang werden die Kühe gemolken. Danach
müssen sie wieder entlassen werden. Hierzu werden sämtliche Steuereinheiten St1 bis StN von der Zentralsteuereinheit mit einem    Signal        beaufschlagt, welches
dazu führt, daß die Steuerelektroden der Thyristoren Tr1
bis TrN bzw. $\tilde{\iota}$1 bis $\tilde{\iota}$N  mit einem Zündsignal beaufschlagt werden. Hierdurch werden sämtliche Antriebsorgane
H1 bis HN erregt. Nun sind sämtliche Thyristoren gezündet.
Alle Einsperrorgane sind in Offenstellung und die Kühe
verlassen den Melkstand. Nun muß der Melkstand in den
Ausgangszustand zurückversetzt werden. Hierzu müssen die
Thyristoren t1 bis tN gelöscht werden. Für diese Löschung
kann die Rückwärtsbewegung des Sensormagneten S1 bis SN
genutzt werden. Dieser erzeugt dabei in der Steuereinheit
St1 bis StN ein umgekehrt polarisiertes Signal, welches
auf die Löschschaltung für die Thyristoren t1 bis tN einwirkt und diese triggert. Bei diesen Ausführungsformen
kann auch die gemeinsame Steuerleitung weggelassen werden. In diesem Falle werden die Thyristoren über die
Laststromleitung gesteuert. Das Löschen der Thyristoren
geschieht dabei einfach durch einen Trennschalter in der
Laststromleitung, welcher von der Zentralsteuereinheit
betätigt wird. In diesem Zustand befinden sich sämtliche
Fangorgane in Ruhestellung, d.h. in Schließposition. Sie
verbleiben in dieser Position, auch wenn der Trennschalter wieder geschlossen wird. Nunmehr muß der Thyristor
Tr1 gezündet werden. Im Falle der Fig. 9 müssen sämtliche Thyristoren $\tilde{\tau}$1 gezündet werden. Hierzu sind die Steuereinheiten St1 bis StN mit der Laststromleitung verbunden, dergestalt, daß das erneute Einschalten des Laststroms zu einem Zündsignal für die Thyristoren $\tilde{\iota}$1 bis
$\tilde{\iota}$N bzw. für den Thyristor Tr1 führt. Dabei werden die
Thyristoren Tr2 bis TrN erst während des Platzeinweisungsablaufs gezündet bzw. gelöscht.

Selbstverständlich können anstelle der Thyristoren auch
Transistoren vorgesehen sein oder andere bistabile elektronische Festkörperschalter.

Im folgenden soll eine pneumatische Ausführungsform des
Steuersystems gemäß Fig. 8 erläutert werden, bei der die
gemeinsame Steuerleitung fehlt. Hierzu wird auf Fig. 24
Bezug genommen. Jedem Standplatz ist dabei ein Steuer-
und Antriebsmodul zugeordnet. In Fig. 24 ist dabei jeweils nur ein Steuermodul in symbolischer Darstellung gezeigt, und zwar in verschiedenen Schaltstellungen. Das
Treiberorgan tn ist in Form eines Zwei/Zwei-Wegeventils
vorgesehen. Dieses ist in der Normalstellung nicht
schraffiert. Es sperrt in Normalstellung den Luftstrom.
Das Treiberorgan Tr1 hat in Fig. 24a ebenfalls seine Normalstellung. Es ist daher nicht schraffiert. In dieser
Normalstellung ist der Entlüftungsauslaß des pneumatischen Zylinders geschlossen, während der Einlaß desselben geöffnet ist. In der Betätigungsstellung dieses Ventils ist umgekehrt der Entlüftungsausgang geöffnet, während der Lufteinlaß verschlossen ist. Beide Ventile sind
von einer Feder beaufschlagt, welche gemäß Fig. 24a entspannt ist. Das Ventil tn ist mechanisch betätigbar, und
zwar durch eine verschiebbare Betätigungsstange 400. Diese ist mit dem Betätigungsbügel 50 verbunden und wirkt
als Sensor. In Fig. 24a nimmt die Betätigungsstange 400
ihre Ruheposition ein. In dieser Position ist ein Absperrventil 402 verschlossen. Das Ventil Trn ist mit
Druckluft betätigbar. Die zur Steuerung dienende Druckluft gelangt jedoch nicht zum Ventil, da das Sperrventil
402 verschlossen ist. Als Steuerungsdruckluft dient die
Druckluft für die Fangrohrbetätigung. In der in Fig. 24a
gezeigten Schaltposition der Ventile ist der pneumatische
Zylinder betätigt und das zugeordnete Fangrohr ist geöffnet.

In der Ausgangsposition gilt n = 1. Dabei steht auf der pneumatischen Leitung der Druck P = 1. Alle nachfolgenden Fangrohre sind geschlossen. Die zugeordnete Ventilstellung wird weiter unten erläutert. Nunmehr betritt das erste Tier den Platz und es wirkt dabei auf die verschiebbare Betätigungsstange 400 ein. Hierbei gelangt eine Durchlaßöffnung 404 in den Bereich des Absperrventils 402. Nunmehr wird das Ventil Trn mit Druck beaufschlagt. Es bewegt sich gegen die Kraft der Feder in seine andere Schaltstellung, so daß der pneumatische Zylinder des ersten Standplatzes entlüftet wird, während die Lufteinlaßleitung verschlossen wird. Das zugeordnete Fangorgan klappt daher in seine Schließstellung herab. Gleichzeitig wird nun die verschiebbare Stange ebenfalls von Druckluft beaufschlagt, welche insofern eine Haltefunktion ausübt. Dies ist durch den Pfeil 406 in Fig. 24b angedeutet. Gleichzeitig wird die Betätigungsstange 400 aber auch durch das eingesperrte Tier in der in Fig. 24a gezeigten Stellung gehalten, was durch das Symbol 408 angedeutet ist. Bei der Verschiebung der Betätigungsstange 404 nach links wird das Absperrventil tn (im vorliegenden Fall t1) gegen die Kraft der Feder verschoben und somit geöffnet. Vorher befindet sich die Ventilanordnung des zweiten Standplatzes in der Schaltstellung gemäß 24a, jedoch mit dem Unterschied, daß das Ventil 402 nicht von Druck beaufschlagt ist, so daß der geschwärzte Teil fehlt. Nach der Betätigung des Ventils t1 liegt jedoch Druckbeaufschlagung vor, so daß die Ventileinrichtung den Zustand gemäß Fig. 24a aufweist. Nun wiederholt sich der gleiche Vorgang, bis zum letzten Standplatz. Dabei fehlt jedoch das Ventil tN. An dessen Stelle ist die Druckluftleitung hier ständig verschlossen. Sodann werden sämtliche Tiere gemolken. Nach dem Melkvorgang müssen die Tiere entlassen werden. Hierzu dient ein Druckimpuls über die Hauptdruckluftleitung. Dieser Vorgang ist in Fig. 24a dargestellt. Der Druck wird auf Null abgesenkt (P = O). Hierdurch entfällt die Druckbeaufschlagung 406 der verschiebbaren Betätigungsstange 404. Diese wird jedoch nach wie vor durch das eingesperrte Tier gehalten. Sie verbleibt daher in der in Fig. 24c gezeigten Position, so daß die Ventile tn allesamt geöffnet bleiben. Andererseits entfällt jedoch die Druckbeaufschlagung der Ventile Trn (n = 1 bis N), und diese werden unter der Einwirkung der Druckfeder in die Normalposition zurückbewegt. Das Ventil Trn ist daher in Fig. 24c nicht schraffiert. Hierdurch wird der Luftzufuhreinlaß des pneumatischen Zylinders geöffnet, während der Entlüftungsauslaß geschlossen wird. Der pneumatische Zylinder wird jedoch noch nicht betätigt, da der Luftdruck zunächst noch den Wert Null hat. Des weiteren wird nun aber eine Verriegelung wirksam, welche durch einen Pfeil 410 angedeutet ist. Das Verriegelungsorgan 410 ist an der verschiebbaren Betätigungsstange 404 befestigt und nimmt eine aktive Position nur ein, wenn die Betätigungsstange gemäß Fig. 24c die linke Stellung einnimmt. Wenn bei dieser Stellung der Betätigungsstange 404 das Ventil Trn unter Federdruck in die Normalposition zurückkehrt, so wird es in dieser Position durch das Verriegelungsorgan 410 verriegelt. Nunmehr wird wiederum die Druckluft eingeschaltet. Dies führt zunächst wiederum zu einer Druckbeaufschlagung der Betätigungsstange 404. Dies ändert jedoch nichts am Schaltzustand. Darüberhinaus erfolgt auch eine Druckbeaufschlagung des Ventils Trn. Dieses ist nun jedoch verriegelt und kann daher nicht in seine Betätigungsstellung bewegt werden. Andererseits wird nun aber der pneumatische Zylinder betätigt, so daß sämtliche Fangrohre in die Offenstellung geschwenkt werden. Nun können die Tiere den Melkstand verlassen. Dieser Zustand ist in Fig. 24d gezeigt.

Nun wird der Luftdruck wiederum abgeschaltet (P = 0).
Hierdurch wird die Haltefunktion des Luftdrucks beseitigt
und die Betätigungsstange 404 wird unter dem Einfluß der
Druckfeder des Ventils tn wiederum in ihre rechte Endlage
geschoben. Hierdurch werden sämtliche Ventile tn wiederum
versperrt. Andererseits werden auch die Verriegelungsorgane 410 ausgeklinkt und die Ventile 402 werden verschlossen. Sodann wird erneut Druck auf die Luftdruckleitung gegeben und man kehrt zum Zustand der Fig. 24a zurück, in dem das erste Fangorgan sich in Offenstellung befindet. Der Melkstand ist nun für den nächsten Arbeitszyklus bereit.

Im folgenden werden einige wichtige Merkmale der Erfindung zusammenfassend aufgezählt:

1. Einsperrgitter für Rinder mit Einsperröffnungen, deren seitliche Begrenzungen die Tiere hinter dem Kopf halten und deren obere Begrenzung durch jeweils ein bewegbares Fangorgan gebildet ist, das ein Herausheben des Halses aus der Einsperröffnung in verriegelter Schließstellung verhindert und in geöffneter Stellung erlaubt, dadurch gekennzeichnet, daß das Fangorgan (12) aus der entriegelten Schließstellung aufwärts verschiebbar ist oder aufwärts verschwenkbar, wobei in der normalen Öffnungsstellung sein Schwerpunkt den oberen Totpunkt nicht erreicht.

2. Einsperrgitter, insbesondere nach 1, dadurch gekennzeichnet, daß das Fangorgan (12) in Schließstellung die obere Begrenzung (14) und/oder einen oberen Teil (16) einer der seitlichen Begrenzungen (7) der Einsperröffnung bildet.

3. Einsperrgitter nach 2, dadurch gekennzeichnet, daß das Fangorgan (12) in Schließstellung die obere Hälfte bis zum oberen Drittel der seitlichen Begrenzung bildet.

4. Einsperrgitter nach 1 bis 3, dadurch gekennzeichnet, daß durch Versetzung der seitlichen Begrenzungen (2,7) die Einsperröffnungen schräg zur Richtung ihrer Aufeinanderfolge stehen.

5. Einsperrgitter nach 4, dadurch gekennzeichnet, daß die Fangorgane (12) in Schließstellung jeweils den oberen Teil (16) der dem Tier zugewandten, seitlichen Begrenzung (7) bilden.

6.      Einsperrgitter nach                 1 bis 5,
dadurch gekennzeichnet, daß die Fangorgane (12) um eine
horizontale Schwenkachse (10) verschwenkbar sind.

7.      Einsperrgitter nach         6, dadurch gekennzeichnet, daß die Schwenkachsen (10) der Fangorgane (12)
parallel oder schräg zur Richtung der Aufeinanderfolge
der Einsperröffnungen stehen.

8.      Einsperrgitter nach         7, dadurch gekennzeichnet, daß die den Tieren zugewandten Endbereiche der
Fangorgane (12) seitlich und nach unten gekrümmt sind.

9.      Einsperrgitter nach                 1 bis 8,
dadurch gekennzeichnet, daß jedes Fangorgan (12) an einem
horizontalen Holm (4) angelenkt ist und in Schließstellung teilweise an diesem anliegt.

10.      Einsperrgitter nach         9, dadurch gekennzeichnet, daß jeder Holm (4) sich von einem die andere
seitliche Begrenzung der Einsperröffnung bildenden Standrohr (2) nach hinten zu einer zweiten Befestigungsstelle
erstreckt.

11.      Einsperrgitter nach                 1 bis 10,
dadurch gekennzeichnet, daß die schwenkbaren Fangorgane
(12) über die Anlenkstelle (10) hinaus verlängert sind.

12.      Einsperrgitter nach                 1 bis 10,
dadurch gekennzeichnet, daß den Fangorganen (12) eine gemeinsame und/oder jeweils eine gesonderte Antriebseinrichtung (H;H1-HN) zugeordnet ist bzw. sind zur Öffnung
und/oder Schließbewegung derselben gegen die Schwerkraft.

13. Einsperrgitter nach 1 bis 12,
dadurch gekennzeichnet, daß das Fangorgan (12) in Schließstellung durch formschlüssiges Zusammenwirken mit dem
eingesperrten Tier verriegelt ist.

14. Einsperrgitter nach 1 bis 13,
dadurch gekennzeichnet, daß jedes Fangorgan (12) durch
ein Verriegelungsorgan (21) in Schließstellung gehalten wird.

15. Einsperrgitter nach 12 bis 14, dadurch gekennzeichnet, daß die Verriegelungsorgane (21)
durch die Antriebseinrichtung(en) (H;H1-HN) entriegelbar
sind.

16. Einsperrgitter nach 14 oder 15
dadurch gekennzeichnet, daß das Verriegelungsorgan (21)
selbstverriegelnd ausgebildet ist.

17. Einsperrgitter nach 16, dadurch gekennzeichnet, daß das Verriegelungsorgan (21) als eine
Hebelstange (22) mit einer von der Anlenkachse (10) des
Fangorgans (12) verschiedenen Drehachse (20) ausgebildet
ist und verriegelnd hinter eine Nase (32) am Fangorgan
(12) greift.

18. Einsperrgitter nach 17, dadurch gekennzeichnet, daß die Antriebseinrichtung(en) (H;H1-HN) entriegelnd an der Hebelstange (22) oder an der inaktivierbaren Nase (32) angreift bzw. angreifen, die deren Antriebsbewegung durch Mitnehmerwirkung auf die Fangorgane
(12) übertragen.

19. Einsperrgitter nach 12 bis 18,
dadurch gekennzeichnet, daß die Antriebseinrichtung(en)
(H;H1-HN) als Druck- oder Zugeinrichtung(en) ausgebildet
ist bzw. sind.

20. Einsperrgitter nach 12 bis 19, gekennzeichnet durch eine Steuereinrichtung (200) zur selektiven Ansteuerung der Antriebe (H;H1-HN) der Fangorgane (12) und gegebenenfalls zusätzlicher, die Einsperröffnungen versperrender Sperrorgane (72 ) sowie der zugeordneten Verriegelungsorgane.

21. Einsperrgitter nach 20, dadurch gekennzeichnet, daß die Steuereinrichtung (200) ansprechend auf einen Platzeinweisungsauslöser (ST ) zur geordneten Platzeinweisung die Fangorgane (12) sukzessive von hinten nach vorn fortschreitend zur Freigabe der Einsperröffnungen ansteuert.

22. Einsperrgitter, insbesondere nach 21, dadurch gekennzeichnet, daß eine sukzessive oder simultane Ansteuerung durch einen einer hinteren, vorzugsweise der hintersten, offenen Einsperröffnung zugeordneten Sensor (S1) auslösbar ist, welcher auf das dort eindringende Tier anspricht.

23. Einsperrgitter nach 22, dadurch gekennzeichnet, daß mindestens mehreren der Einsperröffnungen und vorzugsweise allen Einsperröffnungen je ein Sensor (S1-SN) zugeordnet ist, welcher auf das eindringende Tier anspricht.

24. Einsperrgitter nach 23, dadurch gekennzeichnet, daß jeweils nur der einer offenen Einsperröffnung zugeordnete Sensor (S1-SN) wirksam ist.

25. Einsperrgitter nach 20 bis 24, dadurch gekennzeichnet, daß die Steuereinrichtung (200) auf einen Einsperrauslöser anspricht und alle Fangorgane (12) zur Schließung der Einsperröffnungen simultan oder sukzessive ansteuert.

26.    Einsperrgitter nach          25, dadurch gekennzeichnet, daß der Einsperrauslöser als ein auf das die
richtige Einsperrstellung einnehmende Tier ansprechender,
der hintersten Einsperröffnung zugeordneter Fühler (S1)
ausgebildet ist.

27.    Einsperrgitter nach          20 bis 24,
dadurch gekennzeichnet, daß mindestens mehreren der Einsperröffnungen und vorzugsweise jeder Einsperröffnung je
ein Fühler zugeordnet ist, welcher auf das jeweilige, die
richtige Einsperrposition einnehmende Tier anspricht und
das Fangorgan (12) der zugeordneten Einsperröffnung und/
oder das Fangorgan bzw. die Fangorgane (12) einer hinteren, vorzugsweise der nächsthinteren, Einsperröffnung
oder Gruppe ,von Einsperröffnungen zusteuert.

28.    Einsperrgitter nach          26 und 27,
dadurch gekennzeichnet, daß die der Gruppe der zweiten
bis (N-1)-ten Einsperröffnung zugeordneten Fühler (S2-
$S_{N-1}$) auch als Sensoren für die Platzeinweisung wirken.

29.    Einsperrgitter nach          20 bis 28,
dadurch gekennzeichnet, daß die Steuereinrichtung (200)
auf einen Entlassungsauslöser (SE ) anspricht und alle
Fangorgane (12) simultan oder sukzessive von dem hintersten nach vorn fortschreitend aufsteuert und gegebenenfalls jedes aufgesteuerte Fangorgan (12) vor der Aufsteuerung des nächstvorderen, noch geschlossenen Fangorgans,
vorzugsweise ansprechend auf den Sensor wieder zusteuert.

30.    Einsperrgitter, insbesondere nach          29, dadurch gekennzeichnet, daß die Steuereinrichtung (200) auf
Melkzeugabnahmevorgänge anspricht und jeweils das einem
abgenommenen Melkzeug zugeordnete Fangorgan (12) oder die
einer geschlossenen Gruppe von abgenommenen Melkzeugen
zugeordneten Fangorgane (12) aufsteuert.

31.    Einsperrgitter nach          30 , dadurch gekennzeichnet, daß das jeweils vorderste, aufgesteuerte Fangorgan (12) durch mindestens ein bereits fertig gemolkenes,
aber noch eingesperrtes Tier von den noch Milch spendenden
Tieren getrennt ist.

32.    Einsperrgitter, insbesondere nach
       20 bis 31, dadurch gekennzeichnet, daß die Steuereinrichtung (200) zusätzlich ein Eingangstor (ET) und ein
Ausgangstor (AT) des Melkstandes ansteuert.

33.    Einsperrgitter nach          32, dadurch gekennzeichnet, daß der Fühler (SN) der vordersten Einsperröffnung das Eingangstor (ET) zusteuert.

34.    Einsperrgitter nach                    32 oder 33,
dadurch gekennzeichnet, daß die Steuereinrichtung (200)
bei der der Tierentlassung dienenden Aufsteuerung der
Fangorgane (12) zusätzlich das Ausgangstor (AT) aufsteuert.

35.    Einsperrgitter nach               32 bis 34,
dadurch gekennzeichnet, daß das Eingangstor (ET) und das
Ausgangstor (AT) sich jeweils unter Eigengewicht in die
Schließstellung bewegen und vorzugsweise als horizontal
oder vertikal verschiebbare oder um eine horizontale oder
vertikale Achse verschwenkbare Gatter ausgebildet sind.

36.    Einsperrgitter, insbesondere nach
       12 bis 35, dadurch gekennzeichnet, daß jedem Fangorgan (12) und gegebenenfalls jedem Sperrorgan ( 72 )
und gegebenenfalls dem Eingangstor (ET) und dem Ausgangstor (AT) ein gesonderter, in einer Richtung oder in zwei
Richtungen wirkender  Solenoidantrieb oder            gesteuerter, pneumatischer oder hydraulischer Antrieb oder
Elektromotorantrieb oder mechanischer Antrieb zugeordnet
ist.

37.    Einsperrgitter nach                    12 bis 35,
dadurch gekennzeichnet, daß allen Fangorganen (12) ein
gemeinsamer, manueller Antrieb, Solenoidantrieb oder
Solenoid-gesteuerter, pneumatischer oder hydraulischer
Antrieb oder Elektromotorantrieb zugeordnet ist.

38.    Einsperrgitter nach          37, dadurch gekennzeichnet, daß alle Fangorgane (12) oder ein Teil der Fangorgane (12) über je einen Betätigungsenergiespeicher
(105), vorzugsweise eine  Druck-Zug- oder Torsionsfeder,
und je eine ein- und ausschaltbare Kupplung ( Kn) mit
der gemeinsamen Antriebseinrichtung (H) verbunden sind.

39.    Einsperrgitter nach                    36 bis 38,
gekennzeichnet durch eine Zentralsteuerungseinheit (ZSt),
welche die Signale der Sensoren (S1-SN) empfängt und eine
Zentraltreiberschaltung (Tr) ansteuert, welche über je
eine Energieversorgungsleitung mit den Einzelantrieben
(H1-HN) verbunden ist.

40.    Einsperrgitter nach                    35 bis 37,
gekennzeichnet durch eine Zentralsteuereinheit (ZSt),
welche die Signale der Sensoren (S1-SN) empfängt und Betätigungssignale an Einzeltreiberschaltungen (Tr1-TrN)
aussendet,die in Reihe zu den Antriebsorganen (H1-HN)
geschaltet sind, welche von einer gemeinsamen Energieversorgungsleitung beaufschlagbar sind.

41.    Einsperrgitter nach                    35 bis 37,
dadurch gekennzeichnet, daß jedem Einzelantrieb (H1-HN)
eine Einzelsteuereinheit (St1-StN) zugeordnet ist, wobei
der Sensor (Sn; n=1-N) jeweils die zugeordnete Steuereinheit (Stn) und/oder eine oder mehrere hintere, vorzugsweise
nächsthintere Steuereinheit bzw. eine oder mehrere vordere,
vorzugsweise nächstvordere Steuereinheit ($St_{n+1}$) mit einem
Steuersignal beaufschlagt, und zwar im Sinne einer Abschaltung bzw. einer Einschaltung des zugeordneten Antriebsorgans.

42.	Einsperrgitter nach	41, dadurch gekennzeichnet, daß sämtliche Steuereinheiten (St1-StN) von
einer Zentralsteuereinheit (ZSt) zur Entlassung der Tiere
und zur Wiederherstellung eines Ausgangszustandes ansteuerbar sind, und zwar entweder über eine gesonderte
Steuerleitung oder über die Hauptenergieversorgungsleitung.

43.	Einsperrgitter nach	36 bis 38,
dadurch gekennzeichnet, daß jedem Standplatz zwei Treiberorgane (tn bzw. Trn) zugeordnet sind (n=1-N), wobei
jeweils die ersten Treiberorgane (tn) in Reihe in der
Hauptenergieversorgungsleitung liegen und diese normalerweise sperren, während sämtliche anderen Treiberorgane
(Trn) in Reihenschaltung mit den zugeordneten Antriebsorganen (H1-HN) parallel zueinander geschaltet sind und
normalerweise die Energiezufuhr zum Antriebsorgan (Hn)
gestatten, und wobei jeder Sensor (Sn) über eine zugeordnete Steuereinheit (Stn) beide Treiberorgane (tn bzw.
Trn) umsteuert im Sinne einer selektiven Einsperrung und
Platzfreigabe.

44.	Einsperrgitter nach	43, dadurch gekennzeichnet, daß sämtliche Steuereinheiten (St1-StN) von
einer Zentralsteuereinheit (ZSt) über eine gemeinsame
Steuerleitung im Sinne einer gemeinsamen Entlassung sämtlicher Tiere bzw. einer Wiederherstellung des Ausgangszustandes des Melkstandes ansteuerbar sind.

45.	Einsperrgitter nach	43, dadurch gekennzeichnet, daß eine zusätzliche Energieversorgungsleitung sich gemeinsam über alle Einlässe der Antriebsorgane (H1-HN) erstreckt, wobei zwischen den Anschlußstellen
der Antriebsorgane (H1-HN) jeweils den Energiefluß in
einer Richtung sperrende Organe (d1-$d_{N-1}$) und/oder sensorgesteuerte Treiber vorgesehen sind.

46.    Einsperrgitter nach          36 bis 38,
dadurch gekennzeichnet, daß jedem Standplatz zwei Treiberorgane (t1 bzw. $\tilde{\tau}$1) zugeordnet sind, wobei die erste
Gruppe der Treiberschaltungen (t1 bis tN) jeweils in Reihenschaltung in der Hauptenergiezufuhrleitung liegt, während die andere Gruppe der Treiberschaltungen ( $\tilde{\tau}$1- $\tilde{\tau}$N)
ebenfalls in Reihenschaltung in der Energierückführleitung
(z.B.Erdungsleitung) liegt, und wobei die erste Gruppe der
Treiberorgane (t1-tN) normalerweise offen ist, während die
zweite Gruppe von Treiberorganen ( $\tilde{\tau}$1- $\tilde{\tau}$N) normalerweise
geschlossen ist, und wobei die beiden Treiberorgane eines
jeden Standplatzes von einer jeweiligen Einzelsteuereinheit (St1-StN) angesteuert werden, welche ein Steuersignal
vom zugeordneten Sensor (S1-SN) empfängt.

47.    Einsperrgitter nach          46, dadurch gekennzeichnet, daß die Einzelsteuereinheit (St1-StN) Steuersignale von einer Zentralsteuereinheit über eine gemeinsame
Steuerleitung empfängt zum Zwecke der Entlassung der
Tiere und der Wiederherstellung des Ausgangszustandes.

48.    Einsperrgitter nach          46, gekennzeichnet
durch eine  gesonderte Energierückführleitung, welche
sämtliche Ausgänge der Antriebsorgane (H1-HN) miteinander
und über ein Treiberorgan (Tr) mit der Energiequelle
(z.B.Erde) verbindet, wobei das Treiberorgan (Tr) von der
Zentralsteuereinheit (ZSt) ansteuerbar ist und wobei in
den Abschnitten der zusätzlichen Energieleitung zwischen
jeweils zwei Auslässen zweier Antriebsorgane ein den
Energiefluß in einer Richtung sperrendes Organ (d1-$d_{N-1}$)
und/oder sensorgesteuerter Treiber liegt.

49.    Einsperrgitter nach            36 bis 48,
dadurch gekennzeichnet, daß die Steuereinrichtung (200)
eine elektrische Logikschaltung zur Verknüpfung der Betätigungszustände des Platzeinweisungsauslösers ( ST )
und/oder der Sensoren (S1-SN) und/oder des Einsperrauslösers        und/oder der Fühler und/oder des Entlassungsauslösers ( SE ) und/oder der Melkzeugabnahmeeinrichtungen mit den Antrieben (H1-HN) oder mit dem gemeinsamen Antrieb (H) und den Kupplungen (K1-KN) und gegebenenfalls mit den Verriegelungen der Fangorgane (12)
und gegebenenfalls der Sperrorgane (72 ) und gegebenenfalls des Eingangstors (ET) und des Ausgangstors (AT)
umfaßt.

50.    Einsperrgitter nach            49, dadurch gekennzeichnet, daß auf die Öffnungsstellung und Schließstellung der Antriebe oder Fangrohre Endlagenschalter ansprechen, welche in die elektrische Logikschaltung eingreifen.

51.    Einsperrgitter nach                    49 oder 50,
dadurch gekennzeichnet, daß die elektrische Logikschaltung eine Relaisschaltung ist.

52.    Einsperrgitter nach          51, dadurch gekennzeichnet, daß die Relaisschaltung zur sukzessiven Platzeinweisungssteuerung und/oder Einsperrsteuerung und/oder
Entlassungssteuerung und gegebenenfalls zur Steuerung
des Eingangstors (ET) und Ausgangstors (AT) ein  Sequenzrelais        mit je mindestens einem Kontaktpaar für jeweils eine Einsperröffnung oder eine Gruppe von Einsperröffnungen umfaßt.

53.    Einsperrgitter nach                    51 oder 52,
dadurch gekennzeichnet, daß der Antrieb (H1-HN) eines jeden Fangorgans (12) durch ein Halterelais (R1-RN) angesteuert wird.

54.    Einsperrgitter nach          53, dadurch gekennzeichnet, daß das hinterste Halterelais (R1) durch einen
Startschalter (ST) erregbar ist und daß die anderen Halterelais (R2-RN) durch den Sensor ($S1-S_{N-1}$) einer weiter
hinten gelegenen, vorzugsweise der nächsthinteren, Einsperröffnung erregbar sind.

55.    Einsperrgitter nach          53, dadurch gekennzeichnet, daß im Erregerkreis des zweiten bis n-ten Halterelais (R2-RN) je ein normalerweise offener Kontakt (r1-
$r_{N-1}$) des nächsthinteren Halterelais ($R1-R_{N-1}$) liegt.

56.    Einsperrgitter nach                    53 bis 55,
dadurch gekennzeichnet, daß im Antriebskreis (H1-HN) eines jeden Fangorgans ein der Einsperrsteuerung dienender,
normalerweise geschlossener Kontakt ($\overline{r2-r_{N+1}}$) eines weiter vorn gelegenen, vorzugsweise des nächstvorderen, Halterelais ($R1-R_{N+1}$) liegt.

57.     Einsperrgitter nach                    53 bis 56, dadurch gekennzeichnet, daß ein normalerweise offener Kontakt (r1) des ersten Halterelais (R1) im Antriebskreis des Eingangstors ( ET) liegt.

58.     Einsperrgitter nach                    53 bis 57, dadurch gekennzeichnet, daß der Sensor (SN) der vordersten Einsperröffnung ein zusätzliches Halterelais ($R_{N+1}$) ansteuert, das mit je einem normalerweise geschlossenen Kontakt den Antriebskreis (HN) des vordersten Fangrohrs (12) und gegebenenfalls den Antrieb des Eingangstors (ET) ansteuert.

59.     Einsperrgitter nach                    ·53 bis 58, dadurch gekennzeichnet, daß alle Halterelais ($R1-R_{N+1}$) durch je einen normalerweise geschlossenen Kontakt ($\overline{r_{N+2}}$) entregbar sind.

60.     Einsperrgitter nach                    53 bis 59, dadurch gekennzeichnet, daß die Antriebe (H1-HN) aller Fangorgane gegebenenfalls das Ausgangstor (AT) gemeinsam durch einen Entlassungsschalter ( SE ), gegebenenfalls über ein weiteres Halterelais (RE) ansteuerbar sind.

61.     Einsperrgitter nach                    49 und 50, dadurch gekennzeichnet, daß die elektrische Logikschaltung aus elektronischen Verknüpfungsgliedern besteht.

62.     Einsperrgitter nach ·                61, dadurch gekennzeichnet, daß jede Einsperröffnung einem gesonderten Ausgang (Q1-QN) eines Schieberegisters ( 210) zugeordnet ist, dessen Takteingang (T) die Signale der Sensoren (S1-SN) über eine Sequenzwählschaltung (221 ) empfängt.

63.    Einsperrgitter nach          62, dadurch gekennzeichnet, daß das Schieberegister (210) zur Einspeicherung
der Ausgangsstellung des Melkstandes parallele Eingänge
aufweist.

64.    Einsperrgitter nach          62 oder 63,
dadurch gekennzeichnet, daß das Schieberegister einen
Clear-Eingang zur Rücksetzung aller Ausgänge aufweist.

65.    Einsperrgitter nach          62 bis  64,
dadurch gekennzeichnet, daß das Schieberegister (210)
einen nachgeordneten, zusätzlichen Ausgang ($Q_{N+1}$) aufweist, der das Eingangstor (ET) über eine zusätzlich vom
Startsignal angesteuerte Logikschaltung steuert.

66.    Einsperrgitter nach          62 bis 65,
dadurch gekennzeichnet, daß die Sequenzwählschaltung
(221) für jeden Sensor (S1-SN) je ein UND-Glied (UND1-N)
aufweist, deren Ausgänge gemeinsam zum Takteingang (T)
des Schieberegisters (210) geführt sind und deren jeweils
zweiter Eingang mit dem der gleichen Einsperröffnung zugeordneten Ausgang (Q1-QN) des Schieberegisters (210) verbunden ist.

67.    Einsperrgitter nach          62 bis  66,
dadurch gekennzeichnet, daß die Ausgänge ($Q1-Q_{N+1}$) des
Schieberegisters (210) die Treiberschaltungen der gesonderten Antriebseinrichtungen (H1-HN) der Fangorgane (12)
und des Eingangstors (ET) direkt ansteuern.

68.    Einsperrgitter nach          62 bis 67,
dadurch gekennzeichnet, daß im Falle eines gemeinsamen,
über je eine Kupplung (K1-KN) und je einen Betätigungsenergiespeicher (105)        mit den Fangorganen (12) verbundenen Antriebs (H) die Ausgänge (Q1-QN) des Schiebe-

registers (210) direkt mit den Fangorganen (12) zugeordneten Magnetverriegelungen (V1-VN) verbunden sind, während die Ausgänge (Q2-Q$_{N+1}$) mit den Solenoidsteuereinrichtungen für die Kupplungen (K1-KN) verbunden sind.

69. Einsperrgitter nach 62 bis 68,
dadurch gekennzeichnet, daß eine Steuereinrichtung (200),
deren Schieberegister (210) für die größtmögliche Anzahl
der Einsperröffnungen eines Melkstandes ausgelegt ist,
auch für Melkstände mit einer geringeren Anzahl von Einsperröffnungen verwendet wird.

70. Einsperrgitter nach 49 oder 50,
dadurch gekennzeichnet, daß die elektrische Logikschaltung einen Folgeprogrammspeicher (250) mit einem Programm
zur Errechnung der jeweiligen Schaltungsfunktionen und
einen Mikroprozessor (251) umfaßt sowie eine Eingangswählschaltung (252) zur Auswahl der gemäß dem jeweils ausgelesenen Programmbefehl in der Mikroprozessorschaltung zu
verknüpfenden Eingangssignale (ST,S1-SN,SE,H1-HN), eine
Ausgangssteuerschaltung (253) zur Ansteuerung des im jeweiligen Programmbefehl bezeichneten Ausgangs (H1-HN,
HA,HE) und einen Steuerteil (254) umfaßt.

71. Einsperrgitter nach 61 bis 70,
gekennzeichnet durch ein Multiplex-Übertragungssystem
mit einem Multiplexer für die zentrale Steuereinheit und
je einem Multiplex-Empfangssystem für die einzelnen Einsperröffnungen, wobei jeder Einsperröffnung ein Kanal
zugeordnet ist mit Positionen für die Steuersignale, für
die Antriebe (H1-HN;V1-VN und K1-KN) und für die Meldesignale der Sensoren (S1-SN) und für die Rückmeldesignale
(H1-HN;V1-VN).

0091972

72.     Einsperrgitter nach                    41 oder 42,
dadurch gekennzeichnet, daß die Steuereinheit (St1-StN)
ein bistabiles Kippglied, vorzugsweise ein Flipflop, umfaßt, und daß sämtliche Kippglieder oder Flipflops (330)
nach Art eines Schieberegisters miteinander verkettet sind
und daß die Ausgänge jeweils mit den Treiberorganen verknüpft sind.

73.     Einsperrgitter nach          72, dadurch gekennzeichnet, daß die Signale der Sensoren (S1-SN) den Takteingängen (T) aller Flipflops (330) aller Standplätze gemeinsam zuführbar sind.

74.     Einsperrgitter nach                    72 oder 73,
dadurch gekennzeichnet, daß die Sensoren (S1-SN) jeweils
durch eine Verriegelungseinrichtung (342) verriegelt sind,
welche durch das Ausgangssignal des jeweils zugeordneten
Flipflops (330) entriegelbar ist.

75.     Einsperrgitter nach                    72 bis 73,
dadurch gekennzeichnet, daß die Flipflops über Setzsignale
bzw. Rücksetzsignale gemeinsam gesetzt bzw. zurückgesetzt
werden können.

76.     Einsperrgitter nach                    62 bis 69
oder 72 bis 75, dadurch gekennzeichnet, daß zu Beginn des
Entlassungsvorganges der hintere Ausgang des Schieberegisters auf Aufsteuerung gesetzt wird und daß diese Information unter Taktsteuerung durch von den Sensoren abgeleitete
Signale sukzessive entweder unter weiterer Eingabe von Aufsteuersignalen oder unter Eingabe von Zusteuersignalen zum
Ausgang geschoben wird.

77. Einsperrgitter nach 39 bis 48, dadurch gekennzeichnet, daß die Treiberorgane Reedschalter sind und durch tiergesteuerte Beaufschlagung mit einem Magnetfeld umsteuerbar sind.

78. Einsperrgitter nach 1 bis 77, dadurch gekennzeichnet, daß Schalter, Verriegelungen, Kupplungen und/oder Antriebsorgane zur Öffnung oder Schließung der Fangorgane über den Sensor durch das Tier direkt mechanisch betätigbar sind.

79. Einsperrgitter nach 78, dadurch gekennzeichnet, daß der Schwerpunkt eines jeden Fangorgans (12) hinter der Anlenkstelle (10) liegt und daß jedes Fangorgan durch eine hinter einer Nase (32) angreifende verschwenkbare Platte (40) verriegelt ist.

80. Einsperrgitter nach 79, dadurch gekennzeichnet, daß jede Platte (40) über ein sich zum nächsthinteren Platz erstreckendes Rohr (42) und eine dort befestigte Betätigungsplatte (48) sensorgesteuert betätigbar ist.

81. Einsperrgitter nach 78 bis 80, dadurch gekennzeichnet, daß alle Platten durch eine durchgehende Stange (42) über Mitnehmer (64) simultan oder sukzessive betätigbar sind.

82. Einsperrgitter nach 78, dadurch gekennzeichnet, daß jeder Einsperröffnung ein Sperrorgan (72) zugeordnet ist, das durch das hintere Ende des über die normale Offenstellung hinaus bewegten Fangorgans (12) in die unter Vorspannung verriegelte Schließstellung bringbar ist.

83.    Einsperrgitter nach        78, dadurch gekennzeichnet, daß am hinteren Ende eines jeden Fangorgans (12) ein
selektiv in eine, vorzugsweise frei herabhängende, Position
für vorderen Schwerpunkt oder eine, vorzugsweise verriegelte
hochgeschwenkte, Position für hinteren Schwerpunkt bringbar
ist, und zwar gegebenenfalls unter gemeinsamer Steuerung
oder unter selektiver Sensorsteuerung.

84.    Einsperrgitter nach            1 bis 77, dadurch gekennzeichnet, daß die Schalter, Verriegelungen,
Kupplungen und/oder Antriebsorgane zur Öffnung oder Schließung der Fangorgane pneumatisch steuerbar sind.

85.    Einsperrgitter nach        84 und vorzugsweise einem der Ansprüche 43 bis 48, dadurch gekennzeichnet, daß die
in Reihe geschalteten Treiberorgane sensorbetätigbare Absperrventile sind.

86.    Einsperrgitter nach        85, dadurch gekennzeichnet, daß die Absperrventile und/oder die Druckluft in der
Betätigungsstellung haltbar sind.

87.    Einsperrgitter nach            85 oder 86,
dadurch gekennzeichnet, daß die parallel geschalteten Treiberorgane (Trn) umsteuerbare Mehrwegeventile sind.

88.    Einsperrgitter nach        87, dadurch gekennzeichnet, daß die umsteuerbaren Mehrwegeventile pneumatisch betätigbar sind.

89.    Einsperrgitter nach        88, dadurch gekennzeichnet, daß die pneumatische Betätigung mit der Betätigung der
Absperrventile, vorzugsweise über ein weiteres Absperrventil,
gekoppelt ist.

90.    Einsperrgitter nach                84 bis 89,
dadurch gekennzeichnet, daß die Mehrwegeventile in unbetätigter Stellung durch das zugeordnete betätigte Absperrventil verriegelbar sind.

91.    Einsperrgitter nach                1 bis 90,
dadurch gekennzeichnet, daß jeder Einsperröffnung ein
Futtertrog und eine Lockfutter-Dosierungseinrichtung zugeordnet ist.

92.    Einsperrgitter, insbesondere nach        91, dadurch gekennzeichnet, daß die Steuerung der Lockfutter-
Dosierungseinrichtung (L1-LN) mit der Steuerung der Einsperröffnungen gekoppelt ist.

93.    Einsperrgitter nach                91 oder 92,
dadurch gekennzeichnet, daß die Lockfutter-Dosierungseinrichtungen (L1-LN) von einer zentralen Computerfütterungseinrichtung angesteuert werden.

94.    Einsperrgitter nach              93, dadurch gekennzeichnet, daß jeder Einsperröffnung ein Kennungsempfänger ($KE_1$-$KE_N$) zugeordnet ist, der auf eine vom Tier mitgeführte Kennungsmarke ($KM_1$-$KM_N$) anspricht.

95.    Einsperrgitter nach              94, dadurch gekennzeichnet, daß von dem Ausgangssignal des Kennungsempfängers ($KE_1$-$KE_N$) ein Sensorsignal für die Steuerung der
Einsperröffnungen und gegebenenfalls des Eingangstors abgeleitet wird.

96.    Einsperrgitter nach              93, dadurch gekennzeichnet, daß ein gemeinsamer, auf von den Tieren mitgeführten Kennungsmarken ($KM_1$-$KM_N$) ansprechender Kennungsempfänger ($KE_1$-$KE_N$) hinter dem Eingangstor (ET) angeordnet ist und daß eine Fütterungssteuereinrichtung  die
der jeweils gelesenen Kennung entsprechende Fütterungsdaten ausliest und der zugeordneten Lockfutter-Dosierungseinrichtung zuführt.

97.    Einsperrgitter nach              96, dadurch gekennzeichnet, daß die Fütterungssteuereinrichtung
ein Schieberegister (304) umfaßt, das durch von den Kennungen abgeleitete Taktsignale angesteuert wird und dessen N parallele Ausgänge eine  Anzahl von N den einzelnen
Lockfutter-Dosierungseinrichtungen zugeordnete Zwischenspeicher (Z1-ZN) ansteuert.

98.    Einsperrgitter nach              91 bis 97,
dadurch gekennzeichnet, daß dem Eingang eine vorzugsweise
wahlweise in aktive und inaktive Position schaltbare
Schleuseneinrichtung zugeordnet ist, welche sicherstellt,
daß ein in Steuerungsbeziehung zum Kennungsempfänger kommendes Tier den Melkstand betreten muß.

99.    Einsperrgitter nach              91 bis 98,
dadurch gekennzeichnet, daß die eingesperrten, fressenden
Tiere durch eine Zeitsteuerung solange eingesperrt gehalten werden, bis die dargebotenen Kraftfutterportionen verzehrt sind.

100.   Einsperrgitter nach              91 bis 99,
dadurch gekennzeichnet, daß der Fütterungsstand im Tagesverlauf mehrmals unter Zeitsteuerung      automatischen
Betriebszyklen unterworfen wird, und zwar in der Reihenfolge Schließung des Ausgangstors und der Fangorgane -
Öffnung des Eingangstors - Platzeinweisung - Fütterung -
zeitgesteuerte simultane oder sukzessive Entlassung, vorzugsweise unter jeweils vorhergehender Zusteuerung der
bereits frei gewordenen hinteren Einsperröffnungen, unter
Aufsteuerung des Ausgangstors, wobei die Zeitsteuerung auf
kurze Einsperrzeit umsteuerbar ist, falls aus dem Fütterungsdatenspeicher (300) Nullportionen ausgelesen werden.

0091972

Patentansprüche

1.    Einsperrgitter für einen Fischgrätenmelk- und -Fütterungsstand für Kühe mit mehreren schräg zur Richtung der Aufeinanderfolge der Standplätze angeordneten Einsperröffnungen,
welche selektiv in

(A) einen verriegelten Sperrzustand bringbar sind, in dem sie
    den Zugang zu einem zugeordneten Futtertrog versperren
    oder

(B) einen Öffnungszustand, in dem der zugeordnete Futtertrog
    zugänglich ist oder

(C) einen verriegelten Fangzustand, in dem die seitlichen Begrenzungen den Kopf des eingesperrten Tieres hintergreifen

und mit einer Steuereinrichtung, welche auf mindestens einem
Teil der Einsperröffnungen zugeordnete tier-betätigbare Sensoren anspricht und auf die Einsperröffnungen einwirkt,
gekennzeichnet durch eine elektrische Steuereinrichtung (200),
welche von den Sensoren elektrische Signale empfängt und Betätigungsorganen und/oder Verriegelungsorganen der Einsperröffnungen in einer voreinstellbaren zeitlichen Reihenfolge
Steuersignale zuweist für die Umschaltung vom verriegelten
Sperrzustand (A) in den Öffnungszustand (B),vom Öffnungszustand (B) in den verriegelten Fangzustand (C), vom verriegelten Fangzustand (C) in den Öffnungszustand (B) und vom Öffnungszustand (B) in den verriegelten Sperrzustand.

2.    Einsperrgitter nach Anspruch 1, dadurch gekennzeichnet,
daß die elektrische Steuereinrichtung (200) ansprechend auf ein
Besetzung eines Standplatzes anzeigendes Sensorsignal

(a) die Einsperröffnung dieses Standplatzes im Fangzustand verriegelt und

(b) die Einsperröffnung des nachfolgenden noch zu besetzenden
    Standplatzes in den Öffnungszustand bringt sowie ansprechend auf ein das Verlassen einer Einsperröffnung anzeigende Sensorsignal

(c) diese Einsperröffnung im Sperrzustand verriegelt und

(d) die benachbarte Einsperröffnung vom verriegelten Fangzustand in den Öffnungszustand bringt.


3.    Einsperrgitter, insbesondere nach einem der Ansprüche
1 oder 2, dadurch gekennzeichnet, daß die Steuereinrichtung
von einem Melkfütterungsbetrieb auf einen reinen Fütterungsbetrieb umschaltbar ist.


4.    Einsperrgitter nach Anspruch 3, dadurch gekennzeichnet, daß der Melkstand für den Fütterungsbetrieb auf den hintersten Standplatz verkürzbar ist.


5.    Einsperrgitter nach Anspruch 3, dadurch gekennzeichnet, daß die Steuereinrichtung im Fütterungsbetrieb auf Durchlaufsteuerung schaltbar ist, wobei ein das Verlassen einer
Einsperröffnung anzeigendes Sensorsignal die Einsperröffnung
des nachfolgenden besetzten Standplatzes entriegelt oder aus
dem verriegelten Fangzustand in den Öffnungszustand bringt.


6.    Einsperrgitter nach einem der Ansprüche 1 bis 5, dadurch gekennzeichnet, daß es am Eingang des Fischgrätenmelk-
und -Fütterungsstandes einen gemeinsamen Kennungsempfänger
umfaßt, der auf  von den Tieren mitgeführte Kennungsmarken
anspricht und die dem jeweiligen Tier zugedachte Kraftfutterdosis dem Futtertrog hinter der Einsperröffnung zuführt, in
die das Tier durch die Platzeinweisungssteuerung eingewiesen
wird.


7.    Einsperrgitter nach Anspruch 6, dadurch gekennzeichnet, daß die Zufuhr der Kraftfutterdosis durch ein die Besetzung des Standplatzes anzeigendes Sensorsignal der zugeordneten Einsperröffnung ausgelöst wird.

8.      Einsperrgitter nach einem der Ansprüche 3 bis 7, dadurch gekennzeichnet, daß die Steuereinrichtung zyklisch arbeitet.

9.      Einsperrgitter, insbesondere nach einem der Ansprüche 1 bis 8, dadurch gekennzeichnet, daß es aus einzelnen miteinander verbindbaren Moduleinheiten besteht, wobei jede Einsperröffnung mit den zugeordneten Sensor-, Verriegelungs- und Betätigungseinrichtungen einer gesonderten Moduleinheit zugeordnet ist.

10.     Einsperrgitter nach Anspruch 9, dadurch gekennzeichnet, daß die Moduleinheiten Stapelform haben.

0091972

Fig. 1

Fig. 2

Fig. 3

Fig. 4

0091972

3/12

Fig.5

Fig.6

Fig.7

Fig. 8

Fig. 9

Fig. 10

Fig. 11

*Fig. 12*

*Fig. 13*

0091972

Fig. 14

Fig 15

Fig. 16

Fig. 17

Fig. 18

B

76 — 30

12

10

13

74

72

2

94

94

74

Fig. 19

50

78

76

Fig 20

86

80

90

84

88   82

94   92

9/12

0091972

0091972

Fig 23

Fig 22

Fig. 21

Fig 24

(a)

(b)

(c)

(d)

Fig. 25

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| | --- | | A 01 K 1/06 |
| X | DE-A-2 944 701  (GRÄSSINGER) * Figuren 1,3,4; Seiten 4-7 * | 1,2 | A 01 K 1/12 A 01 K 1/10 |
| | --- | | |
| A | GB-A-1 221 302  (BROWN) * Seite 1, Zeilen 9-50 * | 3 | |
| | --- | | |
| A | FR-A-2 434 566  (COMARE) * Ansprüche 1,4; Seite 1, Zeilen 21-25; Seite 2, Zeilen 11-14 * | 9,10 | |
| | --- | | |
| E,X | DE-A-3 039 111  (HACKER) *                          Ansprüche 4,20,21,23,25,27,29,91,92,96,100 * | 1-10 | |
| | ----- | | |

**RECHERCHIERTE SACHGEBIETE (Int. Cl. ³)**

A 01 K

Der vorliegende Recherchenbericht wurde für alle Patentansprüche erstellt.

| Recherchenort DEN HAAG | Abschlußdatum der Recherche 17-12-1982 | Prüfer VILBIG K |
|---|---|---|